# EUROPEAN PATENT APPLICATION

(11) **EP 3 790 286 A1**
(43) Date of publication of application: **10.03.2021**
(21) Application number: 19796648.4
(22) Date of filing: 07.05.2019
(51) Int. Cl.: H04N 21/6405, H04N 21/643, H04N 21/2381, H04L 29/06, H04L 29/08, H04L 12/18, H04N 21/64

(54) **BROADCAST SIGNAL TRANSMISSION DEVICE, BROADCAST SIGNAL TRANSMISSION METHOD, BROADCAST SIGNAL RECEPTION METHOD, AND BROADCAST SIGNAL RECEPTION DEVICE**

(30) Priority: 04.05.2018 KR 20180051726; 31.05.2018 KR 20180062812; 12.06.2018 KR 20180067575
(71) Applicant: LG Electronics Inc., 07336 SEOUL (KR)
(72) Inventor: PARK, Jonghwan, Seoul 06772 (KR); KWAK, Minsung, Seoul 06772 (KR); YOON, Joonhee, Seoul 06772 (KR)
(74) Representative: Mooser, Sebastian Thomas
(86) International application number: PCT/KR2019/005400
(87) International publication number: WO 2019/212318

(57) **Abstract**

A broadcast signal transmission method, according to embodiments of the present invention, comprises the steps of: generating a packet including service data and signaling information for the service data; encoding the packet; and transmitting a broadcast signal including the packet. Moreover, the signaling information includes network information for the broadcast signal, wherein the network information includes first identification information for a main network or an other network, wherein when the first identification information indicates the other network, the network information includes second identification information for an Internet linear channel. In addition, the signaling information is transmitted on the basis of the Internet linear channel, and includes service discovery information for obtaining service data for the Internet channel and uniform resource identifier (URI) information which identifies the service data for the Internet channel.

## Description

### TECHNICAL FIELD

The present disclosure relates to a broadcast signal transmission apparatus, a broadcast signal transmission method, a broadcast signal reception method, and a broadcast signal reception apparatus.

### BACKGROUND ART

As analog broadcast signal transmission comes to an end, various technologies for transmitting/receiving digital broadcast signals are being developed. A digital broadcast signal may include a larger amount of video/audio data than an analog broadcast signal and further include various types of additional data in addition to the video/audio data.

### DISCLOSURE

### Technical Problems

Broadcast signal transmission and reception apparatuses according to embodiments of the present disclosure implement an Internet protocol (IP)-based TV service capable of providing the same user experience (UX) as a terrestrial, satellite, and/or cable linear channel.

The broadcast signal transmission and reception apparatuses according to embodiments of the present disclosure provide a channel guide integrated with the terrestrial, satellite, and/or cable channel by receiving open Internet-based native code, rather than an application-based linear channel service.

The broadcast signal transmission and reception apparatuses according to embodiments of the present disclosure seamlessly provide a real-time/non-real-time media streaming service in consideration of high unicast traffic and a situation in which a broadcast service through media such as an over-the-top (OTT) device, a PC, and an IPTV of IP-based devices, rather than fixed direct reception, is consumed.

The broadcast signal transmission and reception apparatuses according to embodiments of the present disclosure provide a network control method and information for transmitting file-based content in a linear IP adaptive multicast/broadcast environment.

### Technical Solutions

To achieve the object and other advantages and in accordance with the purpose of the disclosure, as embodied and broadly described herein, a broadcast signal transmission method includes generating a packet including service data and including signaling information for the service data, encoding the packet, and transmitting a broadcast signal including the packet. The signaling information includes network information about the broadcast signal, the network information includes first identification information about a main network or other networks, and the network information includes second identification information about an Internet linear channel when the first identification information indicates the other networks. The signaling information is transmitted based on an Internet linear channel, include service discovery information for acquiring service data for the Internet channel, and include uniform resource identifier (URI) information for identifying the service data for the Internet channel.

### Advantageous Effects

Broadcast signal transmission and reception apparatuses according to embodiments of the present disclosure provide a user interface (UI) access service with which a linear service and an OTT service are integrated.

The broadcast signal transmission and reception apparatuses according to embodiments of the present disclosure implement a media service that provides the same UX as traditional linear channels through open Internet without a set-top box (STB).

The broadcast signal transmission and reception apparatuses provide a service discovery delivery method for an adaptive bit rate (ABR) service.

The broadcast signal transmission and reception apparatuses according to embodiments of the present disclosure provide a file identification method considering a unicast/multicast/broadcast transmission method.

The broadcast signal transmission and reception apparatuses according to embodiments of the present disclosure propose a network structure for IP-based multicast transmission and reception and seamlessly provide a service to a user through dynamic multicast/unicast allocation.

### Description of Drawings

The accompanying drawings, which are included to provide a further understanding of the disclosure and are incorporated in and constitute a part of this application, illustrate embodiments) of the disclosure and together with the description serve to explain the principle of the disclosure.
FIG. 1 illustrates a structure of a broadcast signal transmission apparatus for future broadcast services according to embodiments of the present disclosure.
FIG. 2 illustrates a structure of a broadcast signal reception apparatus for future broadcast services according to embodiments of the present disclosure.
FIG. 3 illustrates a service transmission and reception structure of a broadcast signal transmission apparatus and a broadcast signal reception apparatus according to embodiments of the present disclosure.
FIG. 4 illustrates a network structure of a broadcast signal transmission apparatus and a broadcast signal reception apparatus according to embodiments of the present disclosure.
FIG. 5 illustrates a data reception structure of a broadcast signal reception apparatus according to embodiments of the present disclosure.
FIG. 6 illustrates a configuration of a network information table (NIT).
FIG. 7 illustrates a configuration of a bouquet association table (BAT).
FIG. 8 illustrates a configuration of a service description table (SDT).
FIG. 9 illustrates a process of parsing signaling information by a broadcast signal reception apparatus according to embodiments of the present disclosure.
FIG. 10 illustrates a network type.
FIG. 11 illustrates a configuration of a URI descriptor (URI_linkage_descriptor).
FIG. 12 illustrates a configuration of URI linkage type (uri_linkage_type) information.
FIG. 13 illustrates a configuration of private data.
FIG. 14 illustrates a configuration of private data.
FIG. 15 illustrates a configuration of an IP channel ID descriptor (IP_channel_ID_descriptor).
FIG. 16 illustrates a service discovery process based on a bouquet.
FIG. 17 illustrates a multicast adaptive bit rate (ABR) structure.
FIG. 18 illustrates a configuration of an IPTV protocol stack.
FIG. 19 illustrates an IPTV service discovery process.
FIG. 20 illustrates a configuration of service information (SI).
FIG. 21 illustrates a service discovery process.
FIG. 22 illustrates a configuration of a user class option.
FIG. 23 illustrates a format of a DHCP.
FIG. 24 illustrates a service provider discovery information record.
FIG. 25 illustrates a configuration of data for a service discovery and selection server according to a payload ID value.
FIG. 26 illustrates a configuration of offering list type information.
FIG. 27 illustrates a configuration of service discovery information.
FIG. 28 illustrates a configuration of an offering list type.
FIG. 29 illustrates a push mode and a pull mode for an offering element.
FIG. 30 is a configuration of AdaptiveStreamingModeType.
FIG. 31 illustrates an embodiment for service provider discovery.
FIG. 32 illustrates a broadcast discovery information schema.
FIG. 33 illustrates a broadcast delivery information schema.
FIG. 34 illustrates a single broadcast discovery information schema.
FIG. 35 illustrates a configuration of a service location.
FIG. 36 illustrates an extended configuration of a single service.
FIG. 37 illustrates base URL information according to a delivery mode.
FIG. 38 illustrates a service discovery configuration for a single service.
FIG. 39 illustrates a configuration of an MPD.
FIG. 40 illustrates a configuration for providing a service incorporating an Internet channel.
FIG. 41 illustrates a configuration of an integrated channel guide UI.
FIG. 42 illustrates a channel switching UI method in an integrated channel system.
FIG. 43 illustrates a network structure for adaptive media streaming.
FIG. 44 illustrates types of networks.
FIG. 45 illustrates a configuration of a content network for broadcasting.
FIG. 46 illustrates a configuration of a content network for satellite broadcasting.
FIG. 47 illustrates a configuration of a content network for a CDN and OTT.
FIG. 48 illustrates a configuration of an ABR multicast network for a cable network.
FIG. 49 illustrates a configuration of an ABR multicast network for a mobile network.
FIG. 50 illustrates a configuration of a user network for a home network.
FIG. 51 illustrates a network structure for adaptive media streaming.
FIG. 52 illustrates a protocol for adaptive media streaming.
FIG. 53 illustrates a protocol for adaptive media streaming.
FIG. 54 illustrates a protocol for signaling and control of a multicast sender in FIG. 52.
FIG. 55 illustrates a protocol for signaling and control of a multicast receiver and a decoder in FIG. 52.
FIG. 56 illustrates a protocol for signaling and control in FIG. 53.
FIG. 57 illustrates a protocol stack for IP multicast.
FIG. 58 illustrates a media delivery method for IP multicasting.
FIG. 59 illustrates media delivery for IP multicasting.
FIG. 60 illustrates media delivery for IP multicasting.
FIG. 61 illustrates a structure and a generation and parsing order of a DASH segment.
FIG. 62 illustrates the structure of a DASH segment.
FIG. 63 illustrates a structure and a generation and parsing order of a DASH segment.
FIG. 64 illustrates a user network for playback of a DASH segment.
FIG. 65 illustrates a hierarchical structure of an MPD.
FIG. 66 illustrates a user network for playback of a DASH segment.
FIG. 67 illustrates a signaling method for fast startup.
FIG. 68 illustrates a multicast ABR reference architecture model.
FIG. 69 illustrates definition of a base URL according to a multicast ABR delivery method.
FIG. 70 illustrates a method of configuring a segment access URL.
FIG. 71 illustrates an architecture of a multicast ABR service.
FIG. 72 illustrates a multicast ABR service control message.
FIG. 73 illustrates a broadcast signal transmission method according to embodiments of the present disclosure.
FIG. 74 illustrates a broadcast signal reception method according to embodiments of the present disclosure.
FIG. 75 illustrates a process in which a broadcast signal reception apparatus according to embodiments of the present disclosure discovers a service and displays a service guide.

### BEST MODE FOR CARRYING OUT THE DISCLOSURE

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

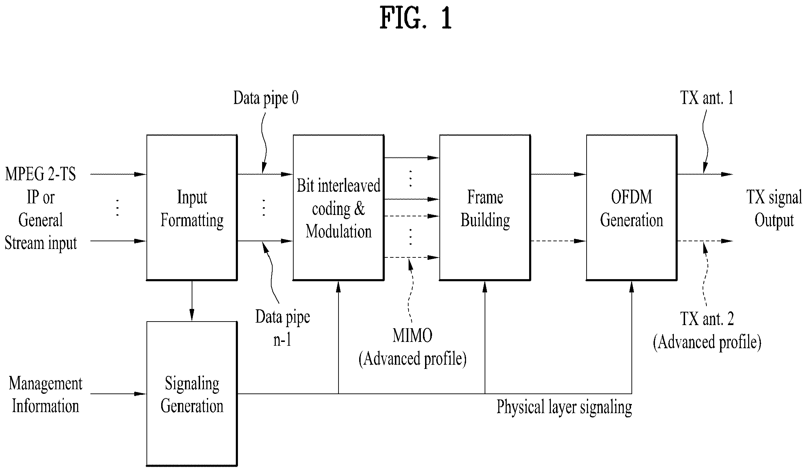

FIG. 1 illustrates a structure of a broadcast signal transmission apparatus for future broadcast services according to embodiments of the present disclosure.

The broadcast signal transmission apparatus for future broadcast services according to embodiments of the present disclosure may include an input formatting block 1000, a bit interleaved coding and modulation (BICM) block 1010, a frame building block 1020, an orthogonal frequency division multiplexing (OFDM) generation block 1030, and a signaling generation block 1040. A description will be given of the operation of each block of the broadcast signal transmission apparatus.

IP stream/packets and MPEG2-TS are main input formats, and other stream types are handled as general streams. In addition to these data inputs, management information is input to control the scheduling and allocation of corresponding bandwidth for each input stream. Simultaneous input of one or multiple TS streams, IP streams, and/or general streams is allowed.

The input formatting block 1000 may demultiplex each input stream into one or multiple data pipes, to each of which an independent coding and modulation is applied. The data pipe is a basic unit for robustness control, thereby affecting quality-of-service (QoS). One or multiple services or service components may be carried by a single data pipe.

The data pipe is a logical channel in the physical layer that carries service data or related metadata, which may carry one or multiple services or service components. The data pipe may correspond to a physical layer pipe (PLP).

The data pipe unit is a basic unit for allocating data cells to a data pipe in one frame.

In the input formatting block 1000, parity data is added for error correction and the encoded bit streams are mapped to complex-value constellation symbols. The symbols are interleaved across a specific interleaving depth that is used for the corresponding data pipe. For the advanced profile, MIMO encoding is performed in the BICM block 1010 and the additional data path is added at the output for MIMO transmission.

The frame building block 1020 may map the data cells of the input data pipes into the OFDM symbols within a frame. After mapping, frequency interleaving is used for frequency-domain diversity, especially to combat frequency-selective fading channels.

After inserting a preamble at the beginning of each frame, the OFDM generation block 1030 may apply conventional OFDM modulation having a cyclic prefix as a guard interval. For antenna space diversity, a distributed MISO scheme is applied across transmitters. In addition, a peak-to-average power reduction (PAPR) scheme is performed in the time domain. For flexible network planning, this proposal provides a set of various FFT sizes, guard interval lengths, and corresponding pilot patterns.

The signaling generation block 1040 may generate physical layer signaling information used for the operation of each functional block. This signaling information is also transmitted so that the services of interest are properly recovered at a receiver side.

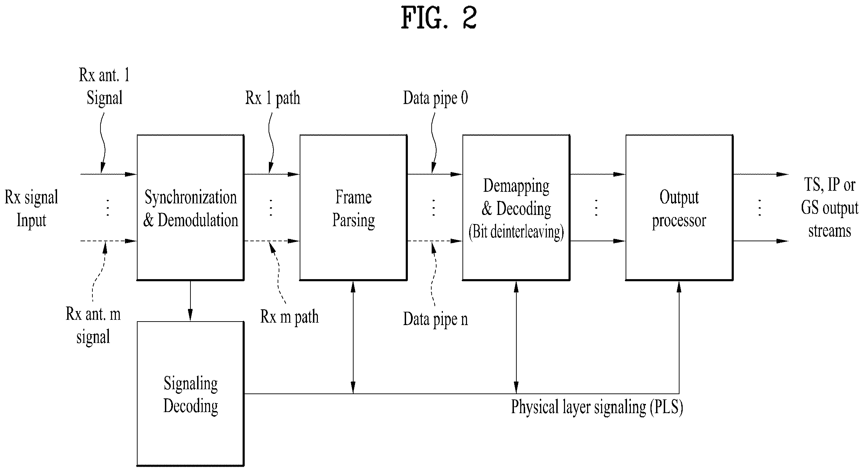

FIG. 2 illustrates a structure of a broadcast signal reception apparatus for future broadcast services according to embodiments of the present disclosure.

The broadcast signal reception apparatus for future broadcast services according to embodiments of the present disclosure may correspond to the broadcast signal transmission apparatus for future broadcast services, described with reference to FIG. 1.

The broadcast signal reception apparatus for future broadcast services according to embodiments of the present disclosure may include a synchronization and demodulation module 9000, a frame parsing module 9010, a demapping and decoding module 9020, an output processor 9030, and a signaling decoding module 9040. A description will be given of operation of each module of the broadcast signal reception apparatus.

The synchronization and demodulation module 9000 may receive input signals through m Rx antennas, perform signal detection and synchronization with respect to a system corresponding to the broadcast signal reception apparatus, and carry out demodulation corresponding to a reverse procedure of the procedure performed by the broadcast signal transmission apparatus.

The frame parsing module 9010 may parse input signal frames and extract data through which a service selected by a user is transmitted. If the broadcast signal transmission apparatus performs interleaving, the frame parsing module 9010 may carry out deinterleaving corresponding to a reverse procedure of interleaving. In this case, the positions of a signal and data that need to be extracted may be obtained by decoding data output from the signaling decoding module 9040 to restore scheduling information generated by the broadcast signal transmission apparatus.

The demapping and decoding module 9020 may convert the input signals into bit domain data and then deinterleave the same as necessary. The demapping and decoding module 9020 may perform demapping for mapping applied for transmission efficiency and correct an error generated on a transmission channel through decoding. In this case, the demapping and decoding module 9020 may obtain transmission parameters necessary for demapping and decoding by decoding the data output from the signaling decoding module 9040.

The output processor 9030 may perform reverse procedures of various compression/signal processing procedures which are applied by the broadcast signal transmission apparatus to improve transmission efficiency. In this case, the output processor 9030 may acquire necessary control information from data output from the signaling decoding module 9040. The output of the output processor 8300 corresponds to a signal input to the broadcast signal transmission apparatus and may be MPEG-TSs, IP streams (v4 or v6), and generic streams.

The signaling decoding module 9040 may obtain PLS information from the signal demodulated by the synchronization and demodulation module 9000. As described above, the frame parsing module 9010, the demapping and decoding module 9020, and the output processor 9030 may execute functions thereof using the data output from the signaling decoding module 9040.

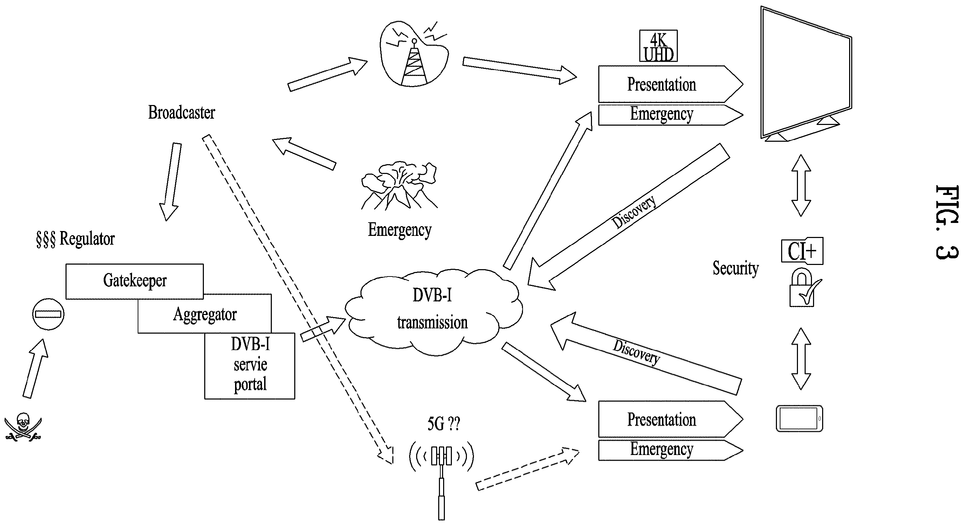

FIG. 3 illustrates a service transmission and reception structure of a broadcast signal transmission apparatus and a broadcast signal reception apparatus according to embodiments of the present disclosure.

A broadcaster may provide services over a terrestrial (T), satellite (S), and/or cable (C) channel. Furthermore, the broadcaster may provide services over the T, S and/or C channel and, at the same time, an Internet channel. Therefore, the broadcast signal transmission apparatus and the broadcast signal reception apparatus according to embodiments of the present disclosure may transmit and receive services based on the T channel, the C channel, the S channel, and the Internet channel. The broadcaster, a manufacturer, and/or an operator may regulate an authentication method for each service channel. The broadcast signal reception apparatus according to embodiments of the present disclosure may acquire authentication for each service channel based on regulations made by the broadcaster, the manufacturer, and/or the operator. Further, an Internet channel integrated with a traditional linear service may be used by the broadcast signal transmission apparatus and the broadcast signal reception apparatus according to embodiments of the present disclosure.

The broadcast signal transmission apparatus and the broadcast signal reception apparatus according to embodiments of the present disclosure may provide bootstrapping for a channel list through service discovery information provided over an existing linear network in order to use the Internet channel and a traditional linear broadcast channel list in an integrated form.

The broadcast signal transmission apparatus according to embodiments of the present disclosure may provide services by extending traditional services and provide additional services such as on-demand/multicast services along with a traditional linear channel network. In addition, the broadcast signal transmission apparatus may provide a personalization service through a usage report based on the Internet channel.

The broadcast signal transmission apparatus according to embodiments of the present disclosure may provide a channel list in which an over-the-top (OTT) service is integrated with a traditional T, S, and/or C channel service. The broadcast signal reception apparatus may provide various services to users. Functions of the broadcast signal transmission apparatus and the broadcast signal reception apparatus may be expanded.

For a network/Internet service provider (ISP) that is connectable to the broadcast signal transmission apparatus and the broadcast signal reception apparatus according to embodiments of the present disclosure, a network that provides services by integrating OTT content may be established. The broadcast signal transmission apparatus may dynamically allocate unicast/multicast and provide enhanced delivery performance. The broadcast signal reception apparatus may provide better performance than a terminal that provides services based on a non-management network.

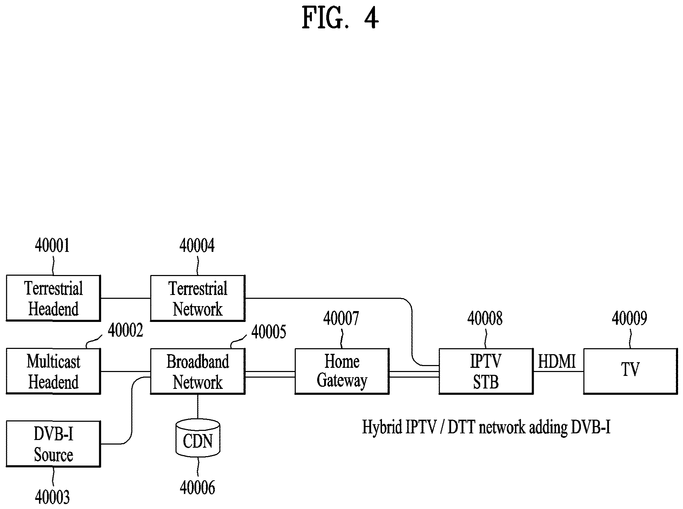

FIG. 4 illustrates a network structure of a broadcast signal transmission apparatus and a broadcast signal reception apparatus according to embodiments of the present disclosure.

A broadcast signal reception apparatus may correspond to a terminal (TV) 40009. A detailed configuration of the TV 40009 has been described above with reference to FIG. 2.

An STB 40008 may be connected to the broadcast signal reception apparatus. For example, the STB 40008 may be connected to the broadcast signal reception apparatus based on an high definition multimedia interface (HDMI) scheme.

A gateway 40007 receives content or services from a broadband network 40005 to provide the content or services to the STB 40008.

The broadband network 40005 provides content or services related thereto to the broadcast signal reception apparatus.

A content delivery network (CDN) 40006 provides data related to content to the broadband network 40005.

A multicast headend 40002 delivers data to the broadband network 40005 based on a multicast scheme.

A source (DVB-I source) 40003 provides data to the broadband network 40005. The data provided by the source may include data according to a DVB-I scheme.

A terrestrial network 40004 receives terrestrial related data from a terrestrial headend 40001 based on a terrestrial channel and provides the data to the STB 40008.

The broadcast signal reception apparatus according to embodiments of the present disclosure may remove burden that should consider different OS environments of respective terminal devices in order to provide an OTT service. That is, the broadcast signal reception apparatus does not need to additionally provide an OTT application. The broadcast signal reception apparatus may include an industry standard based ecosystem. The broadcast signal reception apparatus provides an effect of expanding the type of service access by providing a common service interface.

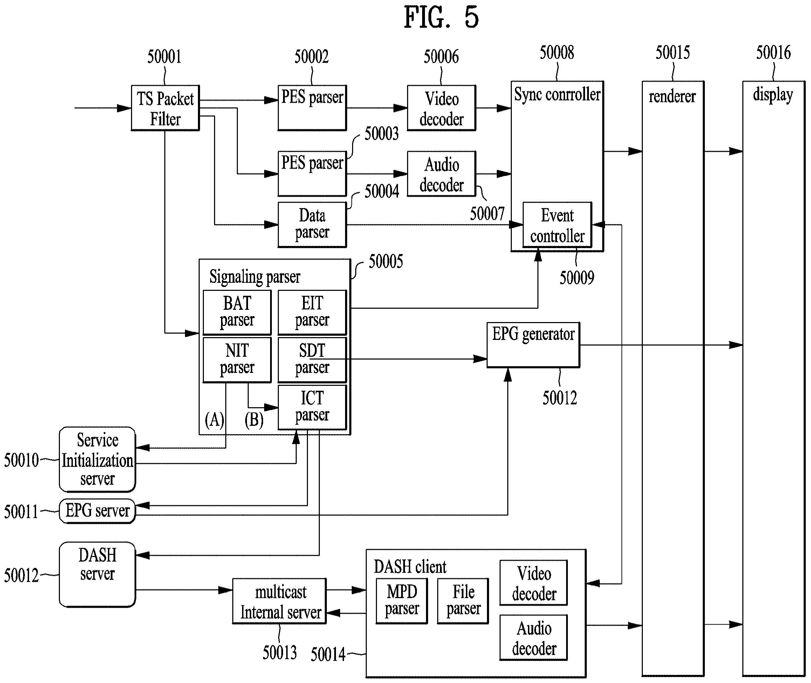

FIG. 5 illustrates a data reception structure of a broadcast signal reception apparatus according to embodiments of the present disclosure.

The broadcast signal reception apparatus according to embodiments of the present disclosure receives a broadcast signal.

A TS packet filter 50001 processes a TS packet included in a broadcast signal. The TS packet may mean an MPEG-2 TS packet.

A packetized elementary stream (PES) parser 50002 processes a stream included in the TS packet. The stream may mean a packetized elementary stream. The stream may include a video stream.

A PES parser 50003 processes a stream included in the TS packet. The stream may mean a packetized elementary stream and the stream may include an audio stream.

A data parser 50004 processes data included in the TS packet. The data may include content related to a broadcast program or an event related to an application.

A signaling parser 50005 processes signaling data included in the TS packet. The signaling data may include a bouquet association table (BAT), a network information table (NIT), an event information table (EIT), a service description table (SDT), and an identification channel table (ICT). The signaling parser 50005 may include a BAT parser, an EIT parser, an NIT parser, an SDT parser, an ICT parser, etc.

A video decoder 50006 decodes video data included in the TS packet.

An audio decoder 50007 decodes audio data included in the TS packet.

A controller 50008 controls synchronization of the decoded video data and the decoded audio data.

A controller 50009 controls an event for data other than the video data and the audio data. The controller 50009 may receive the signaling data from the signaling parser 50005 and control an event based on the signaling data.

A service initialization server 50010 may obtain URI information for service discovery from the signaling data of the signaling parser 50005. Specifically, the signaling data includes service bootstrap information for service scanning. The signaling parser 50005 may provide service discovery information URI to the server 50010 based on specific table information among the service bootstrap information. Method (A) of FIG. 5 indicates a process in which the broadcast signal reception apparatus according to embodiments of the present disclosure acquires the ICT based on a service discovery URI of the NIT among the signaling data.

Specifically, the broadcast signal reception apparatus according to embodiments of the present disclosure may obtain ICT information from the server based on the service discovery URI information of the NIT. The ICT parser of the signaling parser 50005 processes the ICT information obtained from the server.

The broadcast signal reception apparatus according to embodiments of the present disclosure may acquire the ICT information through a linear channel. Method (B) of FIG. 5 indicates a process in which the broadcast signal reception apparatus according to embodiments of the present disclosure acquires and processes the ICT information from signaling data received through the linear channel.

An electronic program guide (EPG) server 50011 may provide service guide information based on the ICT information of the ICT parser to an EPG generator 50012.

A dynamic adaptive streaming over HTTP (DASH) server 50012 may provide bootstrap information for DASH data to a multicast internal server 50013 based on the ICT information.

A DASH client 50014 receives the DASH data from the multicast internal server 50013. The DASH client 50014 parses media presentation description (MPD) information included in the DASH data, parses a file included in the DASH data, decodes video data included in the DASH data, and decodes audio data included in the DASH data.

The EPG generator 50012 may receive EPG related signaling data from the signaling parser 5005 and receive EPG data from the EPG server 50011 to generate EPG data to be displayed.

A renderer 50015 may receive synchronized audio/video (A/V) data from the controller 50008 and receive DASH A/V data from the DASH client 50014 to perform rendering.

A display 50016 may display the rendered data and the EPG data.

The broadcast signal reception apparatus according to embodiments of the present disclosure provides a service discovery method for providing an integrated IP service of a traditional T/S/C channel and an IP channel.

A standalone linear IP service refers to a service capable of providing an integrated service guide of a traditional T/S/C channel and an IP channel. The broadcast signal reception apparatus may receive service bootstrap information for service scanning of the IP channel.

Specifically, the broadcast signal reception apparatus according to embodiments of the present disclosure may acquire a service operator URI from a specific table or a specific description among service bootstrap information of the T/S/C channel. For example, a service operator may provide service discovery information.

The broadcast signal reception apparatus according to embodiments of the present disclosure may acquire service discovery URI information from a specific table or a specific description among service bootstrap information of the T/S/C channel (refer to Method (A) of FIG. 5).

The broadcast signal reception apparatus according to embodiments of the present disclosure may acquire a service discovery information file URI transmitted in a non-real-time carousel manner by the same method as a method of acquiring the service bootstrap information of the T/S/C channel.

The broadcast signal reception apparatus according to embodiments of the present disclosure may acquire the service discovery URI information based on a specific table or a specific description among the service bootstrap information in a communication interface conditional access module (CICAM).

The broadcast signal reception apparatus according to embodiments of the present disclosure may perform service discovery using information about a hardwired linkage URI. The hardwired linkage URI may provide a hardwired URI through agreement between an operator and a CE. The broadcast signal reception apparatus may acquire the service discovery information through the corresponding URI

The broadcast signal transmission apparatus and the broadcast signal reception apparatus according to embodiments of the present disclosure provide a service by integrating service guides of traditional channels, the apparatuses may use information corresponding to service guide information of the traditional channels. The broadcast signal reception apparatus may acquire unique identification information of a service guide from the structure of FIG. 5. The TS packet filter 50001 distinguishes between service discovery information and A/V data by filtering a TS packet. The signaling parser 50005 parses service discovery information included in a received broadcast signal to establish service guide data in a database (DB).

The broadcast signal transmission apparatus and the broadcast signal reception apparatus according to embodiments of the present disclosure may conform to DVB standard based on an MPEG-2 system. For example, DVB system information according to the DVB standard may include table or description information such as the above-described NIT, BAT, SDT, and EIT. The broadcast signal transmission apparatus and the broadcast signal reception apparatus may perform service discovery using theses tables and generate EPG information,

A process of acquiring the service discovery information may be performed based on the NIT which is a table for signaling receivable networks. The NIT includes service discovery information of a network. The broadcast signal reception apparatus according to embodiments of the present disclosure may acquire an ICT by parsing the NIT (Method (A) of FIG. 5) or acquire an ICT channel through a linear channel (Method (B) of FIG. 5).

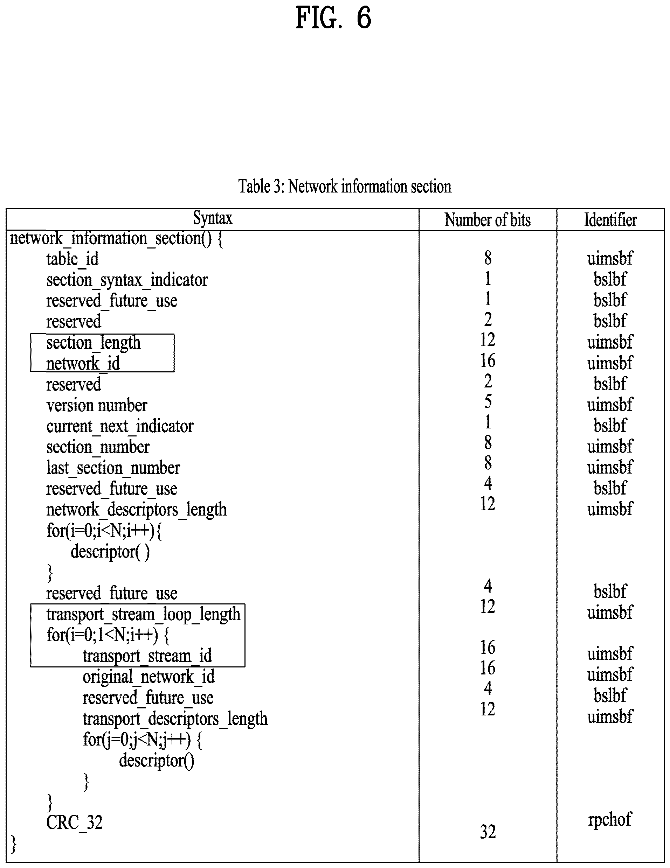

FIG. 6 illustrates a configuration of an NIT.

A network information section of FIG. 6 means the NIT. Information contained in the NIT may follow the definition of the DVB standard.

A table ID (table id) may identify the NIT.

A section syntax indicator (section_syntax_indicator) is a 1-bit field and may be set to a value of 1. The section syntax indicator includes information indicating a syntax identified by the NIT.

A reserved use field (reserved future use) and a reserved field (reserved) are reserved for future use.

A section length (section length) indicates the number of bytes of a section.

A network ID (network_id) may be used to identify a delivery system and indicates unique ID of a bit stream received through a network. The delivery system refers to the concept of a physical unit carrying a TS.

A version number (version_number) indicates a version number of a sub-table.

A current next indicator (current_next_indicator) indicates whether the sub-table is a currently applicable service table.

A section number (section_number) indicates a number of the section.

A last section number (last_section_number) indicates a number of the last section.

A network descriptor length (network_descriptors_length) indicates the length in bytes of a network descriptor.

A transport stream loop length (transport_stream_loop_length) indicates the total length in bytes of a TS loop.

A transport stream ID (transport_stream_id) is information used to identify a TS.

An original network ID (original_network_id) is information for identifying a network of an originating delivery system.

The broadcast signal reception apparatus according to embodiments of the present disclosure identifies a network that is currently receiving a bit stream, for example, a network of a T, C, and/or S channel, based on the NIT. The broadcast signal reception apparatus defines unique ID of that bit stream that is being received by the corresponding network through an original network ID and/or a TS ID. The TS ID is a unique ID for identifying a TS multiplexed in a current delivery system.

Furthermore, the broadcast signal transmission apparatus may separately use an actual NIT for a main stream for a currently received S, T, and/or C channel and an NIT for other networks. Therefore, service discovery of an Internet linear channel may be performed in the table for other networks rather than in the existing NIT for the main stream. In delivery systems other than a system for delivering this main stream, a network ID may be used to distinguish between networks. Therefore, the broadcast signal transmission apparatus according to embodiments of the present disclosure may extensively use the network ID to identify the Internet linear channel corresponding to other networks.

The broadcast signal reception apparatus according to embodiments of the present disclosure may extend the network ID included in the NIT of FIG. 6 to use the network ID as service discovery URI information and perform service discovery for the Internet linear channel as in Method (A) of FIG. 5.

In addition, the broadcast signal transmission apparatus according to embodiments of the present disclosure may transmit an XML file or a binary code in a carousel manner through a broadcast network. In this case, the broadcast signal reception apparatus may obtain the ICT through the broadcast network as in Method (B) of FIG. 5.

The NIT may further include a descriptor through a sub-loop. The descriptor included in the NIT may include information about a service or a service list. A detailed configuration of the descriptor will be described below.

In this specification, the NIT may be referred to as first signaling information, second signaling information, and the like.

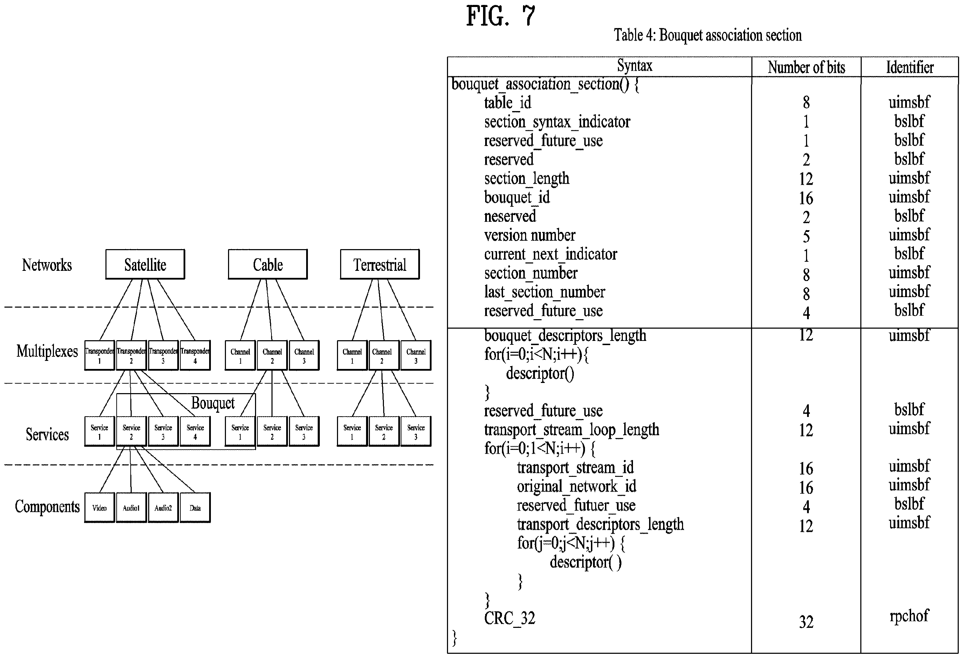

FIG. 7 illustrates a configuration of a BAT.

The broadcast signal transmission apparatus according to embodiments of the present disclosure may generate a service bundle called the bouquet by grouping services. The BAT includes signaling information about the service bundle.

Through this service bundle or service grouping, a plurality of streams/services transmitted by different networks may also be grouped to configure various service scenarios. That is, as illustrated in FIG. 7, the broadcast signal transmission apparatus may group services in units of the bouquet and group received TSs and services, regardless of a received network.

The broadcast signal reception apparatus according to embodiments of the present disclosure receives the signaling information through a BAT to signal a grouped service.

A table ID (table id) indicates information for identifying the BAT.

A section syntax indicator (section_syntax_indicator) indicates information indicating a syntax signaled in the BAT.

A bouquet ID (bouquet_id) indicates information for identifying a service bundle.

A version number (version_number) indicates a version number of a sub-table.

A current next indicator (current_next_indicator) indicates whether the sub-table is a currently applicable service table.

A section number (section_number) indicates a number of a section.

A last section number (last_section_number) indicates a number of the last section.

A bouquet descriptor length (bouquet description length) indicates the total length in bytes of the bouquet described in the BAT.

A transport stream loop length (transport_stream_loop_length) indicates the total length of bytes of a TS loop.

A transport stream ID (transport_stream_id) indicates information for identifying a TS multiplexed in the delivery system.

An original network ID (original_network_id) indicates information for identifying a network ID of an originating delivery system.

The broadcast signal transmission apparatus according to embodiments of the present disclosure describes and discovers a bundled bouquet of not only the service of the traditional main stream or the linear channel but also the service of the Internet linear channel, based on the bouquet ID, the TS ID, and/or the original network ID included in the BAT.

Specifically, the bouquet ID may identify a bouquet including the service of the Internet channel. The TS ID may identify a TS including the service of the Internet channel. The original network ID means a network ID of the originating delivery system and may indicate a network for the service of the Internet channel. The broadcast signal reception apparatus according to embodiments of the present disclosure may parse the BAT to discover the service of the Internet channel.

The BAT may further include a descriptor through a sub-loop. The descriptor included in the BAT may include information about a service or a service list and a detailed configuration of the descriptor will be described below.

In this specification, the BAT may be referred to as first signaling information, second signaling information, or the like.

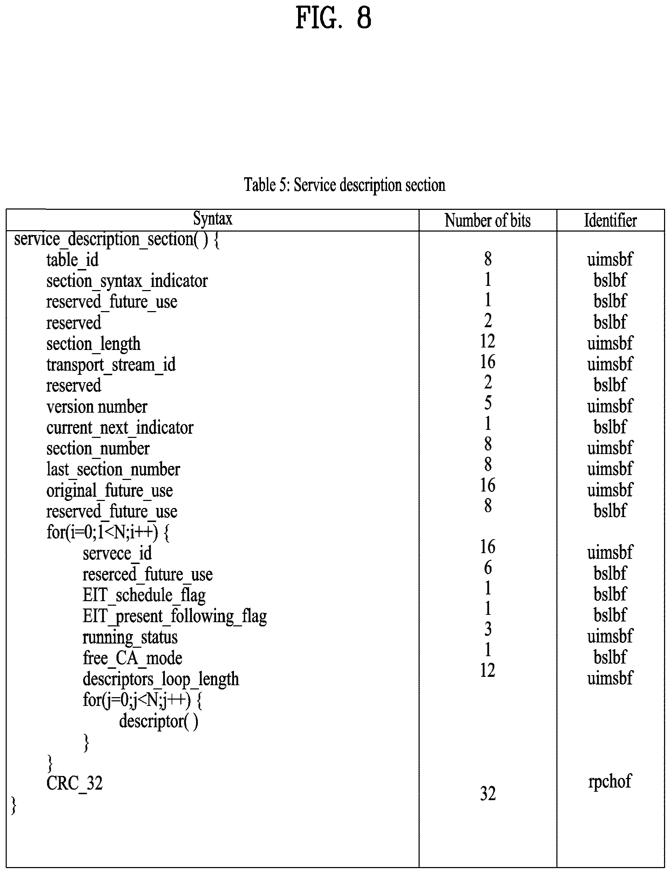

FIG. 8 illustrates a configuration of an SDT.

The broadcast signal transmission apparatus according to embodiments of the present disclosure may transmit a broadcast signal including the SDT, and the broadcast signal reception apparatus according to embodiments of the present disclosure may receive the broadcast signal including the SDT.

A table ID (table_id) indicates information for identifying the SDT.

A section syntax indicator (section_syntax_indicator) indicates information indicating a syntax signaled in the SDT.

A transport stream ID (transport_stream_id) indicates information for identifying a TS described in the SDT within the delivery system.

A version number (version_number) indicates a version number of a sub-table.

A current next indicator (current_next_indicator) indicates whether the sub-table is a currently applicable service table.

A section number (section_number) indicates a number of a section.

A last section number (last_section_number) indicates a number of the last section.

An original network ID (original_network_id) indicates information for identifying a network ID of an originating delivery system.

A service ID (service_id) indicates information for identifying a service within a TS.

An EIT schedule flag (EIT_schedule_flag) indicates whether event information table (EIT) schedule information for a service is present in a current TS.

An EIT present following flag (EIT_present_following_flag) indicates whether EIT present/following information for a service is present in the current TS.

A running status (running_status) indicates the status of a service. The status of the service may include whether the service is running, starting in a few seconds, paused, or off-air.

A free CA mode (free_CA_mode) indicates whether all component streams of a service are scrambled. The free conditional access (CA) mode indicates a mode of controlling one or more streams controlled by a CA system, which is a system for controlling subscribers accessing a service.

The SDT is a table that defines a network that is currently transmitting a stream and defines a service description of data transmitted within a TS. The SDT may describe a plurality of services based on the TS ID and the original network ID, similarly to the above-described NIT. The broadcast signal transmission apparatus may identify one service based on the original network ID, TS ID, and/or service ID. There is no duplicate service ID on the network identified by the original network ID and the service ID has a unique value. In addition, the original network ID typically has the same value as the network ID.

FIGS. 6 to 8 illustrate signaling information transmitted and received by the broadcast signal transmission apparatus and the broadcast signal reception apparatus according to embodiments of the present disclosure and fields defined in each table may follow the definition of the DVB SI standard. Furthermore, the broadcast signal transmission apparatus and the broadcast signal reception apparatus according to embodiments of the present disclosure may add and extensively define information included in tables used for service description and service discovery in the traditional linear channel for service description and service discovery for the Internet channel. Accordingly, the broadcast signal reception apparatus according to embodiments of the present disclosure provides an Internet channel service to a user while providing backward compatibility with the traditional linear channel. The broadcast signal reception apparatus may provide the user with an EPG into which the traditional linear channel and the Internet channel are integrated.

The broadcast signal transmission apparatus according to embodiments of the present disclosure may transmit a broadcast signal including a new table. The ICT illustrated in FIG. 5 may include service guide information for a service received on an active network. The EPG generator 50012 of the broadcast signal reception apparatus receives ICT information and provides one channel service guide to the user in an integrated EPG form.

The broadcast signal transmission apparatus may transmit signaling data including signaling information and broadcast data including A/V data rather than signaling data through a network. The broadcast signal transmission apparatus may separately process the signaling data and the broadcast data based on a component type.

The data parser 50004 of the broadcast signal reception apparatus parses Internet data and synchronization data (e.g., MPEG TEMI) transmitted for synchronization in addition to the A/V data. Accordingly, the broadcast signal reception apparatus may provide an event linkage service for an actual channel at a timing transmitted at a constant rate.

The ICT according to embodiments of the present disclosure may include media data to be received over the actual Internet channel. The ICT includes an MPD URI. The broadcast signal reception apparatus may obtain an MPD capable of receiving content through the MPD URI of the ICT. The DASH server serves as a content origin capable of receiving content. Accordingly, the DASH server 50012 may perform dynamic allocation of a multicast/unicast server according to network state through the MPD URI. In the case of multicast, the MPD may include a multicast server address serving as a CDN close to a client and the broadcast signal reception apparatus may receive a unicast/multicast adaptive service.

The DASH client 50014 receives and decodes an A/V DASH segment through the MPD. Further, the DASH client 50014 renders the media data 50015 like the linear channel and displays the media data on the display 50016.

In this specification, the SDT may be referred to as first signaling information, second signaling information, or the like.

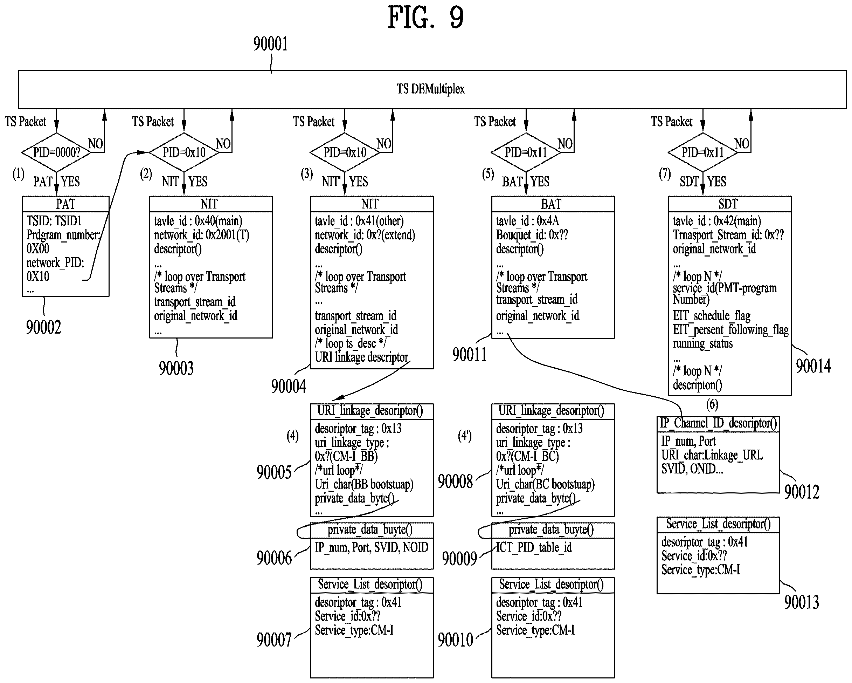

FIG. 9 illustrates a process of parsing SI by a broadcast signal reception apparatus according to embodiments of the present disclosure.

The broadcast signal reception apparatus according to embodiments of the present disclosure may use unique ID information necessary for integrating a service guide for the traditional channel as described above. The broadcast signal reception apparatus according to embodiments of the present disclosure may parse the ID information for the service guide as follows.

A TS demultiplexer 90001 may parse signaling information from a TS included in a broadcast signal. The TS demultiplexer may correspond to the TS packet filter 50001. The TS demultiplexer 90001 may identify a packet based on the PID.

When a TS packet includes information 90002 about the PAT, the broadcast signal reception apparatus according to embodiments of the present disclosure parses the PAT. The PAT includes ID information about a network (network_PID).

When the TS packet includes information 90003 about the NIT, the broadcast signal reception apparatus parses the NIT. The NIT includes an ID of the NIT, an NID, a TSID, and an ONID.

When the TS packet includes information 900004 about the NIT, the broadcast signal reception apparatus parses the NIT. An ID (table id) of the NIT may include information about a main or actual network and information about other networks.

For example, when service guide information follows the format of MPEG-2 PSI, the broadcast signal reception apparatus receives the PAT corresponding to the case in which the PID value of the TS packet header is 0x00. The broadcast signal reception apparatus receives network_PID corresponding to the case in which the PID value is 0x01. When table_id of the NIT is 0x40, the NIT includes the information about the main network and, when table id of the NIT is 0x41, the NIT includes the information about other networks.

The NIT 90003 for the main network includes an NID (network_id), a TSID (transport_stream_id), and an ONID (original_network_id) and the broadcast signal reception apparatus may identify a currently received stream based on the NID (network_id), the TSID (transport_stream_id), and the ONID (original_network_id).

The broadcast signal transmission apparatus according to embodiments of the present disclosure may transmit a TS packet including the information 90004 about the NIT in order to bootstrap the service of the Internet channel.

The NIT 90004 for other networks may include network_id and network_id may indicate the Internet linear channel. The NIT 90004 may include an ONID (original_network_id) and a TSID (transport_stream_id) and the broadcast signal reception apparatus may uniquely identify a service based on the ONID and the TSID.

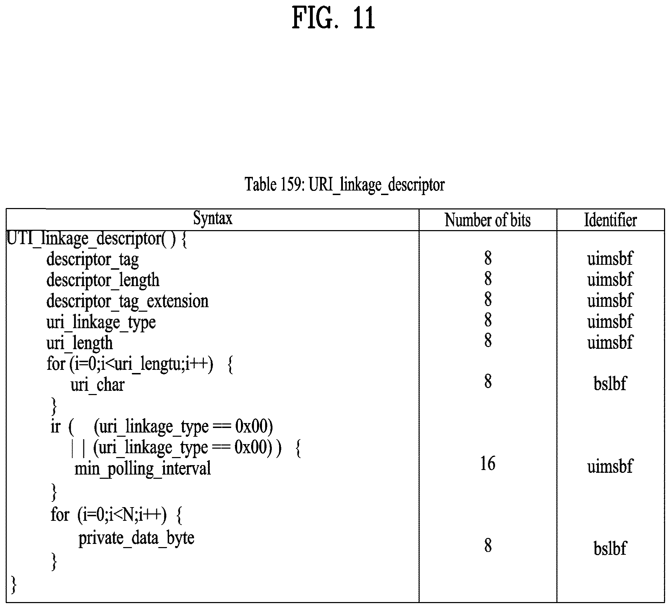

Data for the Internet channel does not include the TSID. Therefore, information unique id that may replace the TSID is required for the data for the Internet channel. The unique ID information of the TSID may be replaced by URI_linkage_descriptor 90005 or 90008. URI_linkage_descriptor includes URI address information. Since each operator has a different URI string, the TSID may be replaced with a corresponding URI string. Additionally, the broadcast signal reception apparatus may receive discovery information, including ICT channel information, and MPD URI information capable of receiving an actual DASH segment, based on the URI address information. A detailed configuration of URI linkage descriptor will be specifically described with reference to FIG. 11.

The broadcast signal reception apparatus according to embodiments of the present disclosure may receive service discovery information for acquiring the linear Internet channel based on broadband and/or broadcast. A descriptor when an acquisition path is broadband is URI_linkage_descriptor 90005 and a descriptor when the acquisition path is broadcast is URI_linkage_descriptor 90008.

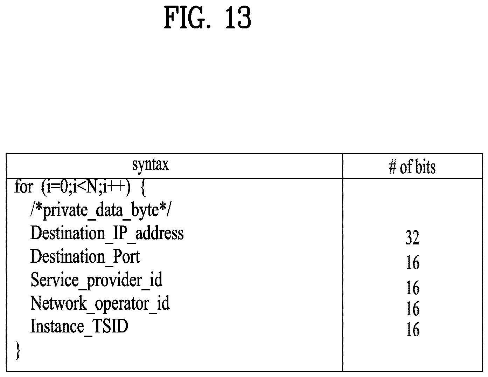

When the acquisition path is broadband, URI_linkage_descriptor 90005 includes private data 90006. A detailed configuration of the private data 90006 based on the broadband will be described with reference to FIG. 13.

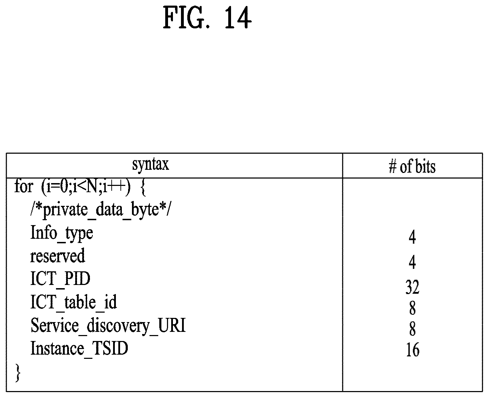

If the acquisition path is broadcast, URI linkage descriptor 90008 includes private data 90009. A detailed configuration of the private data 90009 based on the broadcast will be described with reference to FIG. 14.

In addition, the broadcast signal transmission apparatus according to embodiments of the present disclosure may transmit information service_list_descriptor about a service or service list based on broadband or broadcast as sub-configuration information of the NIT 90004. The service list information based on broadband is service_list_descriptor 90007 and the service list information based on broadcast is service_list_descriptor 90010. The service list information 90007 and 90010 provide unique ID information for a service such as a service ID and a service type.

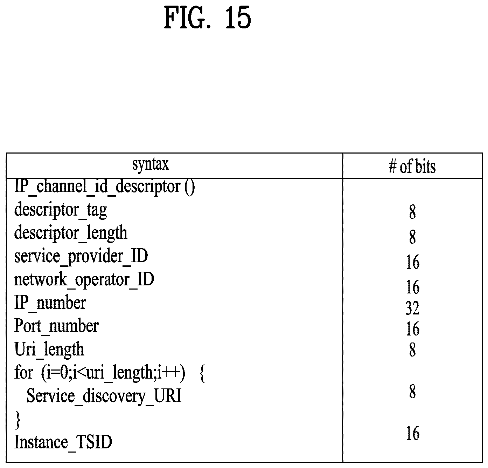

When the TS packet includes information 90011 about a BAT, the broadcast signal reception apparatus according to embodiments of the present disclosure parses the BAT 90011. The BAT 90011 includes information bouquet_id for identifying a bouquet, which is a service bundle, and includes a TSID (transport_stream_id) and an ONID (original_network_id), which are service description information for a broadcast channel. In order to provide a service description for the Internet linear channel, the broadcast signal transmission apparatus may additionally provide information that may replace the TSID for the linear channel. The BAT 90011 may additionally include a descriptor 90012 for a service discovery URI and a service list descriptor 90013, as sub-configuration information. A detailed configuration of the descriptor 90012 and the service list descriptor 90013 will be described with reference to FIG. 15.

When the TS packet includes information 90014 about the SDT, the broadcast signal reception apparatus according to embodiments of the present disclosure parses the SDT 90014. A detailed configuration of the SDT 90014 has been described with reference to FIG. 8.

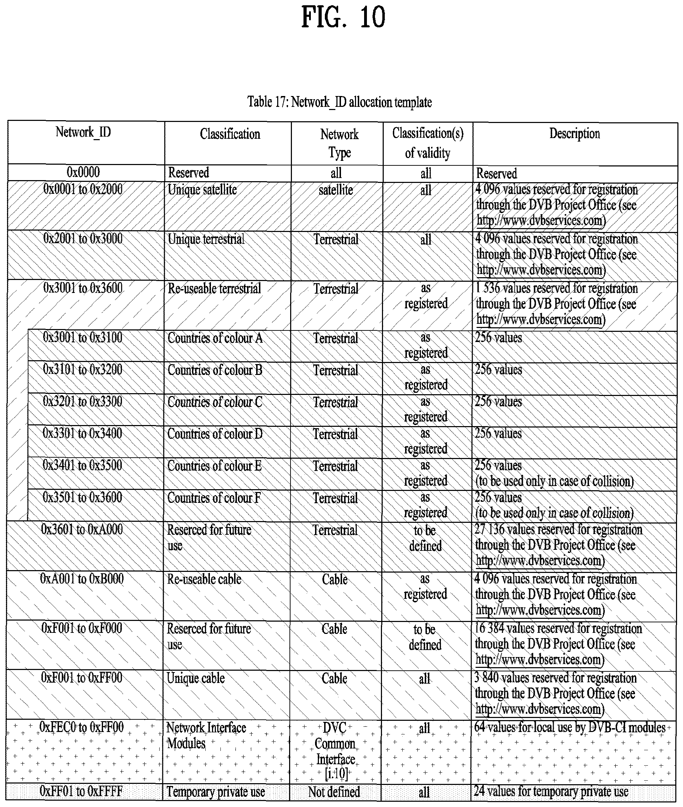

FIG. 10 illustrates a network type.

The broadcast signal transmission apparatus and the broadcast signal reception apparatus according to embodiments of the present disclosure may transmit and receive a broadcast signal using various networks. The networks may include an S channel, a T channel, and a C channel and further include an Internet channel. An NIT, which is signaling information for a network, may include network_id and the broadcast signal transmission apparatus may allocate the Internet channel together with the S channel, the T channel, and the C channel to network_id.

FIG. 11 illustrates a configuration of a URI descriptor (URI_linkage_descriptor).

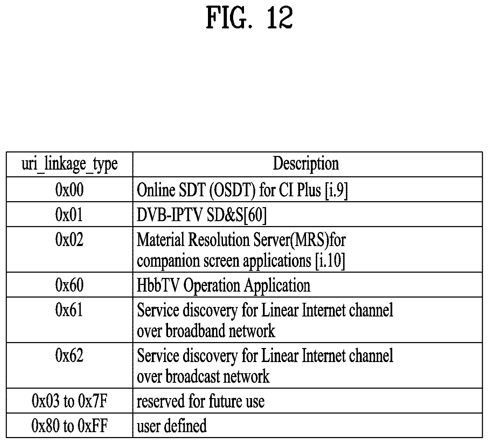

The URI descriptor includes type information uri_linkage_type. The broadcast signal transmission apparatus may newly allocate a value for service discovery information for an Internet channel to the type information. A detailed configuration of the type information will be described with reference to FIG. 12.

The URI descriptor includes private data. A detailed configuration of the private data depending on whether a service discovery acquisition path is broadband or broadcast will be described with reference to FIGS. 13 and 14, respectively.

FIG. 12 illustrates a configuration of URI linkage type (uri_linkage_type) information.

Information about the URI linkage type of FIG. 12 includes the service discovery information for obtaining the linear Internet channel. A path through which the broadcast signal reception apparatus acquires the linear Internet channel includes broadband and/or broadcast.

For example, when the value of uri linkage type is 0x00, the type of the URI linkage information represents an online SDT (OSDT) for CI Plus. When the value of uri linkage type is 0x01, the type of the URI linkage information indicates DVB-IPTV service discovery and selection (SD&S). When the value of uri_linkage_type is 0x02, the type of the URI linkage information indicates a material resolution server (MRS) for a companion screen application. When the value of linkage type is 0x60, the type of the URI linkage information indicates an HbbTV operation application.

Furthermore, the broadcast signal transmission apparatus according to embodiments of the present disclosure may extensively define uri linkage type. For example, when the value of uri_linkage_type is 0x61, the type of the URI linkage information indicates service discovery information for a linear Internet channel over a broadband network. When the value of uri linkage type is 0x62, the type of the URI linkage information indicates service discovery information for the linear Internet channel over a broadcast network. Therefore, when the value of uri_linkage_type is 0x61, the broadcast signal reception apparatus acquires the service discovery information through the Internet and, when the value of uri_linkage_type is 0x62, the broadcast signal reception apparatus may acquire the service discovery information while maintaining compatibility with DVB SI through a currently received T channel, S channel, and/or C channel.

FIG. 13 illustrates a configuration of private data.

Information included in the private data 90006 transmitted through broadband will be described below.

The private information includes a destination IP address (Destination_IP_address). The destination IP address indicates a service discovery IP address. A destination port (Destination_Port) indicates a port number. A service provider ID (Service_provider_id) indicates a service provider. A network operator ID (Network operator id) indicates a network operator that provides a service. An instance TSID (Instance_TSID) represents a temporary TSID value to replace the TSID.

The broadcast signal transmission apparatus according to embodiments of the present disclosure may add URL information for service discovery to the private data 90006 instead of the destination IP address. Since IP information is converted into a string and becomes a URL, the URL information may correspond to the IP information.

Similarly, the broadcast signal transmission apparatus according to embodiments of the present disclosure may add the URL information for service discovery to the private data 90006 instead of the destination port.

The broadcast signal transmission apparatus according to embodiments of the present disclosure may transmit the private data 90006 in URI_linkage_descriptor 90005 based on broadband. The broadcast signal transmission apparatus may replace Destination_IP_address, Destination Port, Service_provider_id, Network operator id, and Instance_TSID included in the private data 90006 with the URI information for service discovery for the Internet linear channel. The broadcast signal reception apparatus may provide an integrated EPG for a broadcast channel including the Internet channel and perform service discovery for the Internet channel using the URI information of URI_linkage_descriptor 90005.

FIG. 14 illustrates a configuration of private data.

The information included in the private data 90009 transmitted through broadcast is described below.

An information type (Info type) indicates whether the service discovery information received by the broadcast signal reception apparatus is an XML type or binary code.

A packet ID (ICT_PID) indicates a PID of a TS packet including the service discovery table information.

A table ID (ICT table id) indicates an ID of a table that may identify the service discovery table.

A service discovery URI (Service_discovery_URI) indicates a file URI when the information type is an XML file.

An instance TSID (instance_TSID) indicates a temporary TSID that replaces the TSID.

The method for the broadcast signal reception apparatus to obtain the service discovery information for the Internet channel has been described with reference to FIGS. 9 to 14. The broadcast signal reception apparatus receives the NIT for other networks and parses URI_linkage_descriptor included in the NIT based on broadband or broadcast. In addition, the broadcast signal reception apparatus acquires an additionally defined service discovery URI instead of the TSID through the private data included in each URI_linkage_descriptor.

Furthermore, in the broadcast signal reception apparatus according to the embodiments of the present disclosure, a sub-loop of the NIT 90004 and/or the BAT 90011 may include a service list descriptor (service_list_descriptor) or a service descriptor (service_descriptor) 90007, 90010, or 90013. The service list descriptor (service_list_descriptor) or the service descriptor (service_descriptor) 90007, 90010, or 90013 includes a stream unique ID (stream_unique_id) and a service ID (service id).

As described above with reference to FIG. 7, the BAT 90011 groups streams and services in a current receiver regardless of a network and signals a service bundle called a bouquet. The BAT 90011 may provide signaling for a logical bundle of network and transport levels based on the bouquet ID (bouquet id), the ONID (original network id), and the TSID (transport_stream_id). Since the Internet linear channel may not include the TSID, signaling for the Internet linear channel level is necessary.

The broadcast signal transmission apparatus according to embodiments of the present disclosure may transmit the private data in URI_linkage_descriptor 90008 based on broadcast. The broadcast signal transmission apparatus may replace the information type (Info_type), the packet ID (ICT_PID), the table ID (ICT table id), the table ID (ICT_table_id), the service discovery URI (Service_discovery_URI), and/or the instance TSID (instance_TSID) with the URI information for service discovery for the Internet linear channel. The broadcast signal reception apparatus may provide an integrated EPG for a broadcast channel including the Internet channel and perform service discovery for the Internet channel using the URI information of URI_linkage_descriptor 90008.

Accordingly, the broadcast signal transmission apparatus according to embodiments of the present disclosure may add unique information for replacing the TSID to uri_linkage_descriptor or additionally define the descriptor in the BAT as described above. Specifically, the BAT may include IP_channel_ID_descriptor. A configuration of IP_channel_ID_descriptor will be described in detail with reference to FIG. 15.

FIG. 15 illustrates a configuration of an IP channel ID descriptor (IP_channel_ID_descriptor).

The IP channel ID descriptor (IP_channel_ID_descriptor) 90012 includes unique information about a network and a stream. Similarly, URI_linkage_descritor 90005 or 90008 also includes the unique information about the network and the stream.

A descriptor tag (descriptor tag) and descriptor length (descriptor length) identify the descriptor and indicate the length of the descriptor.

A service provider ID (service_provider_ID) indicates information for identifying a service provider for an IP channel.

A network operator ID (network_operator_ID) indicates information for identifying a network operator.

An IP number (IP number) indicates a number for an IP channel.

A port number (Port_number) indicates a port number for the IP channel.

The IP channel ID descriptor (IP_channel_ID_descriptor) 90012 includes a service discovery URI (service_discovery_URI) for service discovery for an Internet linear channel. The IP channel ID descriptor 90012 also includes an instance TSID (instance_TSID) for replacing a TSID. The instance TSID (instance_TSID) may have a value of an instance TSID for replacing the TSID.

The service list descriptor 90013 is information for identifying a service for the Internet linear channel and includes a service ID (service id) and a service type (service_type) for the service of the Internet linear channel.

Accordingly, the broadcast signal reception apparatus identifies a network by parsing the ONID (original_network_id) of the BAT 90011 and parses the IP channel ID descriptor (IP_channel_ID_descriptor) 90012 to obtain the service of the Internet linear channel based on the service discovery URI information. Furthermore, the broadcast signal reception apparatus may obtain a service ID and a service type based on the service list descriptor 90013.

The broadcast signal transmission apparatus according to embodiments of the present disclosure may include URI information for discovering the service for the Internet linear channel by extensively defining an IP number (IP_number), a port number (Port_number), a network operator ID (network_operator_ID), and a service provider ID (service_provider_ID) included in the IP channel ID descriptor (IP_channel_ID_descriptor) 90012. The broadcast signal reception apparatus may receive the integrated EPG based on the IP channel ID descriptor (IP_channel_IDdescriptor) 90012 and obtain the URI information.

The broadcast signal transmission apparatus may signal service discovery by configuring a service bundle for each logical bouquet ID unit.

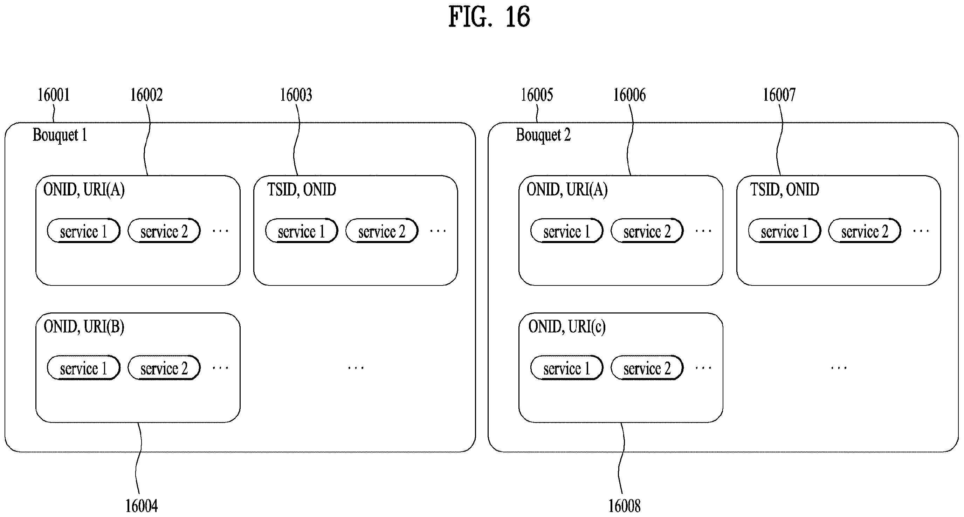

FIG. 16 illustrates a service discovery process based on a bouquet.

The broadcast signal reception apparatus according to embodiments of the present disclosure may signal a service bundle based on bouquet ID information.

Bouquet 1 16001 and bouquet 2 16005 may be identified based on a bouquet ID (bouquet_id).

The bouquet 1 16001 may include service bundles 16002, 16003, and 16003 which are a group of multiple services. The bouquet 2 16005 may include service bundles 16006, 16007, and 16008 which are a group of multiple services. As described above in FIG. 7, the bouquet includes a group of multiple streams or services transmitted over various networks. The service bundle may be represented by an ONID (original network id). In the case of services for a T channel, an S channel, and a C channel among various networks, the service bundle may be represented through a TSID (transport_stream_id) (16003 and 16007). The service for an Internet linear channel among various networks may be represented based on a URI (16002, 16004, 16006, and 16008). For example, the service bundle 16002 may be discovered based on URI A. The service bundle 16008 may be discovered based on URI C. As described above with reference to FIGS. 9 to 15, the URI information of FIG. 16 may be replaced with the IP number (IP_number), the port number (Port number), the service provider ID (Service_provider_ID), the network operator ID (Network operator id), and/or the instance TSID (instance_TSID).

According to the above-described embodiments of the present disclosure, the broadcast signal reception apparatus may implement an IP-based TV service capable of providing the same user experience (UX) as the T, S, or C linear channel. Furthermore, the broadcast signal reception apparatus may provide a channel guide integrated with the T, S, and Cable channel by receiving open Internet-based native code, rather than an application based linear channel service. In addition, the broadcast signal reception apparatus may perform Internet channel scanning that may provide the same UX as the traditional linear service channel and perform service initialization based on an MPEG-2 system/DVB SI. In order to provide a service guide integrated with the traditional linear channel, the broadcast signal reception apparatus may provide network/stream/service unique signaling for identifying an Internet stream through the above-described signaling information, description, or table. The broadcast signal transmission apparatus provides a signaling method capable of replacing the TSID while maintaining compatibility with the TSID information within current system information, without additionally defining new information.

In order to provide a linear IP-based TV service, the broadcast signal transmission apparatus according to embodiments of the present disclosure extends a service bootstrap method of a traditional linear channel network. The unique additional information that should be defined to identify the linear IP-based TV service has been described with reference to FIG. 9. Therefore, the user may be provided with IP-based TV channel information added to the traditional linear channel EPG.

The broadcast signal reception apparatus according to embodiments of the present disclosure may access a service through a UI in which a traditional linear service and an OTT service are integrated in an apparatus supporting a radio frequency (RF)-based DVB tuner. In addition, the broadcast signal reception apparatus may support a media service providing the same UX as the traditional linear channels through the open Internet without an STB.

In the broadcast signal transmission apparatus according to the embodiments of the present disclosure, a traditional IP-based linear channel service is authenticated through subscription to a specific operator, for example, an ISP or network operator, and receives the IP linear service through an STB provided by the operator. Recently, with the advent of a connectivity TV, an IP linear service in an STB-less form may also be provided. For example, representative standard technology includes ATSC 3.0, IBB, and HbbTV. A client may receive various linear rich media services by executing an application on an OS platform inside the TV. Various operators provide service applications developed thereby to be installed on a TV platform and define APIs that enable applications to perform service request/reception with respect to a server for receiving data for services. Based on a life cycle of the APIs, the client may access the applications through a TV UI and receive various services through the applications. The broadcast signal reception apparatus according to embodiments of the present disclosure may provide the above-mentioned various services to a user.

In addition, the broadcast signal reception apparatus according to embodiments of the present disclosure may provide an OTT channel as well as a linear TV. The OTT market increases the need for media applications necessary for an IP-based device. In the OTT market, the form of exclusive services is increasing with an independent platform and a service ecosystem only for the OTT. In other words, a consumption form of a standalone application ecosystem such as codec, protocol stack, application, and/or browser provided only by each OTT is increasing. The broadcast signal reception apparatus according to embodiments of the present disclosure solves issues such as an exclusive platform and dependency application operation. Furthermore, the broadcast signal reception apparatus proposes a method of discovering a service at a receiver native level and accessing a service server accessible by a client to receive a linear service, rather than providing UX similar to a linear channel service such as a T channel, an S channel, and/or a C channel, which should execute an application.

In addition, the broadcast signal reception apparatus according to embodiments of the present disclosure proposes a method of integrating standalone OTT platforms into one unified TV native platform, eliminating the burden of the user executing an OTT application, and receiving and providing OTT content on a channel.

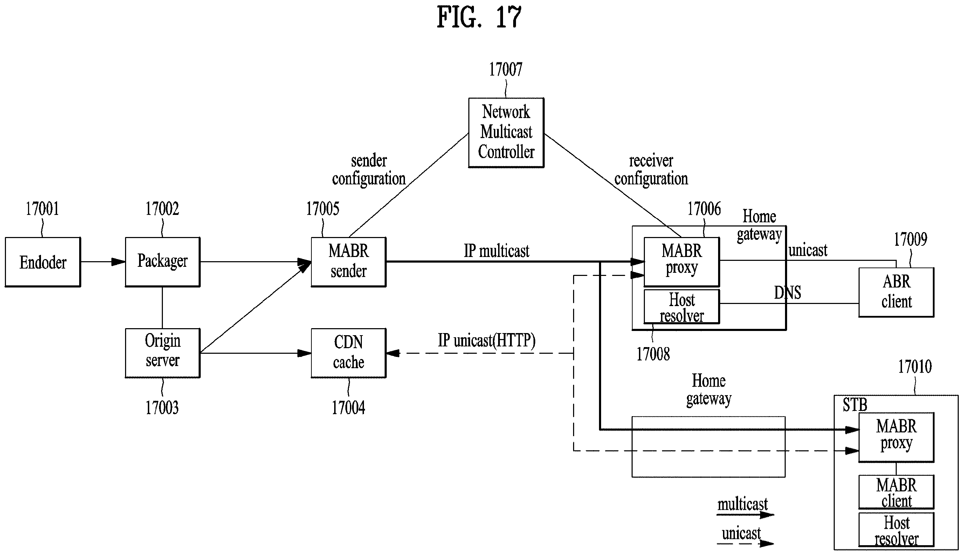

FIG. 17 illustrates a multicast adaptive bit rate (ABR) structure.

The broadcast signal transmission apparatus according to embodiments of the present disclosure may provide an IP-based multicast service. Specifically, the broadcast signal transmission apparatus may provide an adaptive multicast media service using a DASH protocol. A broadcast signal transmission method and a broadcast signal reception method according to embodiments of the present disclosure, for a multicast ABR service, are as illustrated in FIG. 17.

An encoder 17001 may compress content based on a transmission range.

A packager 17002 may contain, in a container, an access unit (AU) for data obtained by compressing content in a transmittable format.

An origin server 17003 stores an original file for content distribution.

A CDN cache 17004 represents a server that stores data in each distribution server in order to efficiently deliver content. The broadcast signal transmission and reception apparatuses may use the CDM cache 17004 during retransmission of content for missing packets while multicast transmission is performed.

A multicast adaptive bit rate (MABR) sender 17005 sends multicast metadata information and services to a home gateway and/or an STB based on content delivered from the server 17003.

An MABR proxy 17006 represents a temporary server for performing HTTP communication with an ABR client 17009. A DASH client and a proxy may consume services in the form of a unicast service based on the MABR proxy 17006.

A network multicast controller 17007 transmits, to the home gateway, control information about overall services needed to provide a multicast ABR service. For example, the network multicast controller 17007 may transmit control information for enabling unicast and multicast switching to the home gateway, for a slow random access point (RAP) of multicast.

A host resolver 17008 processes access information for providing a unicast/multicast service. For example, the host resolver 17008 may connect an MPD URL and a proxy server through a module that serves as a domain name system (DNS) server.

An ABR client 17009 represents a client that consumes an ABR service.

An STB 17010 represents a set-top box and includes an MABR proxy, an MABR client, and a host resolver, for servers for communication.

A multicast data processing process of FIG. 17 will now be described. The network multicast controller 17007 may transmit control information about transmission to the MABR sender 17005 and receive the control information about transmission from the MABR sender 17005. The controller 17007 may transmit control information about reception to the MABR proxy 17006 and receive the control information about reception from the MABR proxy 17006. The MABR sender 17005 may send multicast metadata and service data to the MABR proxy 17006 and the STB 17010 based on an IP multicast scheme. The CDN cache 17004 may transmit content-related information stored in the server to the MABR proxy 17006 and the STB 17010 based on an IP unicast scheme of HTTP. Communication between the MABR proxy 17006 and the ABR client 17009 may be performed based on a unicast scheme. Communication between the host resolver 17008 and the ABR client 17009 may be performed based on the DNS.

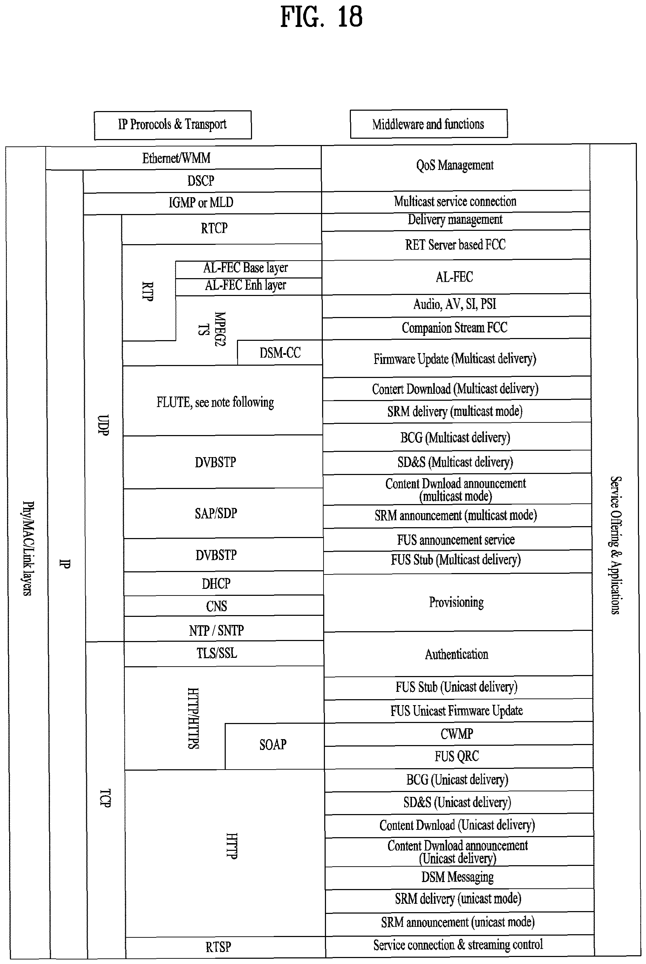

FIG. 18 illustrates a configuration of an IPTV protocol stack.

The broadcast signal transmission apparatus and the broadcast signal reception apparatus according to embodiments of the present disclosure may process data based on a protocol of FIG. 18. Specifically, an IPTV protocol may be defined by being classified into IP protocols and transport, and middleware and functions. Services may include a multicast service sent to multiple specific users in real time, a unicast service based on the request of a user, a non-real-time service related to content download and firmware upgrade, and a service received by updating service initialization information transmitted in a carousel form.

In other words, the multicast service may represent A/V, service information (SI), program specific information (PSI), etc., with a structure of a user datagram protocol (UDP)/IP/MPEG-2 transport stream (M2TS) protocol. The unicast service may represent a service of an HTTP-based request and response structure. The non-real-time service may represent a service related to multicast content download based on file delivery over unidirectional transport (FLUTE) and a service related to firmware update information download. A digital video broadcasting service discovery and selection transport protocol (DVBSTP) service may represent a service related to a protocol for transmitting service discovery information and a service related to a protocol for transmitting broadband content guide information.

The broadcast signal transmission apparatus according to embodiments of the present disclosure intends to expand IPTV service initialization information to which a DASH protocol is applied in order to provide an ABR service of an IPTV. That is, the broadcast signal transmission apparatus additionally provides information capable of accessing a DASH service so that the broadcast signal reception apparatus provides an adaptive streaming service for a multicast real-time service so as to seamlessly consume content without buffering

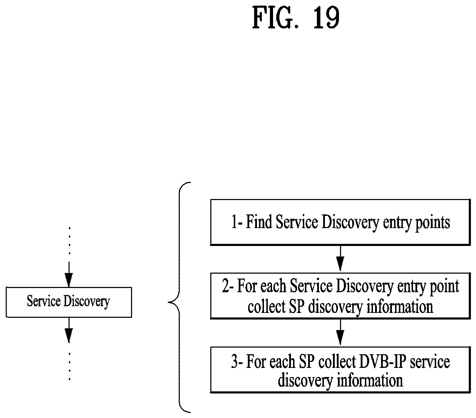

FIG. 19 illustrates an IPTV service discovery process.

The broadcast signal reception apparatus according to embodiments of the present disclosure discovers a service provider (SP) available at a reference time point. The broadcast signal reception apparatus collects service discovery entry point information through a dynamic host configuration protocol (DHCP) structure in order to bootstrap service discovery. Next, the broadcast signal reception apparatus may collect service discovery information for providing an IPTV service by selecting a proper SP from among collected SP entry points.

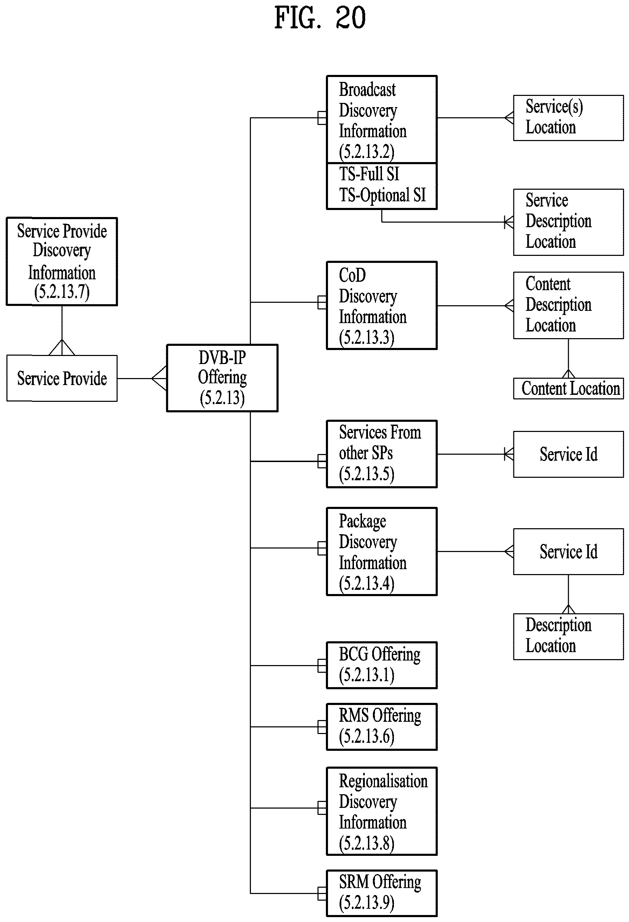

FIG. 20 illustrates a configuration of SI.

The broadcast signal transmission apparatus and broadcast signal reception apparatus according to embodiments of the present disclosure may signal services through the SI of FIG. 20. A detailed configuration of the SI may be represented according to the DVB-SI standard.

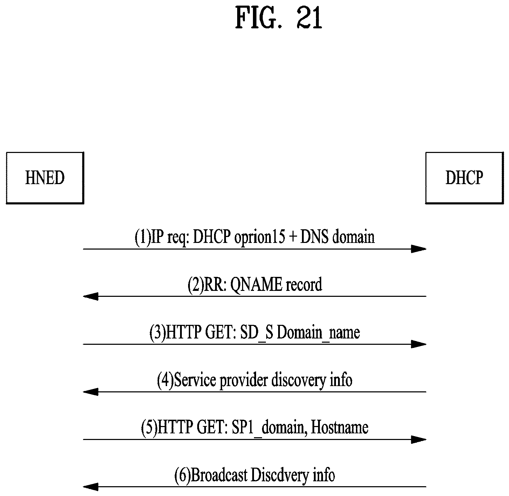

FIG. 21 illustrates a service discovery process.

The broadcast signal reception apparatus according to embodiments of the present disclosure may receive a service discovery entry by initializing an IP service through a DHCP service.

In regard to step (1), if a terminal accesses a network, a server selects an IP address from a list therein and allocates the IP address.

As one of handshake methods between an STB and a DHCP server, the IP address is allocated to a home network end device (HNED) through a DNS server of a DHCP.

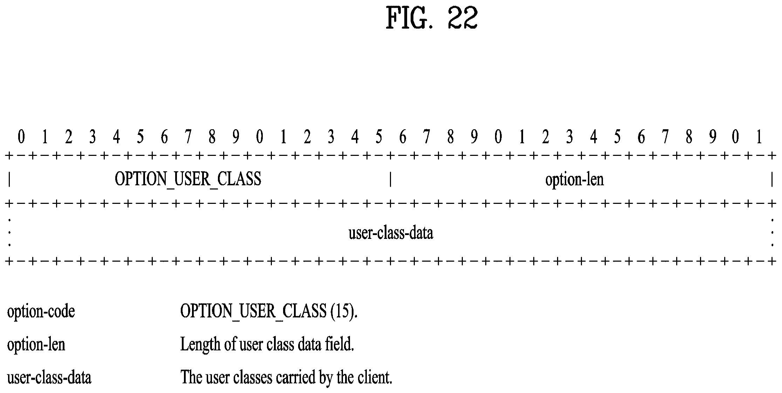

The HNED defines DNS_domain information through option 15 among DHCP options and transmits the DNS_domain information to the DHCP. Option 15 may be additionally defined in the user class option of RFC3315. A detailed configuration of the user class option will be described with reference to FIG. 22.

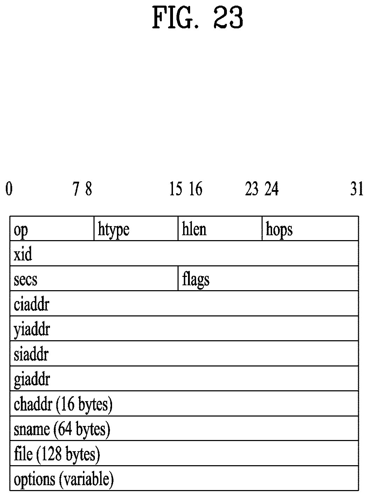

An option information field of the DHCP may additionally include domain information. A format of the DHCP will be described in detail with reference to FIG. 23.

In regard to step (2), the broadcast signal reception apparatus performs a configuration procedure which is indispensable to receive the IP address of the terminal and an IPTV service. The HNED receives a receiver report (RR) as return information. The RR includes a list of available networks and services. The HNED receives the list of available networks and services based on the RR. For example, the HNED receives service entries corresponding to, for example, SD&S1_domainname_IP_SD&S1 to SD&Sn_domainname_IP_SD&Sn. Specifically, in regard to step (3), the HNED transmits request information to the DHCP. The request information has a type of HTTP GET and includes a domain name. In regard to step (4), the DHCP transmits service provider discovery information to the HNED. In regard to step (5), the HNED transmits request information (HTTP GET) including domain and host names to the DHCP. In regard to step (6), the DHCP transmits broadcast discovery information to the HNED. A detailed process will be further described with reference to FIGS. 22 and 23.

FIG. 22 illustrates a configuration of a user class option.

The user class option represents information used by a client to identify the type or category of a user or an application. The user class option may comply with the specification of RFC3315. An option code may represent Option 15, an option length represents the length of a user class data field, and user class data represents user classes carried by a client. When the HNED transmits an IP request to the DHCP in FIG. 21, the HNED transmits DNS domain information based on user class option 15.

FIG. 23 illustrates a format of a DHCP.

An option field of the DHCP includes domain information. The HNED includes the domain information in the option field of the DHCP and transmits the domain information to the DHCP using option 15.

The service discovery process will now be continuously described with reference to FIGS. 21 to 23. The HNED performs service discovery and selection (SD&S) by selecting an entry from among service entries which are being received. The HNED may acquire domain and IP information for a service through step (1). Next, in regard to step (3), the HNED performs a procedure of acquiring service provider discovery information. That is, the HNED may compose XML based on the IP and domain information and makes a request for service provider information at a service level to the DHCP using the method of HTTP GET. For example, the HNED may compose XML with respect to SD&S1_domainname_IP_SD&S1 and make a request as follows.

GET/dvb/sdns/sp_discovery?id=ALL HTTP/1.1 CRLF

Host: SD&S1_DomainName CRLF

In regard to step (4), the HNED receives return of an instance from an SD&S server as a response to the HTTP GET request by the DHCP. The instance represents an instance capable of receiving the service provider discovery information. The HNED may collect all service providers (SPs) of a corresponding service based on the instance.

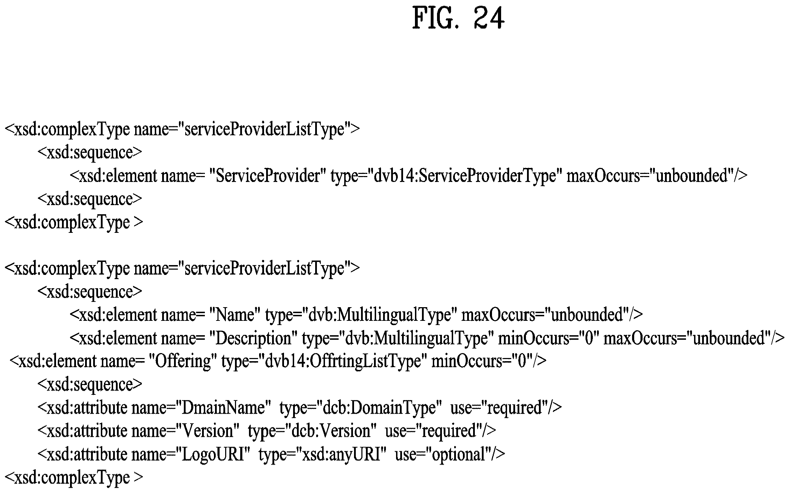

FIG. 24 illustrates a service provider discovery information record.

FIG. 24 illustrates embodiments of the above-described service provider discovery information. Referring to the schema of FIG. 24, a service may be acquired through two routes for SP1 and SP2.

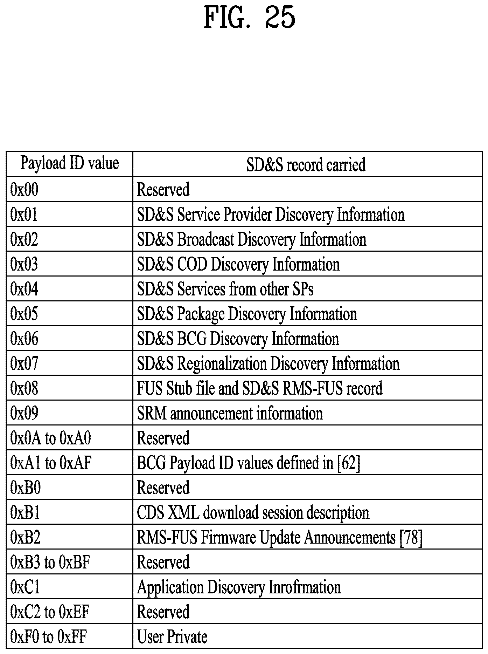

FIG. 25 illustrates a configuration of data for an SD&S server according to a payload ID value.

For example, when a value of a payload ID is 2, a payload includes an access address capable of receiving an instance for receiving UDP segments having broadcast discovery information.

Accordingly, if the HNED requests, through HTTP GET, a segment of a payload of an SP in which the HNED desires to consume a service in the instance, XML capable of accessing the service is returned.

Referring to FIG. 24, the service provider discovery information may be defined as two types of XML.

Specifically, the service provider discovery information is defined as a document consisting of higher elements of <serviceproviderListType> and <ServiceProviderType>. <ServiceProviderType> includes a name, description, and offering of an SP.

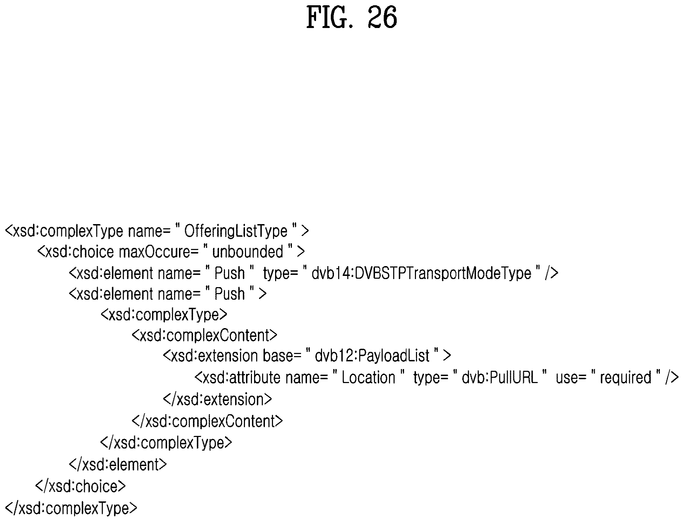

FIG. 26 illustrates a configuration of offering list type information.

An offering element includes an offering base (offeringbase) and an offering list type (offerlingListType) as lower elements. The offering element may include location information according to a transport mode. The HNED may acquire a domain or an IP address capable of receiving service specific information of each SP through the service provider discovery information of FIG. 24.

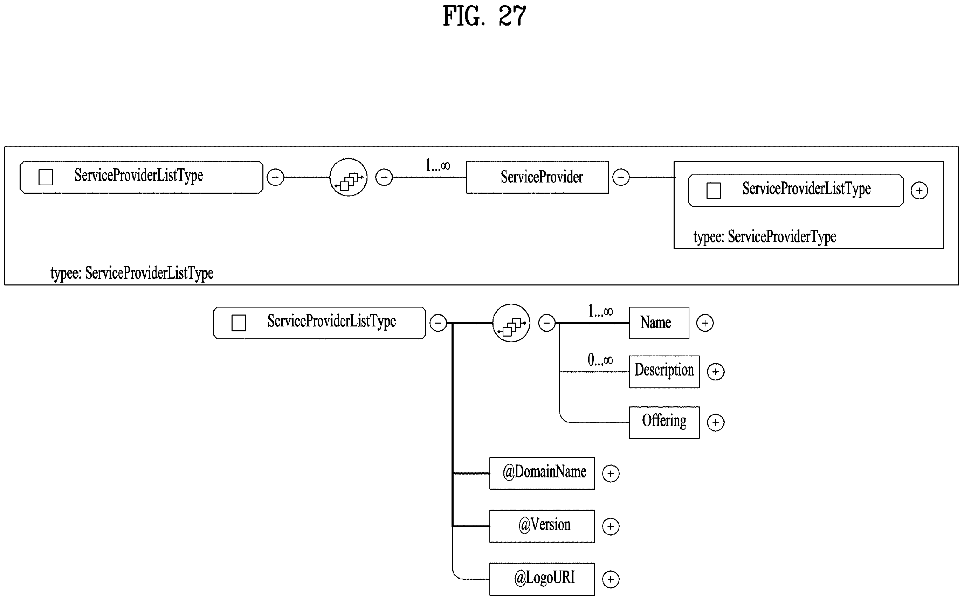

FIG. 27 illustrates a configuration of service discovery information.

The service provider discovery information record of FIG. 24 may describe SPs in groups. Therefore, the SPs may be flexibly described. FIG. 27 illustrates a schema structure of service provider discovery information.

FIG. 27 includes information related to attributes of SPs according to a service provider type. Detailed elements are as follows.

ServiceProvider represents a description of an SP.

Name represents a name of the SP in text.

Description represents a description of a service in text.

Offering represents a delivery method. Offering may provide location or IP access information for a service in a push or pull mode. That is, the broadcast signal reception apparatus may receive information by classifying payload IDs as illustrated in FIG. 25 and acquire an address capable of receiving XML for receiving broadcast discovery information.

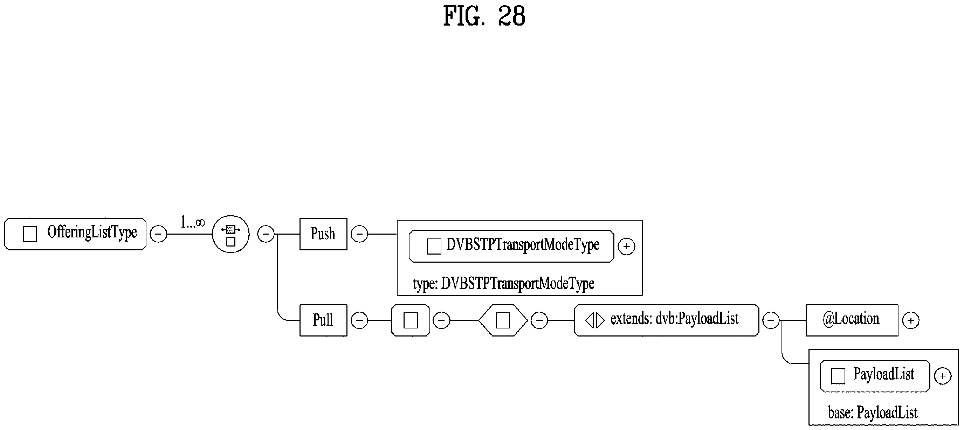

FIG. 28 illustrates a configuration of an offering list type.

The HNED may describe metadata in a push/pull mode according to a delivery method. The metadata may include information related to a detailed URL location according to the method. For example, the metadata in the pull mode may include a payload ID, information related to segment #, and location information so as to receive service specific information in a payload list. The metadata in the push mode may include an address of broadcast discovery information capable of receiving a multicast service based on a DVBSTP transport mode type.

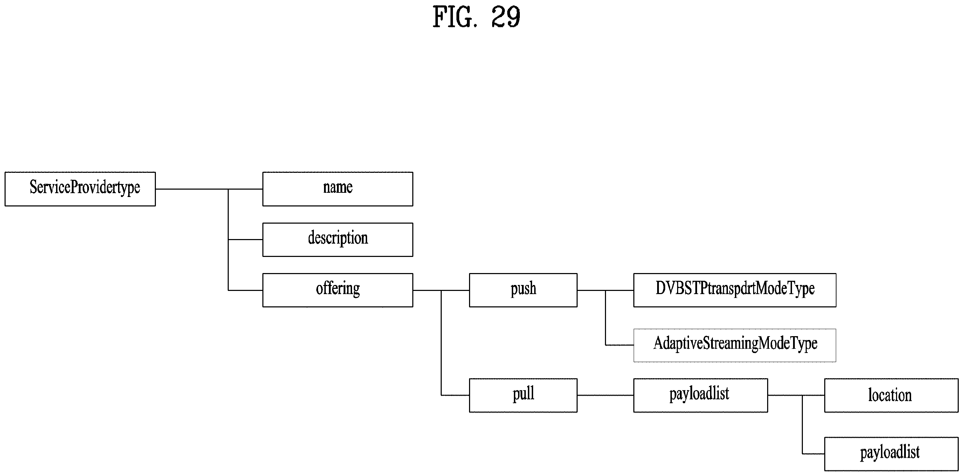

FIG. 29 illustrates a push mode and a pull mode for an offering element.

The offering element, which is a lower element of a service provider type, may include different metadata in the push mode and the pull mode as illustrated in FIG. 29.

The broadcast signal transmission and reception apparatuses according to embodiments of the present disclosure initialize an ABR service based on adaptive multicast and a service provider discovery information record in an IP and provide information for accessing broadcast information provided by each SP.

The push mode of the offering element may additionally include AdaptiveStreamingModeType. Information that is accessible to a service may be defined based on AdaptiveStreamingModeType.

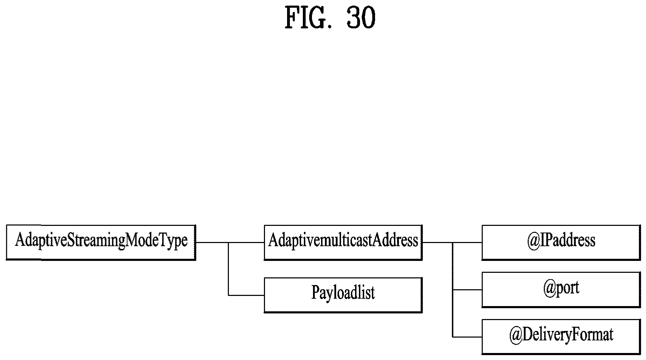

FIG. 30 is a configuration of AdaptiveStreamingModeType.

An adaptive multicast mode type (AdaptiveMulticastmodeType) represents a higher unit required to define a multicast ABR service.

An adaptive multicast address AdaptivemulticastAddress includes information for acquiring information related to broadcast information that is accessible to a multicast ABR service of each SP.

An IP address includes access server IP information needed to acquire broadcast information.

A port number includes access port information needed to acquire the broadcast information.

A delivery format represents protocol information for encapsulating a file or TS format for ABR multicast. For example, the delivery format may mean protocol information such as real-time object delivery over unidirectional transport (ROUTE), FLUTE, QUIC, RTP, TS, etc.

With regard to step (5) of FIG. 21, the HNED may transmit a request of HTTP GET through XML consisting of a domain of an SP, information (payloadID) that the HNED desires to receive, and segment #. The HNED may receive detailed information of an IP media service corresponding to each service. For example, an HTTP GET request may be as follows.

GET/dvb/sdns/service_discovery?id=SP1_DomainName&Payload=02&Segment=0 000 HTTP/1.1 CRLF

Host= sdns.SP1.com CRLF

GET/dvb/sdns/service_discovery?id=SP1_DomainName&Payload=02&Segment=0 001 HTTP/1.1 CRLF

Host= sdns.SP1.com CRLF

GET/dvb/sdns/service_discovery?id=SP1_DomainName&Payload=02&Segment=0 002 HTTP/1.1 CRLF

Host= sdns.SP1.com CRLF

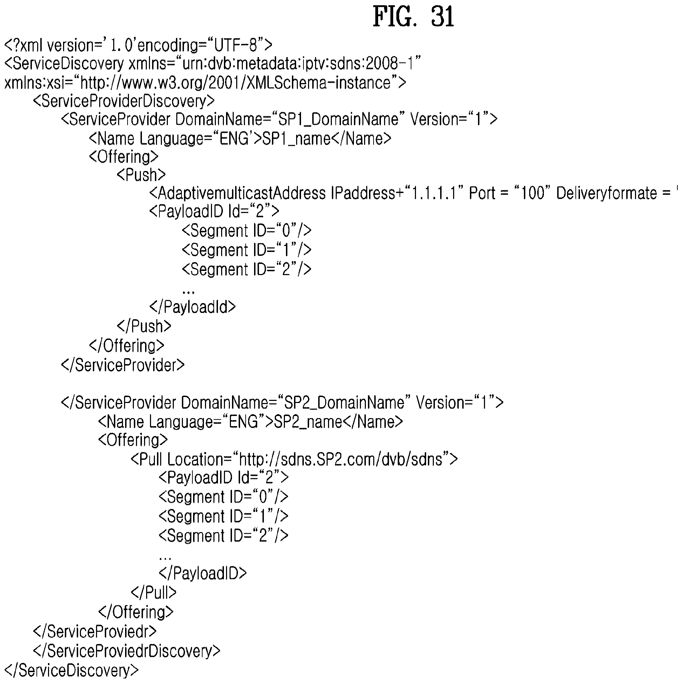

FIG. 31 illustrates an embodiment for service provider discovery.

Service provider discovery information includes a name and offering for an SP and includes information according to a delivery method of the offering. When the offering is a push mode, push includes adaptive multicast address information and includes a segment ID according to a payload ID. When the offering is a pull mode, pull includes location information and includes a segment ID according to a payload ID.

In regard to step (6) of FIG. 21, the request information of HTTP GET of step (5) is received through XML in a return form from the server. Here, XML is an embodiment of broadcast discovery information about SP1.

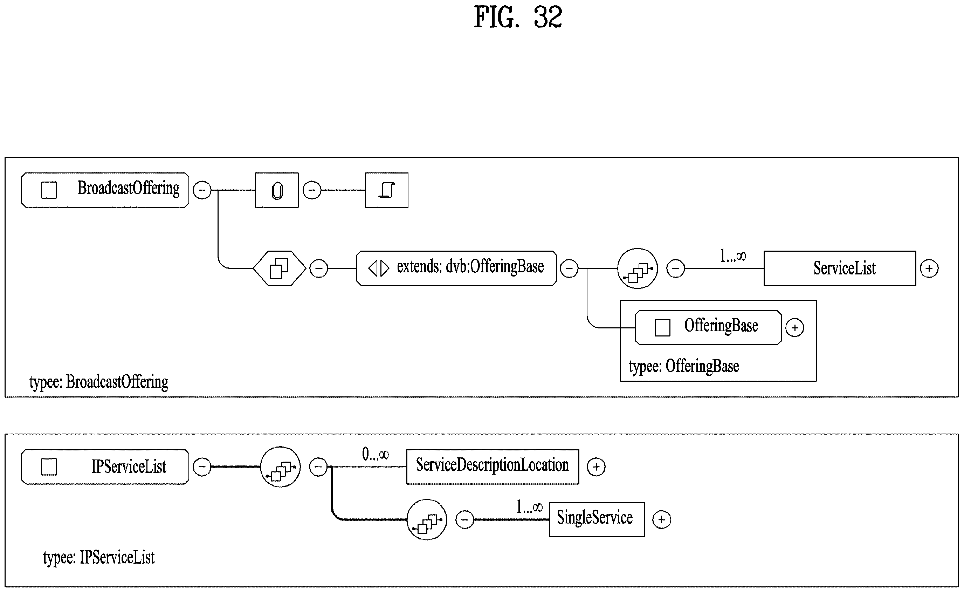

FIG. 32 illustrates a broadcast discovery information schema.

The broadcast discovery information record described in FIG. 24 is configured in a schema type of broadcast offering and the broadcast offering includes initialization information with an element structure as illustrated in FIG. 32. The broadcast offering provides information for detailed broadcast discovery at each SP level and detailed fields of the broadcast offering are as follows.

A service list (ServiceList) may include detailed information about IP services provided by an SP and represent location information that is accessible to the IP services.

A single service (SingleService) may include detailed information about a single IP service and represent location information that is accessible to the single IP service.

A service location (ServiceLocation) represents a location capable of discovering a service. For example, ServiceLocation may represent a domain, a URL, an IP address, etc.

DVBTriplet may include three pieces of information, i.e., OriginNetwork_ID, TSID, and serviceID, in DVB SI.

SI represents service information. The SI may be transmitted as full SI or only optional SI. The optional SI is configured through mandatory definition.

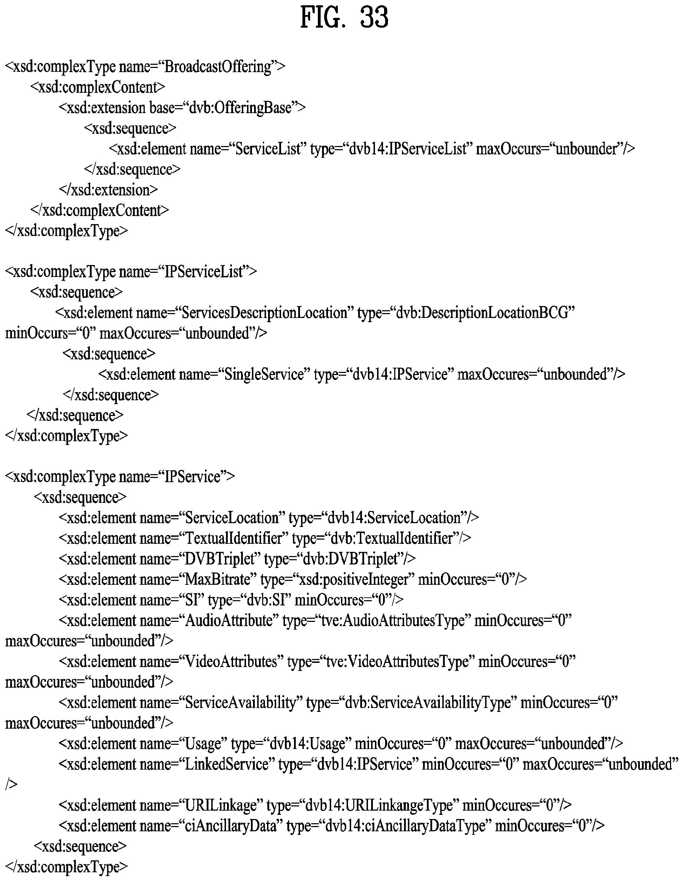

FIG. 33 illustrates a broadcast delivery information schema.

Broadcast offering includes a service list for an IP service list. The IP service list includes a single service corresponding to an IP service. The IP service may include a service location, a textual identifier, a DVB triplet, etc.

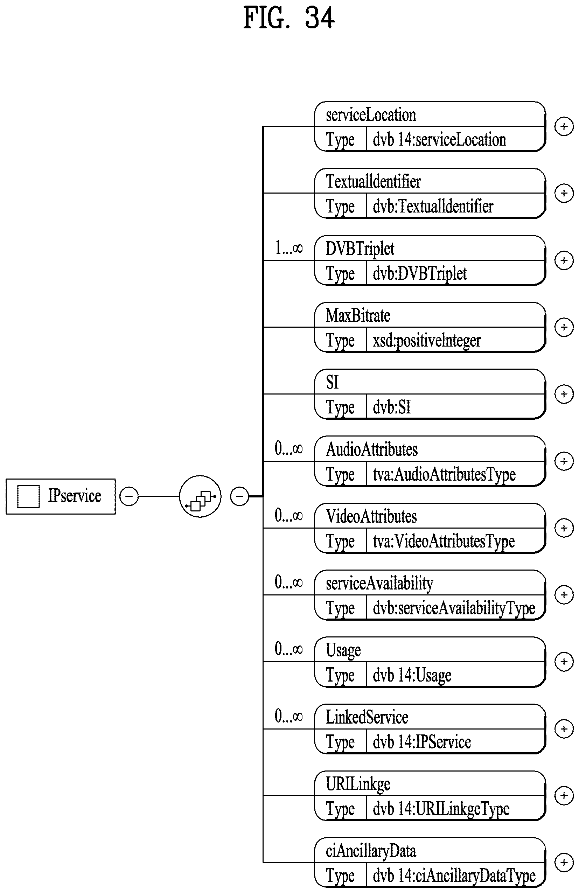

FIG. 34 illustrates a single broadcast discovery information schema.

An IP service provides information for service discovery based on service location information. A lower element of the IP service illustrated in FIG. 34 corresponds to information for single broadcast discovery.

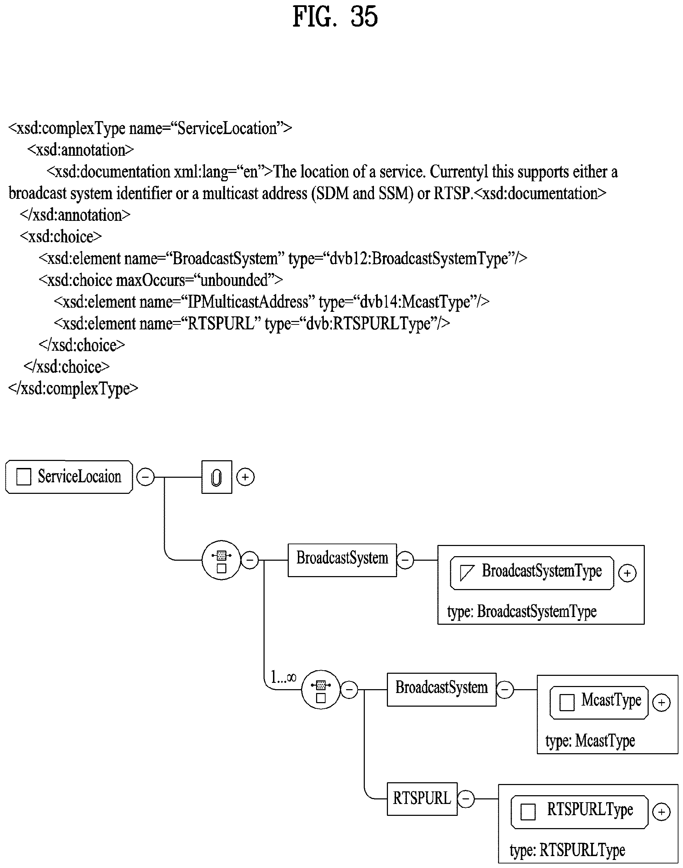

FIG. 35 illustrates a configuration of a service location.

An IP service includes a service location (ServiceLocation) as a lower element. The service location may include lower elements as follows.

A broadcast system type (BroadcastSystemType) represents a broadcast type such as DVB-C, S, and T, ATSC, and ISDB.

An IP multicast address (IPMulticastAddress) represents a parameter that is accessible to a multicast transport address or IP multicast.

RTSPURL represents a URL that is accessible to an RTP streaming service.

The broadcast signal transmission and reception apparatuses according to embodiments of the present disclosure may provide service initialization for a multicast ABR service. For this service, information capable of receiving an MPD manifest file defined by DASH and a reception algorithm will be described hereinbelow.

A service location may provide ID_multicast_ABR information in a broadcast system type among lower elements. The service location may add a value of ID_multicast_ABR in the broadcast system type.

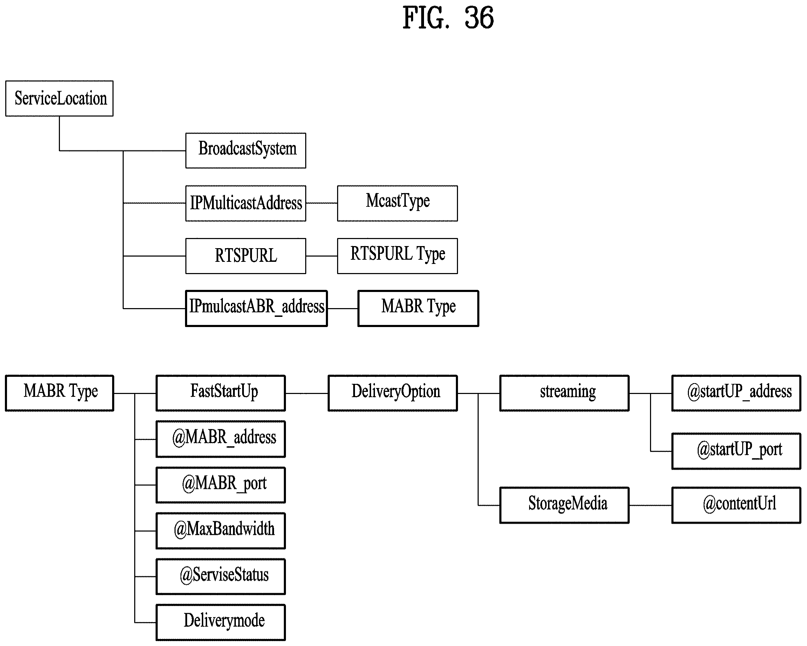

The value of ID_multicast_ABR may represent ID information of a delivery method for a broadcast service. Although a string of ID_multicast_ABR is changeable, the meaning of ID information indicating a broadcast service applying an ABR technique to a traditional multicast scheme is maintained. URL or IP information capable of accessing an IPmulticastABR_address service may be additionally proposed together with an IP multicast address (IPMulticastAddress) and RTSPURL. The URL or the IP information capable of accessing the IPmulticastABR_address service may be used as access information that may bring an MPD necessary for a DASH service. Separate information for the DASH service may also be added. Details of information capable of accessing the IPmulticastABR_address service will be described with reference to FIG. 36.

FIG. 36 illustrates an extended configuration of a single service.

A service location may include an IP multicast address (IPMulticastAddress), RTSURL, and IPmulcastABR_address in addition to a broadcast system. IPmulcastABR_address includes an MABR type (MABRType). MABRType may include the following elements.

Fast startup (FastStartUp) includes information for first performing unicast access for fast channel change before a multicast (IPTV multicast) packet is received. A unicast packet or data of low picture quality are rapidly rendered during a specific period, so that an IPTV provides an effect capable of reproducing data without delay of A/V playback. FastStartUp includes access information including an IP address. FastStartUp may further include advertisement of a network operator or advertisement of a content operator. Specifically, FastStartUp includes a delivery option. The delivery option includes streaming and storage media. When the delivery option is streaming, the streaming includes address information (startup_address) and port information (startUP_port), which are access information for fast startup. When the delivery option is the storage media, the storage media includes information (contentUrl) for acquiring content. The broadcast signal reception apparatus may receive a faster service in service and broadcast service discovery steps based on the fast startup information.

The delivery option represents a media option upon implementation of fast startup. The delivery option includes information capable of downloading a file for fast startup through storage media and streaming for executing A/V through a predownloaded stored file.

A startup address (Startup_IP_address) represents unicast access IP address information for fast A/V playback during service startup.

A startup port address (Startup_port_address) represents unicast access port information for fast AV playback during service startup.

Storage media (StorageMedia) represents a mode for executing a predownloaded file prior to ABR multicast among delivery options.

A content URL (ContentUrl) represents file URL information stored in a storage or cache for fast startup.

An MABR address (MABR_address) represents IP address information capable of accessing a multicast ABR service. The broadcast signal reception apparatus may consume a service by accessing a location at which multicast is capable of being acquired based on the MABR address after performing fast channel change (FCC) or fast A/V access through unicast during a predetermined period. The MABR address may represent IP information capable of acquiring an MPD.

An MABR port (MABR_port) represents a port number for receiving a multicast ABR service.

A maximum bandwidth (Maxbandwidth) represents a transmittable bit rate in consideration of a transmission and reception network condition or a service provider. Maxbandwidth represents a maximum bit rate at which data is capable of being received over a currently transmitted channel. How much amount of data per packet is received may be identified through Maxbandwidth. Maxbandwidth may be used to configure a fast object with reference to buffering of media data.

A delivery mode (Deliverymode) may be linked to base URL (baseURL) information of an MPD. The baseURL information of the MPD may be used according to the delivery mode.

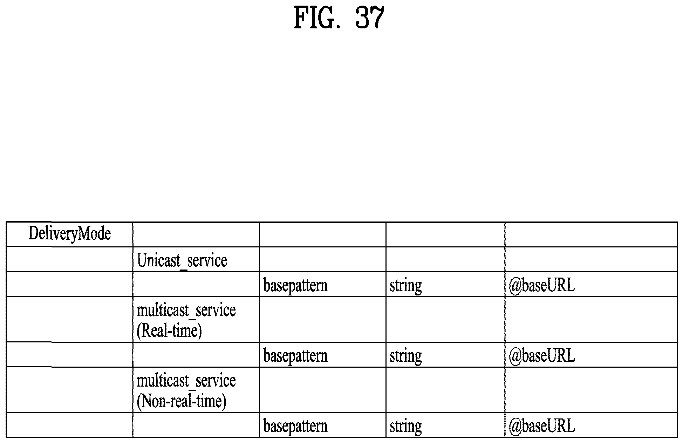

FIG. 37 illustrates base URL information according to a delivery mode.

The delivery mode includes a unicast service, a real-time multicast service, and a non-real-time multicast service. The unicast service includes a base pattern. The base pattern of the unicast service has a string type and includes a base URL (@baseURL). The real-time multicast service includes a base pattern. The base pattern has a string type and includes a base URL (@baseURL). The non-real-time multicast service includes a base pattern. The base pattern has a string type and includes a base URL (@baseURL). The broadcast signal reception apparatus may acquire a service according to each delivery mode based on the base URL (@baseURL).

In order for the broadcast signal transmission and reception apparatuses according to embodiments of the present disclosure to provide a multicast ABR service, URL information capable of receiving the MPD in broadcast discovery information in a service initialization step is needed. The broadcast signal reception apparatus receives the MPD to consume an ABR service. Since the MPD does not contain ID information about a delivery method, an arbitrary string may be included in the MPD. That is, information of a bit stream may be described through representation in the MPD. Which segment is being received or to which URL a request should be made may be defined through a segment URL

Since an access address differs according to a protocol or a broadcast type, a delivery method may be distinguished by a URL type. FIG. 37 illustrates an embodiment of defining segment naming using the base URL as one of embodiments of the MPD.

A base URL of a higher layer is a string attached to the front of a segment address and a string uniquely defining each representation may be provided by defining an additional base URL of the representation. The base URL may be used as a method of defining the delivery method.

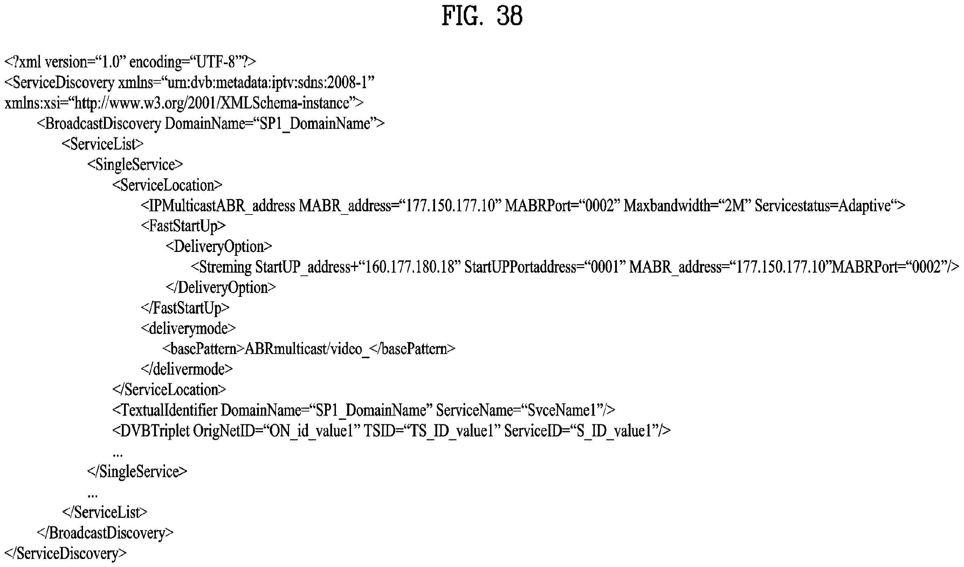

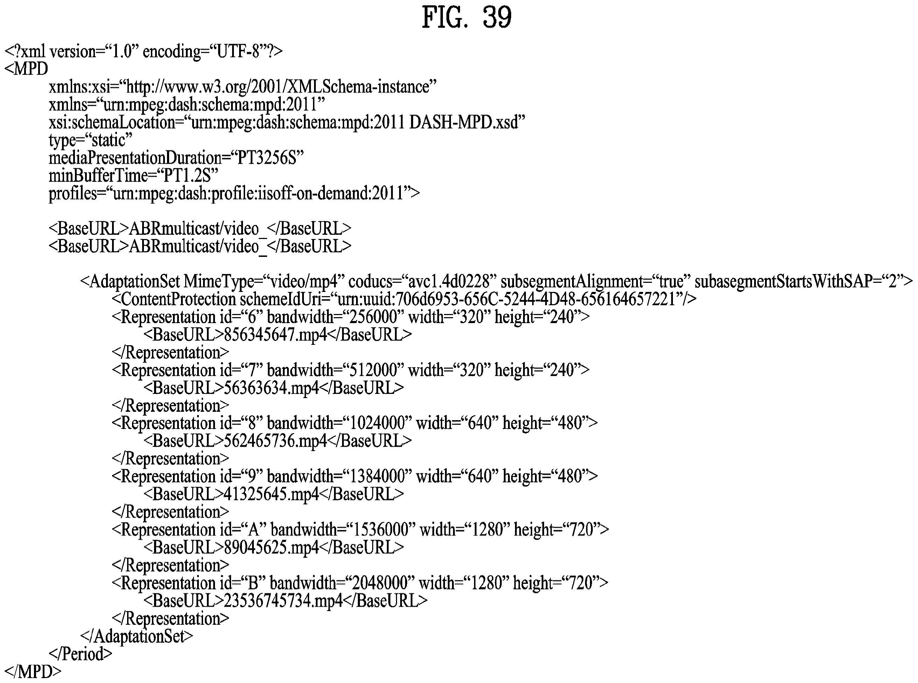

There is no method of defining broadcast, multicast, and unicast in a current MPD. If a pattern of the base URL is defined and the pattern of the URL is determined according to a specific method, the MPD may identify the delivery method. The definition of the URL pattern may be provided by being included in IPTV service initialization information. The broadcast signal transmission and reception apparatuses according to embodiments of the present disclosure may define URL information as illustrated in FIGS. 38 and 39 based on the above-described broadcast discovery information schema or service discovery information. Through this information, the broadcast signal reception apparatus may identify the delivery method and provide an ABR service by applying a framework having a buffer model suitable for the delivery method.

FIG. 38 illustrates a service discovery configuration for a single service.

Service discovery information includes domain names and includes service lists for the domain names. The service lists may include sub-configuration information for a single service among the service lists, as illustrated in FIG. 38.

The single service includes a service location, a textural identifier, and a DVB triplet. The service location includes IPMulticastABR_address. IPMulticastABR_address includes an MABR address for MABR, an MABR port number, a maximum bandwidth, and a service status. The service location also includes information for fast startup. Fast startup includes a delivery option and may include streaming information according to the delivery option. The streaming information includes a startup address, a startup port address, an MABR address, and MABR port information. The service location includes a delivery mode. The delivery mode may represent ABR multicast video as a base pattern. The broadcast signal reception apparatus may acquire and consume ABR multicast video.

FIG. 39 illustrates a configuration of an MPD.

The MPD includes a base URL for ABR multicast video. An adaptation set of the MPD includes content protection, information related to representation per representation identifier, and a base URL. The broadcast signal reception apparatus may provide an ABR service based on the base URL

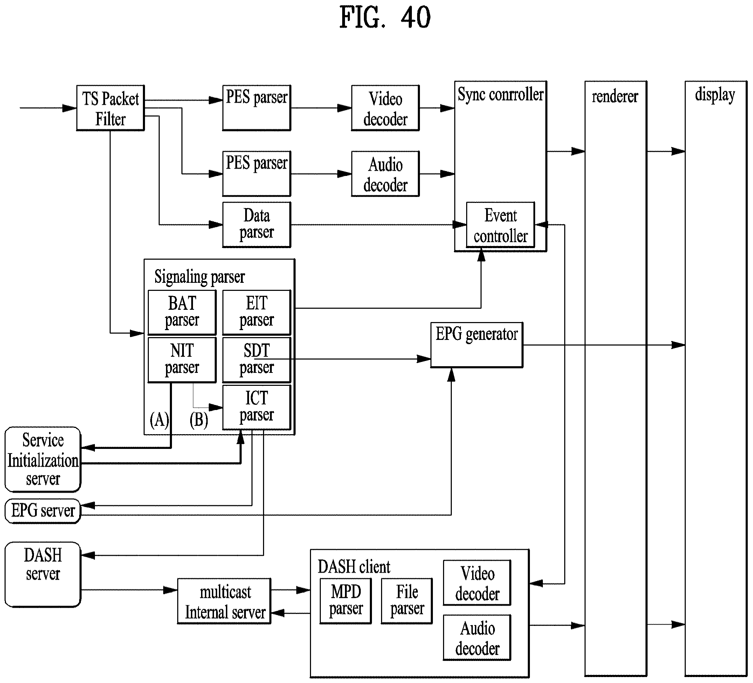

FIG. 40 illustrates a configuration for providing a service incorporating an Internet channel.

A structural diagram of FIG. 40 corresponds to the structural diagram described above in FIG. 5. The broadcast signal reception apparatus according to embodiments of the present invention provides a channel guide integrated with a T, S, and/or C channel through native code reception based on open Internet. In the European broadcast standard DVB based on the MPEG-2 system, a service discovery method and EPG information are described using DVB SI. Here, the DVB SI includes information about tables such as a network information table (NIT), a bouquet association table (BAT), a service description table (SDT), and an event information table (EIT).

The NIT signals receivable networks. The NIT includes information for service discovery of a network. A main channel network including a T channel, an S channel, and a C channel provides a route capable of receiving Internet service discovery information. A service discovery process uses this route. The service discovery information includes an MPD manifest access address capable of receiving an MPEG-DASH segment and information for supporting a protocol for segment transmission.

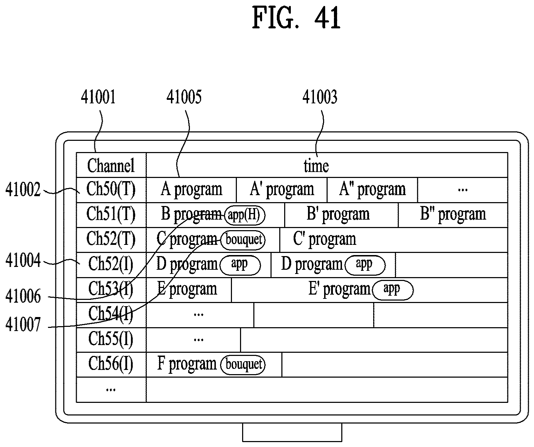

FIG. 41 illustrates a configuration of an integrated channel guide UI.

The broadcast signal reception apparatus according to embodiments of the present disclosure may display an integrated EPG as illustrated in FIG. 41 to provide UI/UX to a user.

EPG information 41001 may be displayed on a screen of a main device. The EPG information 41001 may also be displayed on a screen of a second device. The EPG information 41001 may be displayed on a partial area on the screen. The EPG information 41001 may overlap and be displayed on a display area for service data which is being viewed by a user. The EPG information 41001 may be displayed in an area different from the display area for the service data which is being viewed by the user.

The EPG information 41001 may be displayed based on channel information 41002 and time information 41003.

The channel information 41002 includes not only a T channel, an S channel, and a C channel, but also an Internet channel 41004. The channel information 41002 may provide integrated channel information. The channel information 41002 may provide integrated channel numbers to the user based on logical channel numbers. The user may linearly recognize a plurality of integrated channels.

The time information 41003 includes time for information represented in the EPG information 41001. The time information 41003 includes all of present time, past time, and future time. The time information 41003 may display time for content and display information about current time through UI/UX.

Program information 41005 represents a program included in the channel information 41002. The program information 41005 may be displayed based on the time information 41003. The program information 41005 may additionally include information related to a program. The program information 41005 may include information 41006 about an application related to a program. The program information 41005 may include information 41007 about a bouquet related to a program. The broadcast signal reception apparatus may identify a program based on time and a channel based on electronic service guide (ESG) information and inform the user of information indicating that an application for each program is executable or information indicating that a bouquet is present for each program.

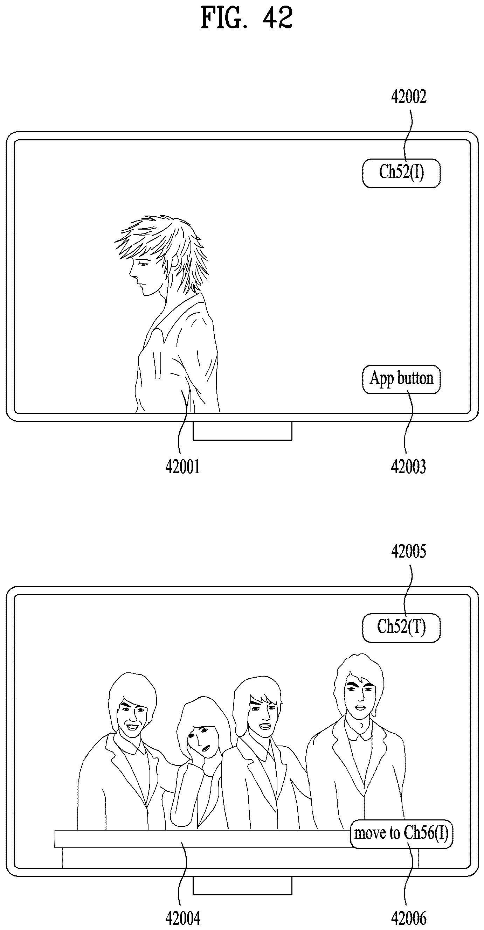

FIG. 42 illustrates a channel change UI method in an integrated channel system.

FIG. 42 illustrates a method of using one UI/UX by integrating an Internet-only channel and a traditional TV channel by the broadcast signal reception apparatus based on the ESG of FIG. 41.

The channel guide information or ESG 41001 may include both an Internet channel and a terrestrial channel.

When an Internet channel number and a terrestrial channel number are the same, the ESG 41001 may include a received channel route. For example, both a terrestrial channel and an Internet channel may include channel 52. As illustrated in FIG. 41, the ESG 41001 may differently represent a text color or a text form depending on a received channel route.

A connected TV may receive an advanced application service while a corresponding program is in progress.

The broadcast signal reception apparatus according to embodiments of the present disclosure may display existence of the advanced application service using the EPG information 41001. An application may provide a product advertisement associated with a program through additional data while the user is viewing the program. The application may provide a function to move to a linked channel. The application may provide rich media such as preview or replay.

The EPG information 41001 may provide a scalable linkage service through bouquet information between channels or cause the user to select a program that provides audio of another language. The user may receive various media services regardless of channels received through the integrated EPG guide 41001.

Display 42001 in FIG. 42 includes a channel number and channel route 42002. The display 42001 displays a program of number 52 for an Internet channel. The display 42001 displays information 42003 indicating that an application related to the program is executable.

Display 42002 in FIG. 42 includes a channel number and channel route 42005. The display 42002 displays a program of number 52 for a T channel. The display 42002 includes information 42006 indicating that the T channel may move to number 56 for the Internet channel.

The broadcast signal transmission and reception apparatuses according to embodiments of the present disclosure may display a DVB channel 42005 using logical channel number 52 and, at the same time, display the Internet channel or I channel 42002 using the same logical channel number 52. An embodiment of displaying the DVB channel and the I channel may be differently provided to the user according to a specific condition of a service, for example, a country, a region, user selection, or user preference.

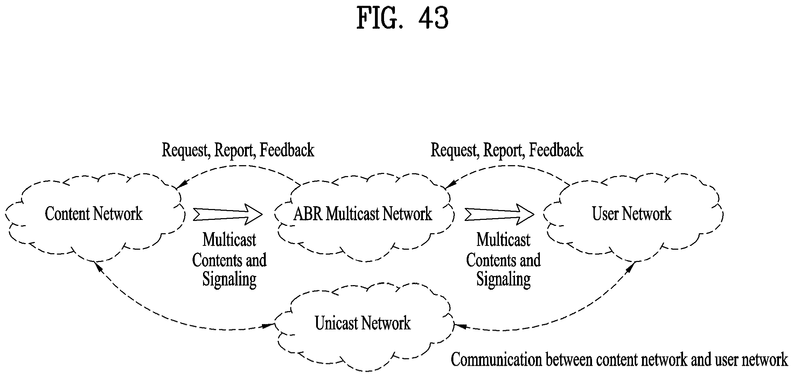

FIG. 43 illustrates a network structure for adaptive media streaming.

The broadcast signal transmission and reception apparatuses according to embodiments of the present disclosure support adaptive media streaming over an IP-based multicast network. Supported networks are as follows in terms of functions.

Networks include a content network, an ABR multicast network, and a user network in consideration of functional aspects and network access for adaptive multicast. Each network may further include an additional network for supporting functions other than adaptive media streaming.

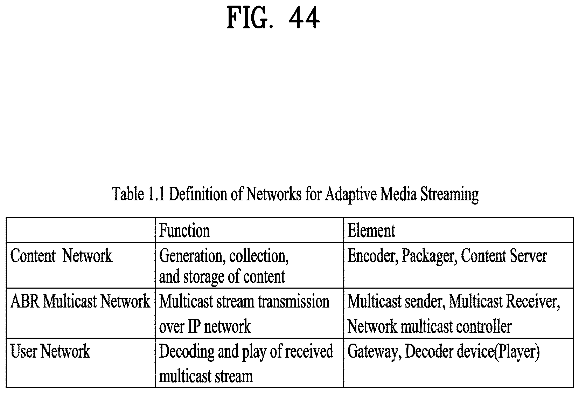

FIG. 44 illustrates types of networks.

A content network is a network for generating, collecting, and storing content and includes an encoder, a packager, and a content server.

An ABR multicast network is a network for transmitting a multicast stream over an IP network and includes a multicast sender, a multicast receiver, and a network multicast controller.

A user network is a network for decoding and playing a received multicast stream and includes a gateway and a decoder device (player).

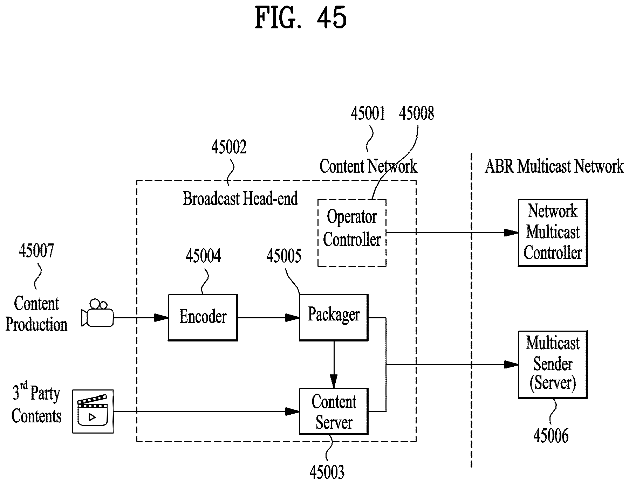

FIG. 45 illustrates a configuration of a content network for broadcasting.

A content network 45001 may mainly perform functions such as generation, collection, and packaging of content for adaptive multicast streaming. The content network may include various content sources. The content network may include a broadcast head-end 45002 that provides terrestrial and cable broadcast services in order to provide a broadcast content service.

The content network may include a satellite reception network for receiving a locally remote service. In addition, the content network may include a content server 45003 for serving prestored content and also include a CDN for providing a media service.

To this end, the content network may generate and transmit a signaling message and a control message, related to content. Separate signaling or control messages may be exchanged between multiple nodes belonging to a network for proper interaction of content, signaling, or control messages and may not be delivered to other networks. These signaling and control messages may be referred to as internal network signaling.

The content network may include the broadcast head-end. Content generated by a broadcaster may be transmitted to a multicast sender 45006 through an encoder 45004 and a packager 45005 so that the content may be multicast or stored in the content server 45003 or may be transmitted to the multicast sender if necessary.

The encoder 45004 encodes content.

The packager 45005 may convert encoded content and data into a format suitable for multicast transmission and, when necessary, generate signaling that may be received by a receiver or a device belonging to a network. A media segment generated by the packager may be directly transmitted to the multicast sender 45006 and may be multicast. However, the corresponding segment is stored in the content server when the segment need not be transmitted immediately.

The head-end 45002 of the broadcaster may store media data and signaling related thereto and include a content server 45003 for this purpose. The content server 4503 may store third party content and use the third party content for multicast if necessary. In the case of stored content, a separate encoding process may not be required. Accordingly, the content server 45003 may store a media segment and a file that have undergone encoding or packaging of content and transmit the media segment and file upon request. According to embodiments, only encoding may be performed and a packaging process may be required according to a transmission network type.

An operator controller 45008 manages a content production 45007 and a content server 45003 and appropriately manages and controls a sequence of processes related to multicasting. The operator controller 45008 collects control and signaling data for multiple devices and nodes in a content network and delivers the control and signaling data to a multicast network if necessary, thereby enabling signaling and control related to multicast. In addition, the operator controller 45008 may receive and process unicast information transmitted by a decoder device or a player and use the unicast information for multicast.

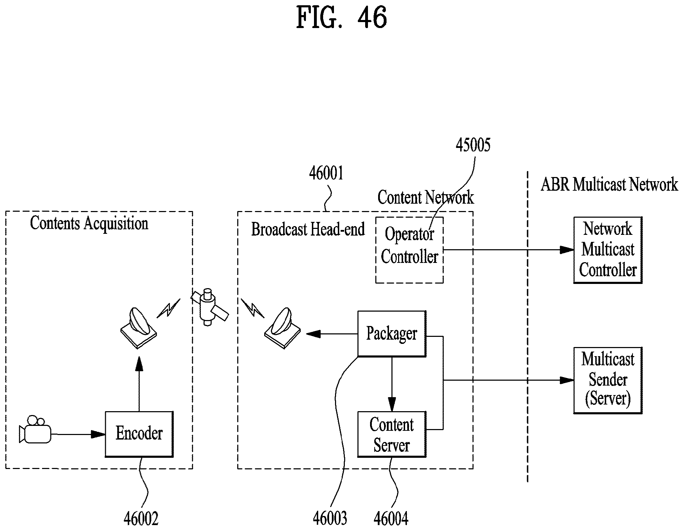

FIG. 46 illustrates a configuration of a content network for satellite broadcasting.

A head-end 46001 of a broadcaster that provides terrestrial and cable broadcasting services may include a satellite reception network for receiving a locally remote service. A satellite transmission side may also be a head-end of another broadcaster and, in this case, the satellite transmission side may be a network in which head-ends of a plurality of broadcasters are connected. Content received through a satellite system may be transmitted to a multicast sender through encoding and packaging and may then be multicast, or may be stored in a content server and may be transmitted to the multicast sender if necessary.

An encoder 46002 encodes content. The encoder 46602 may be connected to a satellite transmission apparatus for relaying broadcast data through a satellite.

The broadcast signal transmission and reception apparatuses according to embodiments of the present disclosure use a satellite transmission/reception system as illustrated in FIG. 46 for live broadcasting (ex. overseas sports, concert relaying, news, etc.) in locally remote regions. To this end, a separate satellite transmission related protocol and transmission method may be used. Data passing through the satellite transmission/reception system is delivered to a packager.

A packager 46003 may convert content and data received through a satellite receiver into a format suitable for multicast transmission and generate signaling that may be received by a receiver or a device belonging to a network if necessary. A media segment generated by the packager 46003 may be directly transmitted to a multicast sender and may be multicast. However, if the segment is data that does not need to be transmitted immediately, the segment is stored in a content server.

Although a content server 46004 directly transmits data passing through the packager during live broadcasting in a locally remote region to the multicast sender, the head-end of the broadcaster may store media data and signaling related thereto to use corresponding content and include a content server for this purpose. Therefore, the content server may store a media segment and file that have encoded or packaged content and transmit the media segment and file upon request. According to embodiments, only encoded data may be stored and a packaging process may be required according to the type of a network to be transmitted.

An operator controller 46005 manages a content production and a content server and appropriately manages and controls a sequence of processes related to multicasting. The operator controller collects control and signaling data for multiple devices and nodes in a content network and delivers the control and signaling data to a multicast network if necessary, thereby enabling signaling and control related to multicast. In addition, the operator controller 46005 may receive and process unicast information transmitted by a decoder device or a player and use the unicast information for multicast.

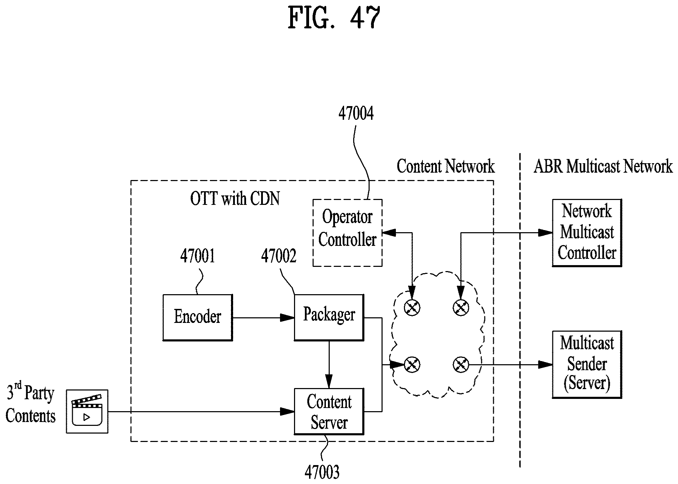

FIG. 47 illustrates a configuration of a content network for a CDN and OTT.

The broadcast signal transmission and reception apparatuses according to embodiments of the present disclosure may consider an OTT-based content network that mainly provides a video content service using an IP network. The OTT may be connected to the CDN for efficient use of network resources. The OTT content is stored in a content server through encoding and packaging. Therefore, content stored in the OTT may be directly delivered to a multicast sender for multicasting or may be delivered to a multicast sender via the CDN.

An encoder 47001 encodes content. The OTT may provide a live service or compose content to be stored in the content server.

A packager 47002 may convert the encoded content and data into a format suitable for multicast transmission and generate signaling that may be received by a receiver or a device belonging to a network if necessary. A media segment generated by the packager 47002 may be directly transmitted to a multicast sender and may be multicast. However, if the segment is data that does not need to be transmitted immediately, the segment is stored in a content server.

A content server 47003 may store media data and signaling related thereto that the OTT is to provide. The media data stored in the content server may be third party content and may be used for multicast if necessary. In the case of stored content, a separate encoding process may not be required. Accordingly, the content server may store a media segment and a file that have undergone encoding or packaging of content and transmit the media segment and file upon request. According to embodiments, only encoding may be performed and a packaging process may be required according to a transmission network type.

An operator controller 47004 properly manages and controls a sequence of processes related to multicast and unicast data transmission. The operator controller collects control and signaling data for multiple devices and nodes in a content network and delivers the control and signaling data to a multicast network if necessary, thereby enabling signaling and control related to multicast. In addition, the operator controller 45008 may receive and process unicast information transmitted by a decoder device or a player and use the unicast information for multicast. The operator controller may be connected to the OTT and CDN through a separate controller and communicate with the OTT and CDN.

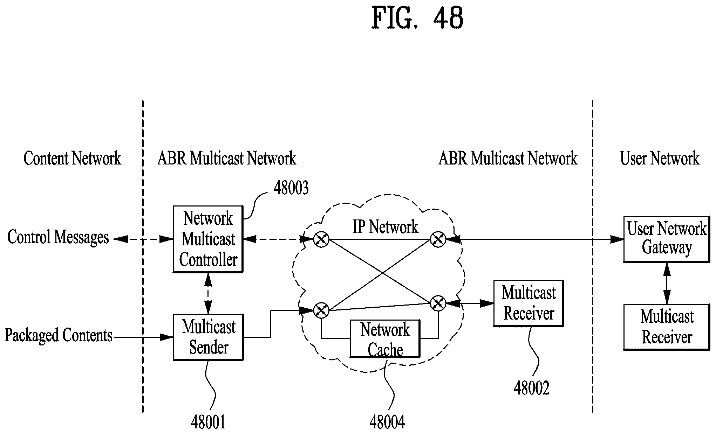

FIG. 48 illustrates a configuration of an ABR multicast network for a cable network.

The broadcast signal transmission and reception apparatuses according to embodiments of the present disclosure may use an ABR multicast network. The ABR multicast network is a network that multicasts content delivered from a content network in an actual IP network. In this case, the IP network includes a managed network in which QoS is managed by a network provider and unauthorized traffic may be restricted and includes an unmanaged network contrary to the managed network.

The IP network is irrelevant to a wired or wireless access method. When using the IP network for multicast, an IP network connected to a content network and an IP network connected to a user network may be different and, to this end, an access protocol between ISPs that provide respective networks may be applied. Even in this case, a sender and a receiver for multicast content are transparent. That is, output data of a sender is the same as input data of a receiver, even though the input data passes through several ISP networks and nodes over a network.

The multicast network is a network for transmitting and receiving an actual multicast stream and may include a multicast sender (server), a multicast receiver (client), and a multicast network controller, regardless of characteristics of a transmitted network. The multicast network may pass through multiple networks depending on the location or access state of the sender and receiver of the multicast network. A separate protocol suitable for a route over a corresponding network may be used.

The multicast stream may generally be delivered over a wired IP network. The multicast sender and receiver may use a network provided by an ISP. According to embodiments, there may be IP networks managed by a plurality of ISPs. The multicast sender, receiver, controller, and an IP network manager may be determined according to an access protocol.

A multicast sender 48001 transmits content data to each multicast receiver. The multicast sender 48001 receives packaged content from a content network and transmits the packaged content to multiple multicast receivers using a multicast protocol.

A multicast receiver 48002 receives the content data transmitted by the multicast sender and delivers the content data to a playable decoder device. The multicast receiver 48002 may cache the content data for efficient play of the decoder device. According to embodiments, the multicast receiver may be configured with the same devices as the decoder device. The multicast receiver may receive a multicast stream through a gateway of a user network. In this case, the multicast receiver may be a constituent element of the user network.

A multicast network controller 48003 controls the ABR multicast network. The multicast network controller 48003 controls content transmission and related session information of the multicast sender 48001 and manages and delivers signaling information about configuration of each sender and receiver. The multicast network controller 48003 may be configured with a separate protocol from multicast content and may be connected to each sender and receiver. In order to simplify a connection to the sender and the receiver, the multicast network controller 48003 may be connected only to the sender and signaling information transmitted to the receiver may follow a content multicasting protocol.

A network cache 48004 refers to a node or device that functions as a network cache between the multicast sender and the multicast receiver in the IP network.

When performing multicast transmission, the network cache 48004 stores content in an appropriate range for efficient use of network resources and delivers a stream to the receiver. According to embodiments, the network cache 48004 may perform an update procedure for cached content together with the multicast sender.

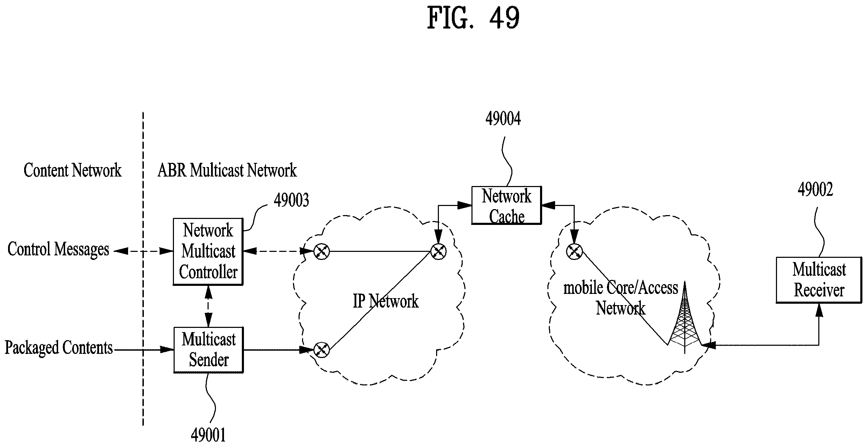

FIG. 49 illustrates a configuration of an ABR multicast network for a mobile network.

The broadcast signal transmission and reception apparatuses according to embodiments of the present disclosure may use a mobile access network. Although a multicast stream is generally transmitted over a wired IP network, a mobile receiver may additionally use the mobile access network. For IP multicast, the mobile access network uses a network that supports IP transmission. In addition, in order to service a multicast stream to a plurality of mobile receivers, the mobile network may also support multicast.

A multicast sender 49001 transmits content data to each multicast receiver. The multicast sender 49001 receives packaged content from a content network and transmits the packaged content to multiple multicast receivers using a multicast protocol.

A multicast receiver 49002 receives the content data transmitted by the multicast sender and delivers the content data to a playable decoder device. The multicast receiver 49002 connected to the mobile access network may receive a radio signal for the mobile access network. The multicast receiver connected to the mobile access network may be connected to a decoder device through another radio access protocol. In this process, the multicast receiver 49002 may cache the content data for efficient playback by the decoder device. According to embodiments, the multicast receiver may be configured with the same devices as the decoder device.

A multicast network controller 49003 controls an ABR multicast network. The multicast network controller 49003 controls content transmission and related session information of the multicast sender and manages and delivers signaling information about configuration of each sender and receiver. The multicast network controller 49003 may be configured with a separate protocol from multicast content and may be connected to each sender and receiver. In order to simplify a connection to the sender and the receiver, the multicast network controller 48003 may be connected only to the sender and signaling information transmitted to the receiver may follow a content multicasting protocol.

In addition, the multicast controller may be included in each of the IP network and the mobile access network and may transmit and receive control and signaling information for the corresponding network. Communication between multicast controllers may be performed using a separate protocol for each multicast controller.

A network cache 49004 may include a node or device that functions as a network cache between the multicast sender and the multicast receiver. The network cache may be configured anywhere in each network and may also be configured with a plurality of caches. In addition, some nodes of each network may simultaneously serve as the cache. During multicast transmission, the network cache 49004 may store content in an appropriate range for efficient use of network resources and send content to the receiver. According to embodiments, the network cache 49004 may perform an update procedure for cached content together with the multicast sender.

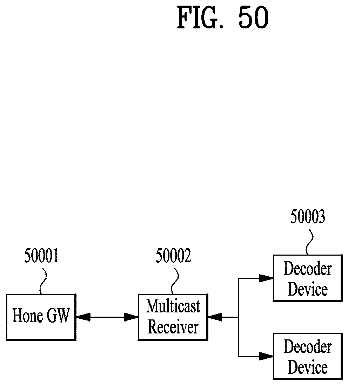

FIG. 50 illustrates a configuration of a user network for a home network.

The user network may be regarded as a network between devices that receive data through a multicast network and consume content for the data. The user network may be configured in various ways depending on the configuration of the user network and a multicast service and a multicast receiver may be part of the user network in some cases. An ABR multicast receiver may be configured as part of the user network. When the multicast receiver is included in the user network, multicast content may be received through a device serving as a gateway or proxy of the user network. In this case, the gateway or proxy may be regarded as part of the ABR multicast network.

The multicast receiver may serve as another server or sender in the user network. As a result, multicast content may be consumed by various decoder devices of the user network, and multicast streaming may be performed even when multicast content is incapable of being received by the decoder devices.

Data transmitted through multicast may be directly received by the receiver. However, if a device belonging to a home network serves as the receiver, multicast data may be received through the home gateway.

When multiple devices are configured in the home network, a home gateway (GW) 50001 may receive data from an ABR multicast network. The home GW 50001 may transmit and receive data to and from an external network and also serve as a proxy. When the home GW 50001 serves as the proxy, the home GW may cache data to be received by the multicast receiver.

A multicast receiver 50002 may be a constituent element of the ABR multicast network described above but may be located inside the home network due to network configuration. The multicast receiver may serve as the proxy depending on a configuration of the home network. When the multicast receiver is incapable of directly playing a multicast stream, a decoder device may be additionally connected to play the stream and the multicast receiver may be connected to a plurality of decoder devices to transmit the multicast stream.

A decoder device 50003 may be defined as a device that plays the multicast stream for a user. Multiple decoder devices may be connected to the multicast receiver and transmit and receive unicast or multicast data. The decoder device 50003 may access a unicast network separately from a network that receives the multicast stream and transmit a request or a report to a content network or an ABR multicast network. A decoding module and a screen may be configured as a separate device according to configuration. The decoder device 50003 may also be configured with the same device as the multicast receiver.

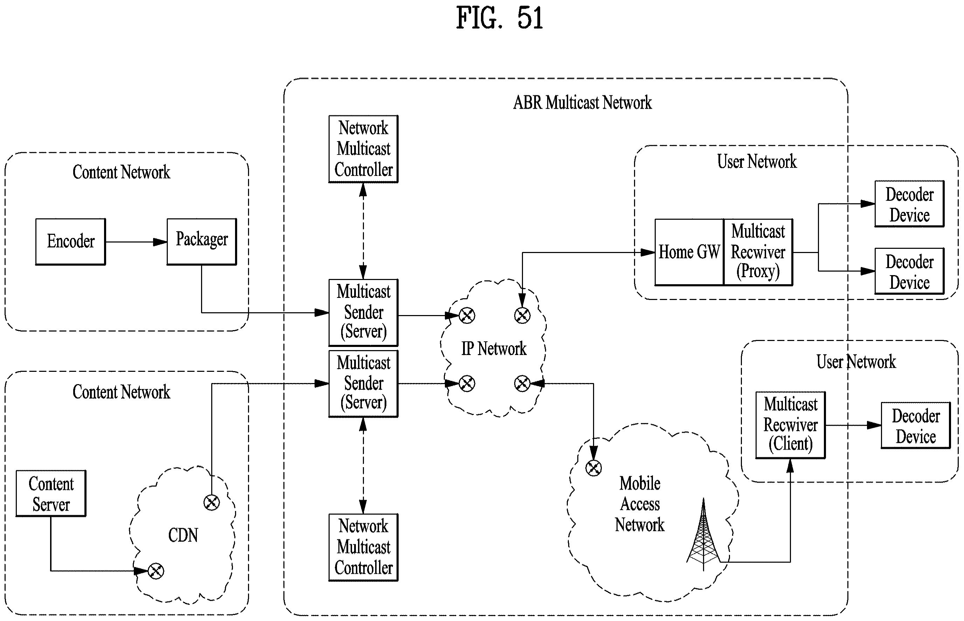

FIG. 51 illustrates a network structure for adaptive media streaming.

FIG. 51 illustrates an example of an overall network structure for adaptive media streaming. Nodes or entities for the broadcast signal transmission and reception apparatuses according to embodiments of the present disclosure may have a logical configuration and each node may be configured as a separate device. According to embodiments, each node may be configured to operate in a device such as an adjacent node. A plurality of networks may be connected to each other and exchange signaling and management information with each other for efficient multicast streaming.

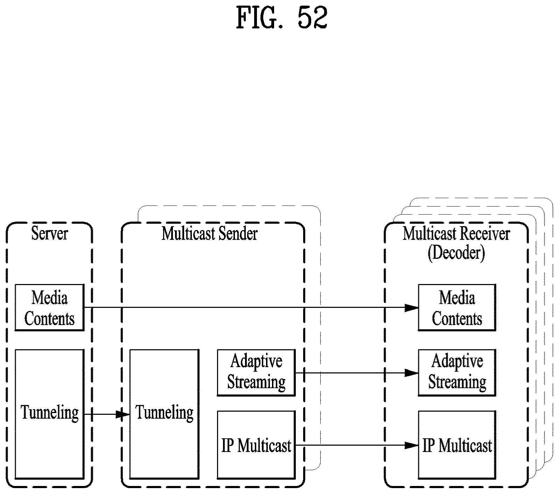

FIG. 52 illustrates a protocol for adaptive media streaming.

A protocol may be largely divided into a media protocol through which actual media is transmitted and a signaling protocol for controlling each node or entity to transmit the media or transmitting configuration information about the media to multiple nodes and entities including a receiver. Generally, signaling and control information is transmitted using the signaling protocol but, when a receiver receives media content through a single connection, a separate signaling route is not configured. Therefore, in this case, the media content may be delivered through the media protocol.

FIG. 52 illustrates the protocol for adaptive media streaming according to embodiments of the present disclosure. FIG. 52 illustrates a conceptual protocol for delivering media content. In this case, a multicast receiver and a decoder (media player) are composed of the same devices and modules. This protocol may deliver media content generated from a content network or stored in a server to a decoder device of a user and transmit the media content through multicast so as to be delivered to multiple users.

In an adaptive streaming environment, content generation and multicast transmission/reception processes may be separately performed. Therefore, a protocol for delivering generated content to a node and an entity (a multicast sender in the figure) performing multicast transmission and a protocol for transmitting and receiving the content through multicast in an adaptive streaming format may be defined. In addition, content data passes through several nodes or entities and an appropriate protocol is required for each node and entity. In this case, the protocol for the node or entity may mainly use a protocol that efficiently transmits data, rather than media, to the next node in real time and this protocol may be referred to as a tunneling protocol. Therefore, as illustrated in the figure, the tunneling protocol may be defined between the server and the multicast sender. In this case, although media content is delivered through a payload of the tunneling protocol, the tunneling protocol itself may operate regardless of a format of the corresponding media content.

In the multicast sender, a protocol that supports adaptive streaming may be defined for the multicast receiver and an IP multicast method may be supported to deliver adaptive streaming to multiple multicast receivers. IP multicast may also be defined as a combination of TCP/IP and UDP/IP according to the adaptive streaming protocol.

When the multicast receiver serves as both a decoder and a player, adaptive streaming data is obtained by receiving an IP multicast packet, and data corresponding to a media content format is decoded and played from the adaptive streaming data.

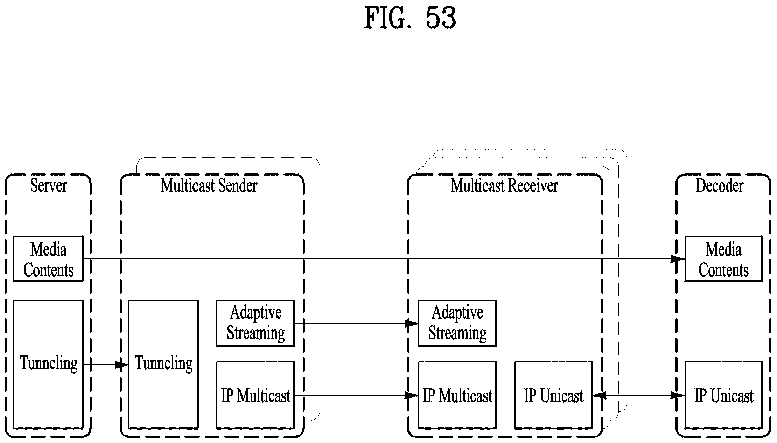

FIG. 53 illustrates a protocol for adaptive media streaming.

FIG. 53 illustrates an example of a protocol for delivering media content. In this case, a multicast receiver and a decoder (media player) are composed of different devices or modules. The media content generated from a content network or stored in a server is transferred to a decoder device of a user through the multicast receiver and may be multicast so as to be delivered to a plurality of multicast receivers or users.

In an adaptive streaming environment, content generation and multicast transmission/reception processes may be separately performed. Therefore, a protocol for delivering generated content to a node or an entity (a multicast sender in the figure) performing multicast transmission and a protocol for transmitting and receiving the content through multicast in an adaptive streaming format may be defined. In addition, content data passes through several nodes or entities and an appropriate protocol is required for each node and entity. In this case, the protocol for the node or entity may mainly use a protocol that efficiently transmits data, rather than media, to the next node in real time and this protocol may be referred to as a tunneling protocol. Therefore, as illustrated in the figure, the tunneling protocol may be defined between the server and the multicast sender. In this case, although media content is delivered through a payload of the tunneling protocol, the tunneling protocol itself may operate regardless of a format of the corresponding media content.

In the multicast sender, a protocol that supports adaptive streaming may be defined for the multicast receiver and an IP multicast method may be supported to deliver adaptive streaming to multiple multicast receivers. IP multicast may also be defined as a combination of TCP/IP and UDP/IP according to the adaptive streaming protocol.

When the multicast receiver and the decoder (player) are configured as separate devices or modules, the multicast receiver may obtain adaptive streaming data by receiving an IP multicast packet and transmit the adaptive streaming data back to the decoder. In this case, an IP unicast protocol may be defined between the multicast receiver and the decoder. Content data received by the multicast receiver is transmitted back to the decoder through IP unicast and the decoder decodes and plays data corresponding to a received media content format.

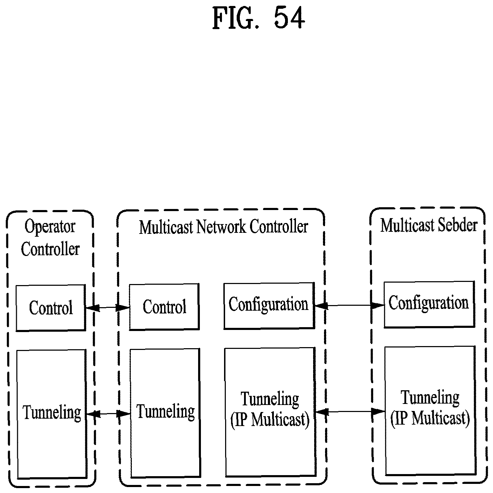

FIG. 54 illustrates a protocol for signaling and control of a multicast sender in FIG. 52.

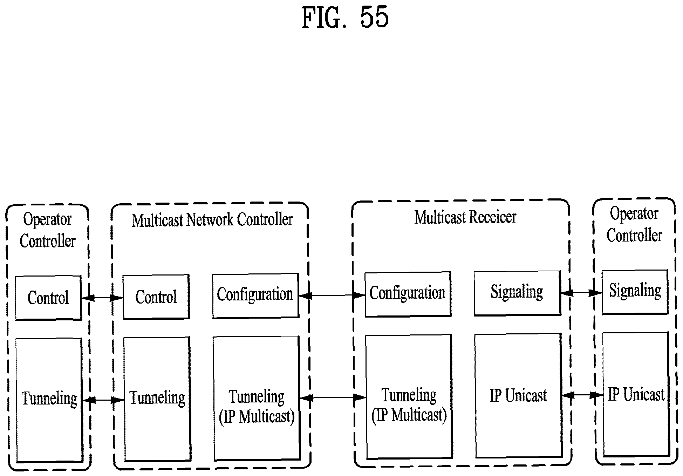

FIG. 55 illustrates a protocol for signaling and control of a multicast receiver and a decoder in FIG. 52.

In the network structure described above, a control protocol may be defined between an operator controller included in a content network and a network controller included in a multicast network. In order to generate appropriate control and management messages from the operator controller, the network controller may send a response or report message for a control message to the operator controller. Therefore, a tunneling protocol for sending the control message may be configured in both directions. A single operator controller may send and receive control messages to and from multiple multicast controllers. Each multicast network controller may be managed by a separate operating entity.

Network configuration-related information from the network controller may be transmitted to a multicast sender and a multicast receiver. The network controller may include configuration information about network resources, mapping information between nodes in the network, and routing information. The network controller may transmit configuration information received from the operator controller to the multicast sender or the multicast receiver. In this process, a protocol for transmission from the multicast controller to the multicast sender and a protocol for transmission from the multicast controller to the multicast receiver may be distinguished.

IP multicast may be configured in order for one network controller to deliver a configuration message to multiple multicast senders and multicast receivers. Access and statistical information collected from the multicast senders and multicast receivers may be reported to the multicast network controller. This process may be configured as a unicast protocol because the process may be independently performed by each multicast sender and multicast receiver. Such series of control and configuration information may be dynamically updated and may be transmitted immediately or through scheduling.

The multicast receiver may define a signaling protocol for transmitting received adaptive streaming data back to the decoder device. In order to provide separate information to individual decoder devices, an IP unicast protocol may be defined. Signaling for items requested by the decoder device may be delivered using the IP unicast protocol. Therefore, a bidirectional protocol may be defined between the multicast receiver and the decoder device.

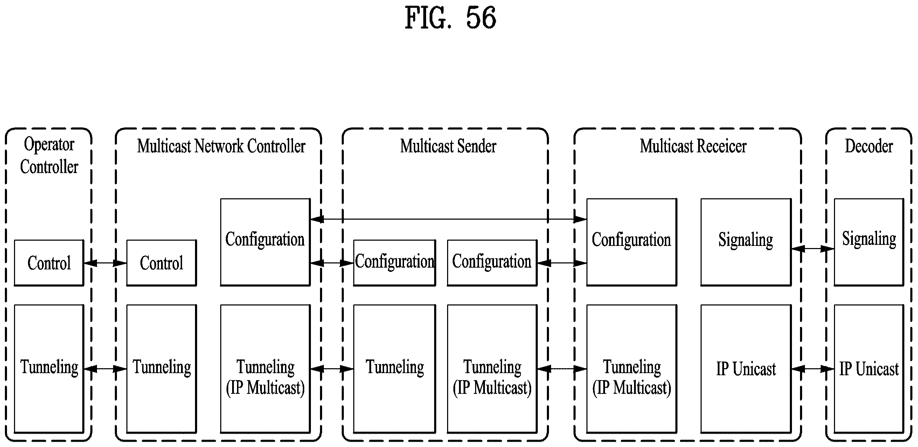

FIG. 56 illustrates a protocol for signaling and control in FIG. 53.

FIG. 56 illustrates the case in which a multicast network controller is not directly connected to a multicast receiver but is connected to the multicast receiver via a multicast sender.

Network configuration-related information from the network controller may be transmitted to the multicast sender and multicast receiver. The network controller may include configuration information about network resources, mapping information between nodes in the network, and routing information. The network controller may transmit configuration information received from an operator controller to the multicast sender or the multicast receiver. However, since the multicast controller is connected only to the multicast sender and is not connected to the multicast receiver, the multicast sender may forward the configuration message transmitted from the network controller to the multicast receiver. In the multicast network controller, a configuration-related protocol (or message set) may be divided into a protocol for transmission to the multicast sender and a protocol for transmission to the multicast receiver.

IP multicast may be configured in order for one network control to deliver a configuration message to multiple multicast senders and multicast receivers. Access and statistical information collected from the multicast senders and multicast receivers may be reported to the multicast network controller. This process may be configured as a unicast protocol because the process may be independently performed by each multicast sender and multicast receiver. Such series of control and configuration information may be dynamically updated and may be transmitted immediately or through scheduling. Information such as a report transmitted from the multicast receiver to the multicast network controller may be delivered to the multicast network controller through the multicast sender, and the multicast sender may forward a report message transmitted from the multicast receiver to the network controller. Other protocol operations are the same as those of FIG. 52 described above.

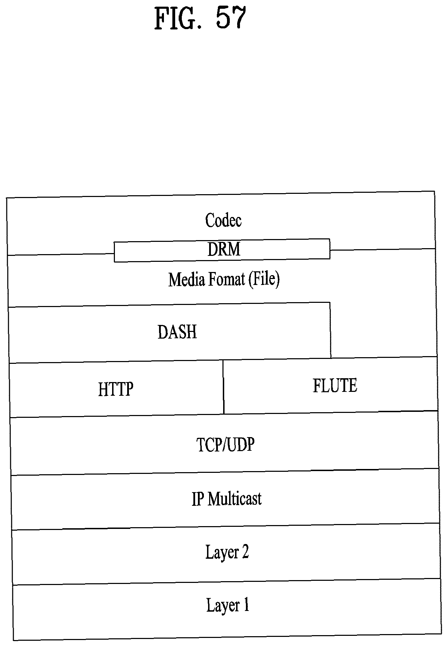

FIG. 57 illustrates a protocol stack for IP multicast.

FIG. 57 illustrates an example of a protocol for transmitting media data through an IP network. A protocol and packet format corresponding to each layer may be determined. Each protocol may be independently configured or may be appropriately combined with specific protocols for mutual operation.

An encoder compresses video and audio data, converts the compressed video and audio data using an appropriate codec, and delivers the converted video and audio data to a packager. These processes are mainly performed inside a transmission system. For multicast of the video and audio, an efficient codec may be used. A codec such as HEVC or AVC may be used for the video data and a codec such as AAC, AC4, or MPEG-H may be used for the audio data.

Each codec may be packaged in a format suitable for transmission or storage. For this purpose, a format in the form of ISOBMFF, CMAF, or MPEG-2 TS may be used. Digital rights management (DRM) may be added so that only corresponding content may be played in a specific receiver while content data encoded using a codec is being packaged. An authentication key value used for DRM may be delivered through a separate link or channel.

A protocol for directly transmitting a file, such as FLUTE, may be applied to media data configured in a file format according to a transmission method. Alternatively, a protocol supporting adaptive streaming, such as DASH, may also be used. A lower layer protocol may be configured according to a configuration of FLUTE or DASH. For example, when DASH is applied, HTTP may be applied to the lower layer protocol or FLUTE may be configured as the lower layer protocol by regarding a DASH segment as a file.

For IP multicast, TCP/IP or UDP/IP may be configured according to a higher protocol configuration, and IGMP, which may manage IP multicast group subscription in a multicast receiver, may be combined. Layer 2 and Layer 1 protocols may be defined according to each transport link. That is, an optimized protocol may be configured according to a link between a node and an entity configured over a network. For example, in a LAN environment, Layer 2 protocol may be defined as ethernet and Layer 1 protocol may be defined as a CSMA/CD protocol.

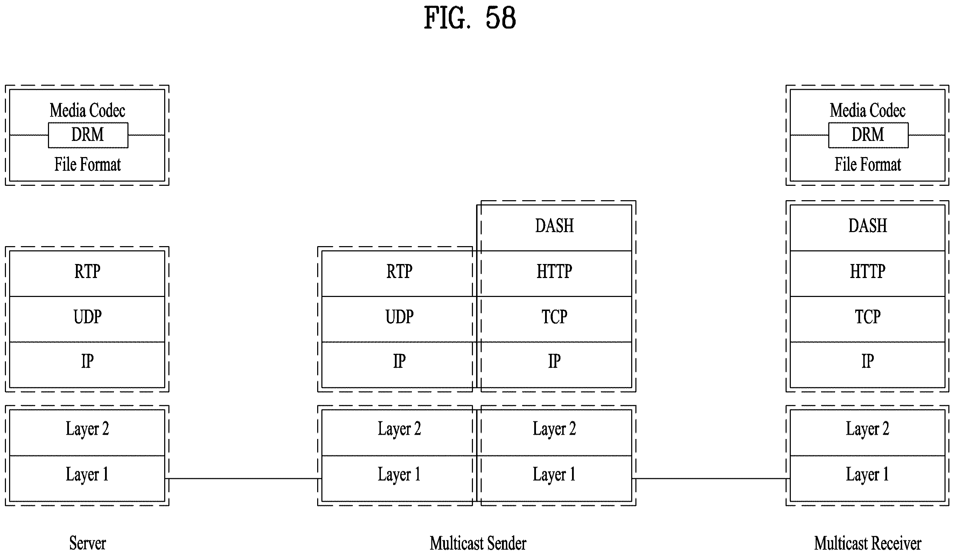

FIG. 58 illustrates a media delivery method for IP multicasting.

FIG. 58 illustrates a specific embodiment of a protocol according to a route through which media content is transmitted based on the aforementioned protocol. In this case, a multicast receiver is configured with the same devices and modules as a decoder (media player).

In a server, a protocol for content may mainly define a protocol for a media codec and a protocol for a file format. The media codec may have video, audio, or other encoding formats. Video codecs such as HEVC and AVC may be defined and audio codecs such as AAC, AC4, and MPEG-H may be defined. In the case of the protocol for the file format, a format for transmitting or storing a codec format in a file format may be defined. For this purpose, file formats such as ISOBMFF and CMAF may be used. When an existing broadcasting network is connected, the file format may be transmitted using the format of MPEG-2 TS. A plurality of formats may be used for efficient transmission of the file format.

A protocol between a server and a multicast sender may mainly define a protocol for efficient delivery of the file format. Therefore, data of content generated by the server may be delivered using a tunneling protocol. The tunneling protocol may mainly use a real-time transmission protocol such as RTP, and other IP-based tunneling protocols that may be defined in a corresponding network may be used. In this case, an existing protocol may be used without change or the definition of a field may be changed so as to be suitable for a corresponding network. In a multicast sender, a tunneling protocol may be defined at an input end to receive a file transmitted by the server using the tunneling protocol. In this case, since the file format transmitted using the tunneling protocol is data to be transmitted to the multicast receiver in terms of the multicast sender, the tunneling protocol may operate regardless of the format of corresponding data.

A protocol between the multicast sender and the multicast receiver may be mainly defined as a protocol for adaptive streaming. This protocol may be configured as a DASH-based protocol. To this end, a lower layer protocol is based on IP multicast. For a DASH operation, a protocol such as HTTP may be configured together. When a DASH segment is regarded as a file type, a file transmission protocol such as FLUTE may be configured. In addition, TCP/IP may be configured for effective network connection and multicast transmission of the DASH/HTTP protocol.

In the multicast receiver, TCP/IP may be configured to receive a packet stream transmitted through multicast, and HTTP may be configured for a request for a packet stream and a response to received data. A DASH client may be configured when adaptive streaming is performed using DASH in the multicast sender. Since data adaptively streamed using DASH is composed of a file format transmitted by the server, a file format related protocol for identifying a corresponding file format and a media codec for decoding an identified media format may be configured.

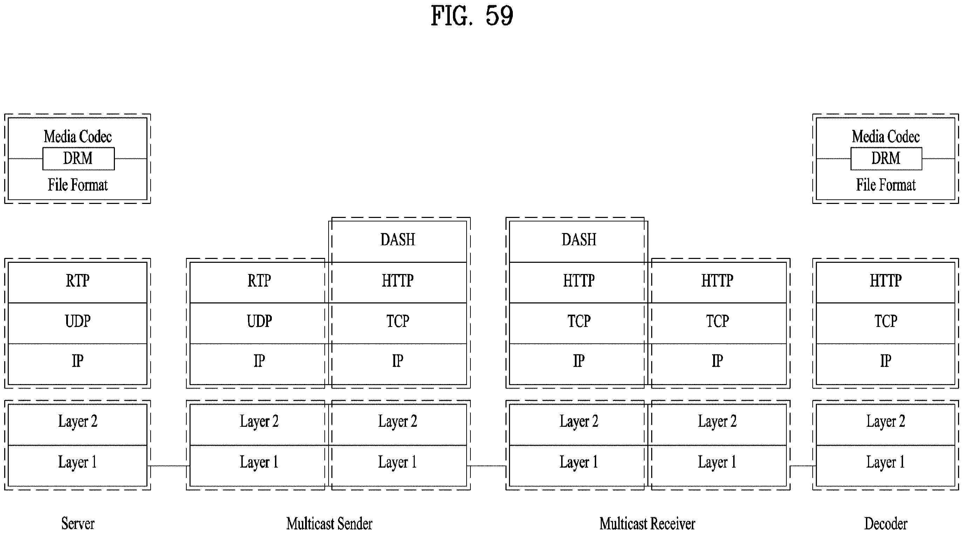

FIG. 59 illustrates media delivery for IP multicasting.

The figure illustrates a specific embodiment of a protocol according to a route through which media content is transmitted, based on the conceptual protocol described above. In this case, a multicast receiver is configured with devices and modules different from a decoder (media player). Therefore, a process in which the multicast receiver transmits a received multicast stream to the decoder device is needed.

In the multicast receiver, TCP/IP may be configured to receive a packet stream transmitted through multicast, and HTTP may be configured for a request for a packet stream and a response to received data. When a multicast sender performs adaptive streaming using DASH, a DASH client may be configured. Data adaptively streamed using DASH may serve as a proxy in the multicast receiver and may be delivered back to the decoder device. Since the number of decoder devices connected to the multicast receiver may be limited, the connection may be based on unicast transmission. Therefore, the multicast receiver may be configured with HTTP and TCP/IP for unicast connection.

In the decoder device, a unicast protocol for receiving data transmitted by the multicast receiver may be configured. Since data transmitted through HTTP unicast to the decoder device is composed of a file format transmitted by a server, a protocol related to a file format capable of identifying the file format and a media codec capable of decoding the identified media format may be configured.

The operation for other protocols is the same as in the above-described embodiment.

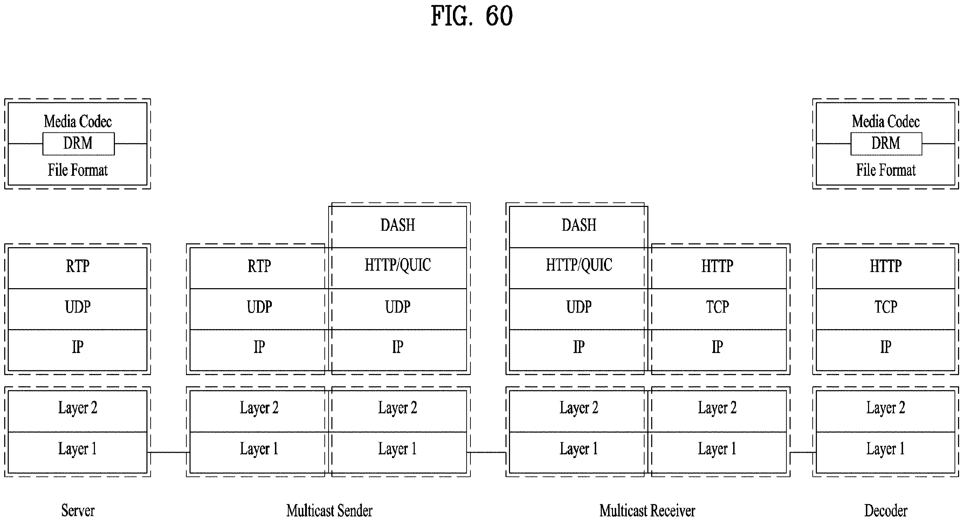

FIG. 60 illustrates media delivery for IP multicasting.

The figure illustrates an embodiment in which a protocol method for transmitting a DASH segment is based on a quick UDP Internet connections (QUIC) protocol in the above-described embodiments. A multicast method using TCP/IP may cause delay in establishing connection and may be inappropriate to immediately transmit streaming data. The QUIC-based protocol is in charge of a process of connection and flow control in QUIC. In addition, QUIC may use HTTP/2, which may improve transmission delay that occurs in existing HTTP, and may immediately transmit streaming data using UDP/IP.

The operation for other protocols is the same as in the above-described embodiment.

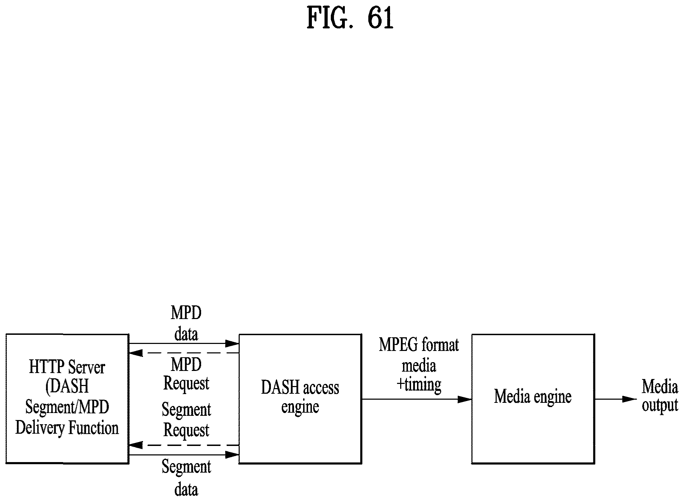

FIG. 61 illustrates a structure and a generation and parsing order of a DASH segment.

According to DASH technology, content of various qualities is broken into predetermined segments of a time unit and stored in a server. If a user device requests media, a broken data unit is transmitted over HTTP. Here, media content with various qualities stored in the server is selectively transmitted in consideration of a flexible HTTP network status, so that the user may receive a seamless adaptive streaming service.

For adaptive playback, media content is broken into segments of an appropriate size and stored in the server. Information about whether to play these segmented files in order of timeline and quality is configured as a separate file and is transmitted to a client. This is called MPD. In the MPD, each URL is assigned to a broken segment, and attributes about when a request should be started or which content is related content are composed as an XML document. Accordingly, a user using DASH for the first time makes a request for an MPD file to the server, recognizes information about a corresponding file stored in the server through a delivered MPD file, and requests a segment file for desired content.

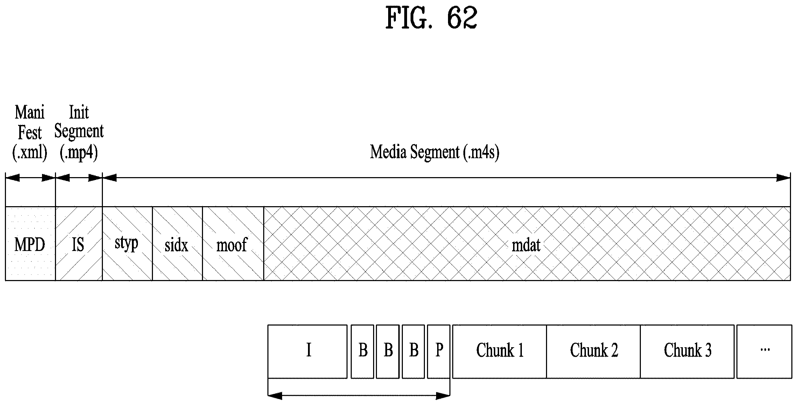

FIG. 62 illustrates the structure of a DASH segment.

FIG. 62 is a diagram illustrating a structure and a generation order of a DASH segment. The DASH segment is a data unit of a transport object that divides content to be transmitted into media segments to enable playback for a predetermined duration. Basically, the DASH segment includes an 'styp' box indicating a segment type and includes an 'sidx' box indicating segment index information. The DASH segment also includes an 'mdat' box including a media stream broken in a fragment unit and includes a 'moof box containing metadata about the media stream. A DASH client requests the media segment through each segment URL starting from a request for transmission of an MPD file in order to request a service. To decode the media segment, an initialization segment file containing initialization information is parsed to initialize a decoder, and media parsing and decoding are performed by receiving the requested segment file.

As illustrated in FIG. 62, elements for media playback may be identified and playback is possible only when a total of 3 files is transmitted. A media encoder encodes 'mdat' for the entire play block (MPD+IS+sidx+moof+mdat) and generates a metadata header (styp+sidx+moof) including encoding information. Next, the media encoder generates an IS.mp4 file, which is decoder initialization information, assigns a URL of a segment to an MPD, and transmits the MPD to a client. A client side (parsing order) receives a file of the MPD, parses the file, and requests a segment according to a network situation.

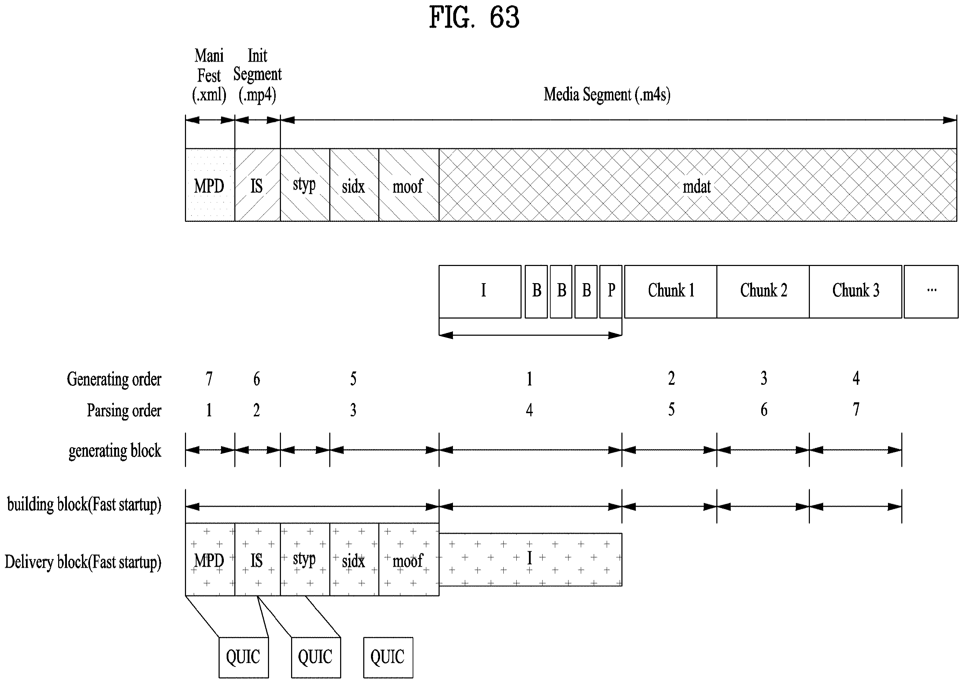

FIG. 63 illustrates a structure and a generation and parsing order of a DASH segment.

When a DASH segment stored in various qualities provides a service of a live type or a service that transmits data by encoding live broadcasting content, since real-time properties of the entire media service framework should be applied, delay may occur in implementation of a seamless service. Particularly, during live broadcasting applying a DASH protocol, delay may occur in a process of encoding and packetizing real-time content and in a process of parsing and decoding real-time content, thereby causing delay at a start time point of a service. In other words, if each file is composed and sent through packetization, a reception time of a packet and a delay time to wait until the entire packet is composed for parsing occur and a buffering time is lengthened from the perspective of a client.

The present disclosure proposes the following method in order to solve the above-mentioned problems.

As illustrated in FIG. 63, it is proposed to compose 'MPD', 'IS', 'sidx', 'moof, and 'I' as one building block and transmit the same in advance. The MPD is transmitted according to a conventional model through a DASH client and unicast and playback is executed by a request for a segment. While a DASH framework is operated, fast startup is executed in a received packet. Frames of the remaining building blocks may be configured in the following way. Only the I frame may be transmitted to reduce reception delay without sending the entire mdat frame covered by an Moof header, and playback starts from the I frame, which is an RAP, to enable fast A/V startup. In the case of a live type, a light MPD is generated and transmitted by designating only a representation/segment that enables fast startup in consideration of a network situation or a network operator without generating all segments of the entire quality. The generated light MPD is received and configures a fast startup building block to immediately start playback. Next, segments of different qualities are received by a proxy, and bitstream switching is performed according to the qualities of the segments. In summary, only a segment to be started up quickly is considered for transmission and reception, and delay may be minimized by checking a segment for fast startup even in the MPD.

The broadcast signal transmission and reception apparatuses according to embodiments of the present disclosure may implement media content delivery for fast A/V startup through a parsing method as illustrated in FIG. 63.

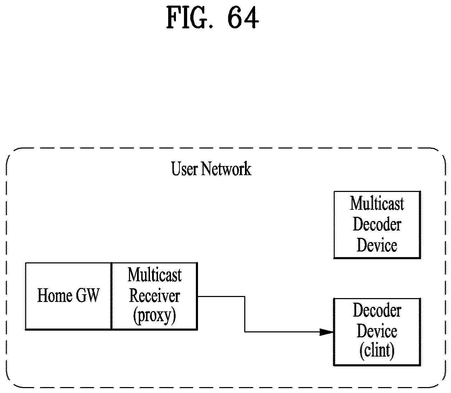

FIG. 64 illustrates a user network for playback of a DASH segment.

When a client requests DASH content stored in a proxy to receive a service, an MPD has no content indicating this fast startup segment mode. Therefore, when accessing a corresponding component, signaling indicating a segment for quick access is needed. An MPD describing DASH content is described below.

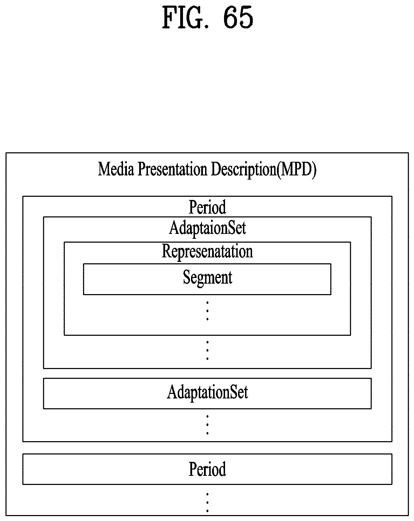

FIG. 65 illustrates a hierarchical structure of an MPD.

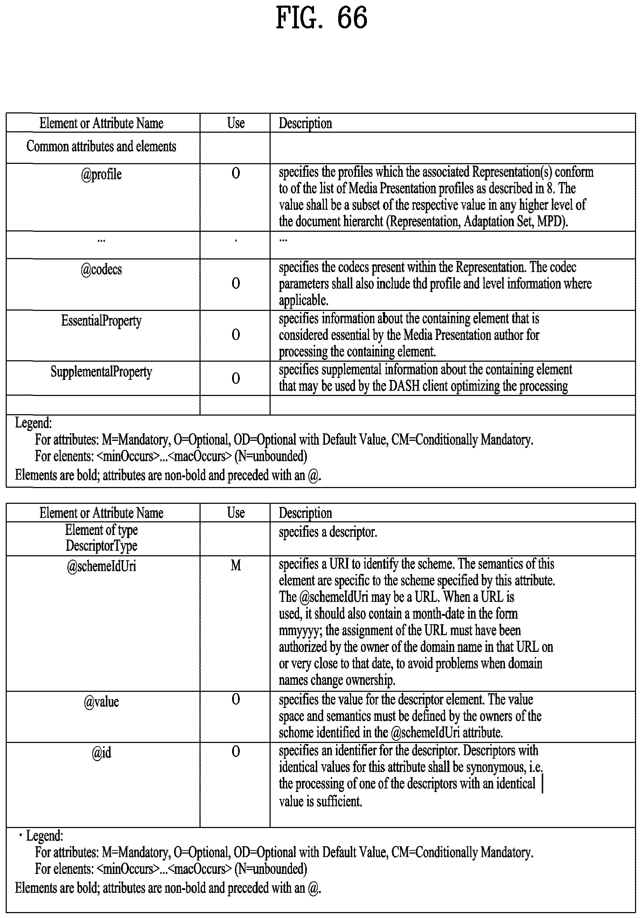

The MPD of FIG. 65 is composed of a hierarchical structure including elements and attributes. In each layer, structural functions and roles of elements and attributes that contain information about media content are described. Video and audio component levels are described from an adaptation set and have one or more representation entries. A representation assigns URL routes of segments and performs bitstream switching. The representation may include a descriptor representing a common attribute and include a descriptor as illustrated in FIG. 66. In common attributes may define elements necessary for a framework of a corresponding representation in a DASH client through a supplemental property descriptor. An element of this descriptor type defines an attribute about which operation should be performed through schemeIdUri and defines a specific code point for a specific operation, including value attributes.

The broadcast signal transmission and reception apparatuses according to embodiments of the present disclosure may implement an extended DASH MPD for a fast startup segment through the MPD structure.

FIG. 66 illustrates a user network for playback of a DASH segment.

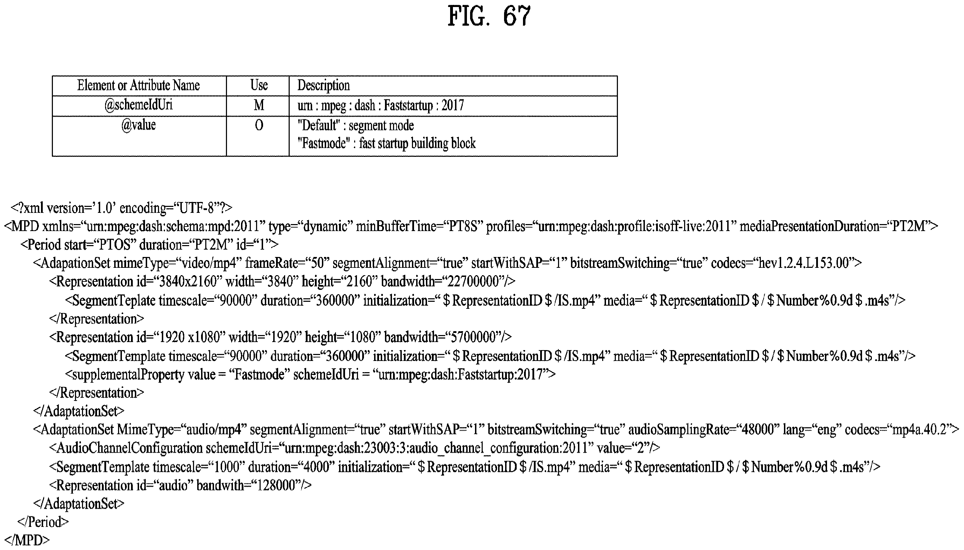

The present disclosure intends to define a method of signaling a representation capable of performing fast startup among representation entries through expansion of a new supplemental property descriptor. A detailed signaling method will now be described with reference to FIG. 67.

FIG. 67 illustrates a signaling method for fast startup.

Referring to a table and syntax of FIG. 67, an MPD includes a schemeIDUri element. The schemeIDUri element represents a URI for a fast startup mode. The MPD includes a value element. The value element represents a segment mode for the fast startup mode.

As illustrated in FIG. 67, the broadcast signal transmission and reception apparatuses according to embodiments of the present disclosure may propose a method of signaling a representation capable of performing fast startup among representation entries through expansion of a new supplemental property descriptor.

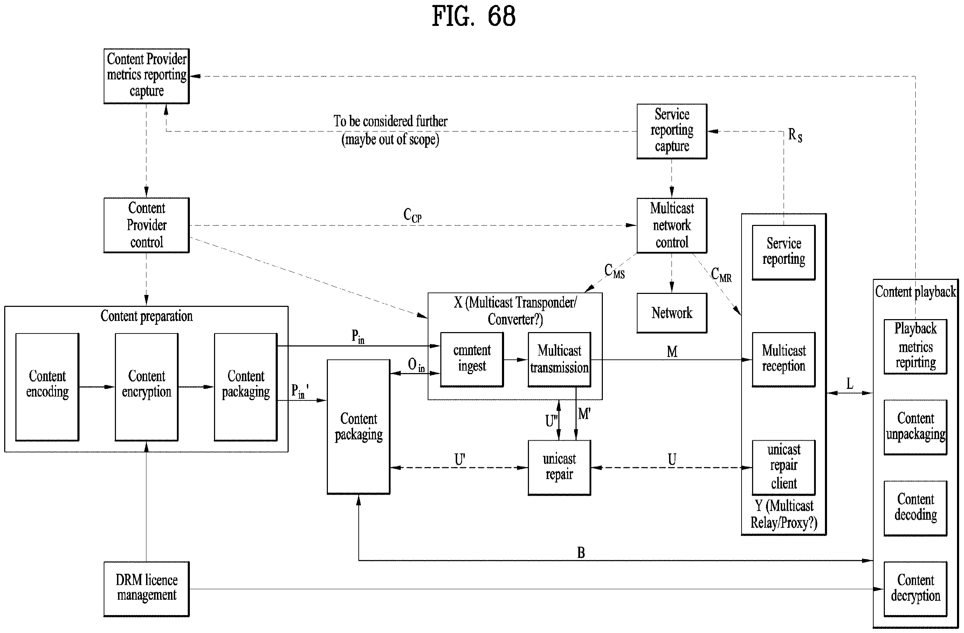

FIG. 68 illustrates a multicast ABR reference architecture model.

Typically, a service provider transmits a manifest after defining media to be transmitted and composing the manifest. After receiving the manifest, a client selects a representation of an appropriate quality according to a DASH model and requests a URL of a segment to receive the media. As described above, due to an issue of simultaneous concentration of unicast traffic and guarantee of bit rate of a best effort network, the client may efficiently receive a service through a multicast scheme based on a proxy server adjacent to the client.

FIG. 68 illustrates an ABR service reception model through multicast as a multicast ABR reference architecture model. The following order illustrates a framework of the above figure. 1) Content playback (client) receives manifest through bootstrap, which is B interface. 2) The client makes a request for media to Y based on information in manifest including information about Y (IP address and hostname). 3) X transmits a segment file to Y so as to be suitable to the information about Y. 4) Y starts a service by comparing a manifest file with an actual segment.

Although a segment is received according to a segment template in the manifest, since a linear service is transmitted in the form of 1-to-many of multicast, it is necessary to select a representation when reception of a corresponding representation is not easy. A representation that is difficult to simultaneously receive with data through multicast may be received through unicast. Since only one URL that is accessible to a segment is defined in a current manifest, it is necessary to define an access method according to a delivery route. The broadcast signal transmission and reception apparatuses according to embodiments of the present disclosure define the delivery route to simultaneously use unicast and multicast networks so that one MPD may receive a rich media service using an alternative network. To solve the above issue, an MPD of MPEG-DASH will be specified. The MPD of FIG. 65 uses a base URL to define a string that is the basis to GET a segment. By manipulating the base URL according to a delivery method, a delivery route that a corresponding representation should request may be known.

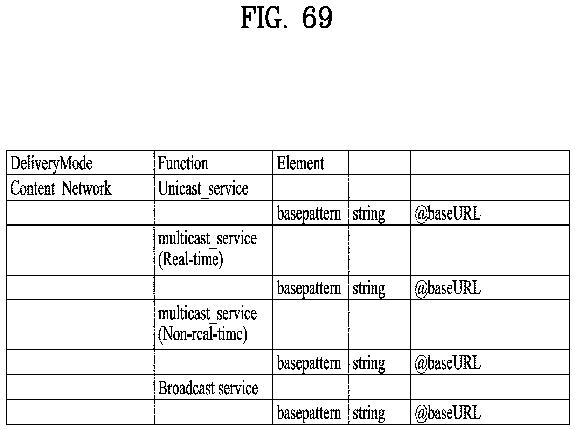

FIG. 69 illustrates definition of a base URL according to a multicast ABR delivery method.

In FIG. 69, a method of defining a base URL (baseURL) according to a delivery method in an MPD is illustrated. Manifest is manipulated through a base pattern as follows and a segment is requested based on a string capable of distinguishing between media segments according to a route.

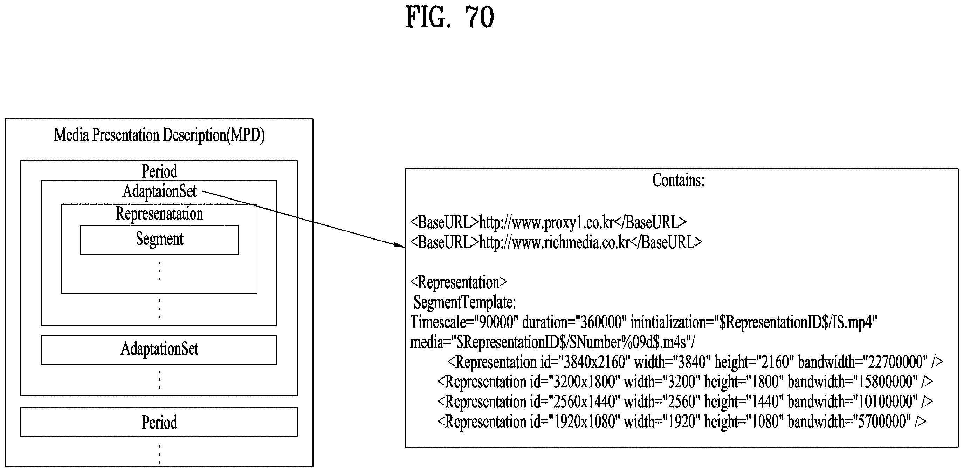

FIG. 70 illustrates a method of configuring a segment access URL.

The broadcast signal transmission and reception apparatuses according to embodiments of the present disclosure define an access address as illustrated in FIG. 70 in order to download a segment. Usually, when multiple base URLs are used, accessible base strings from an alternative perspective are determined. Full strings may be generated through a segment template based on the base strings. A base string pattern is generated based on a configuration of FIG. 70 and an address that is accessible to a segment is configured through the base URLs and the segment template. As an example, as illustrated in FIG. 70, a multicast address of a proxy and unicast of rich media are composed in the form of multiple base URLs, so that access according to a network is possible.

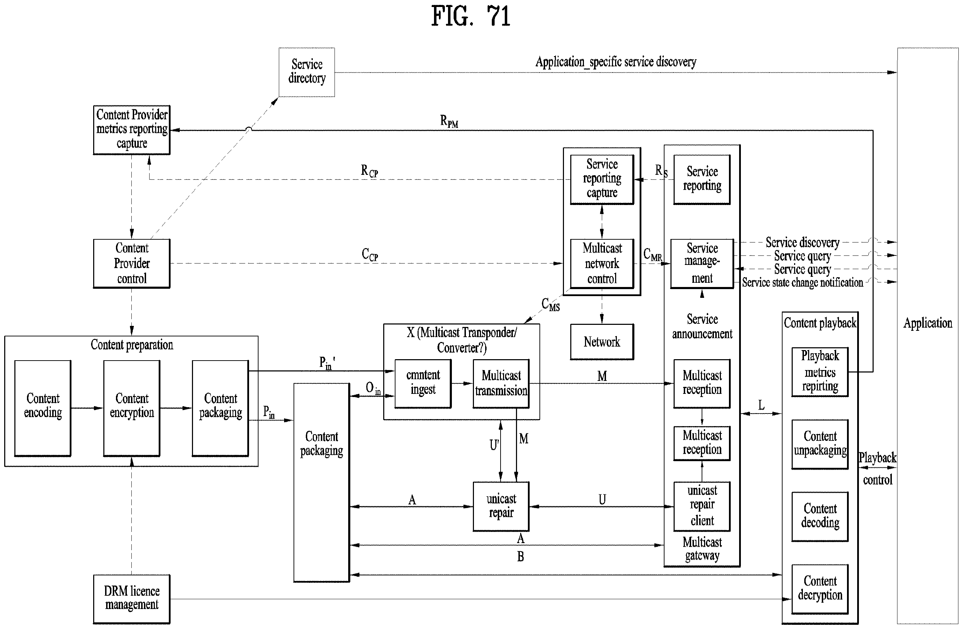

FIG. 71 illustrates an architecture of a multicast ABR service.

A method of controlling a delivery method for a multicast ABR service will now be described.

When an IP-based media service is provided as illustrated in FIG. 68, a multicast service capable of distributing packet traffic, rather than a service based only on unicast, may also be simultaneously provided. In this case, a method capable of identifying a delivery method in a manifest file for providing an ABR streaming service has been proposed in FIG. 68. A method compatible with a conventional ABR service is provided by defining the delivery method through a base URL without changing an existing manifest structure.

While a method of distinguishing between base URL strings in this scenario-based MPD has been proposed, a message for delivering constraints of the strings in advance needs to be defined. If a string of a multicast route and a string of a unicast route are delivered in advance to a multicast gateway and a server and the MPD is delivered at the start of a service, operation of a Y function may be adaptively processed through routes of the strings. For example, when a route of a multicast segment URL expires or is not in an available state, a process in which a content playback module requests a route in the form of round the side and receives a new unicast URL is required. This process may cause a service blackout issue during a live service and cause increase in latency. Therefore, an adaptive streaming service may be consumed by defining an integrated delivery method in the MPD. In addition, since different parsing processes and different buffer management processes considering capacity are performed because a multicast protocol is different from a unicast protocol during a live service, it may be important to distinguish between delivery routes.

When media segment loss occurs in a tunnel or due to traffic issues, data may be delivered using a multicast scheme through an M' interface so that the media segment may be repaired, and a unicast repair service module may receive the data and receive the lost media segment in the form of a unicast request together with Y. In this case, since Y should be received and processed through a unicast route in a received MPD, it is necessary to distinguish Y from existing multicast segment information.

In order to distinguish between representations to be received during a multicast initialization or update process, a multicast network controller defines unique and distinguished URL patterns of the multicast gateway and server and defines a representation in an MPD according to a corresponding pattern.

In order to distinguish between routes, distinguish between delivery methods according to strings, and recognize a string defined in a manifest file, it is necessary to transmit a string to the multicast gateway or the multicast server before a media segment is transmitted. This string may be included in a session description protocol (SDP) used in 3GPP, an STP of a DVB IPTV, or periodic configuration information of the multicast network controller or a third party and then transmitted. First, in FIG. 71, the multicast network controller may transmit a service query or message for service acquisition and initialization to the multicast gateway and server. This module may control the operation in the multicast gateway by transmitting the string constraints defined in FIG. 68.

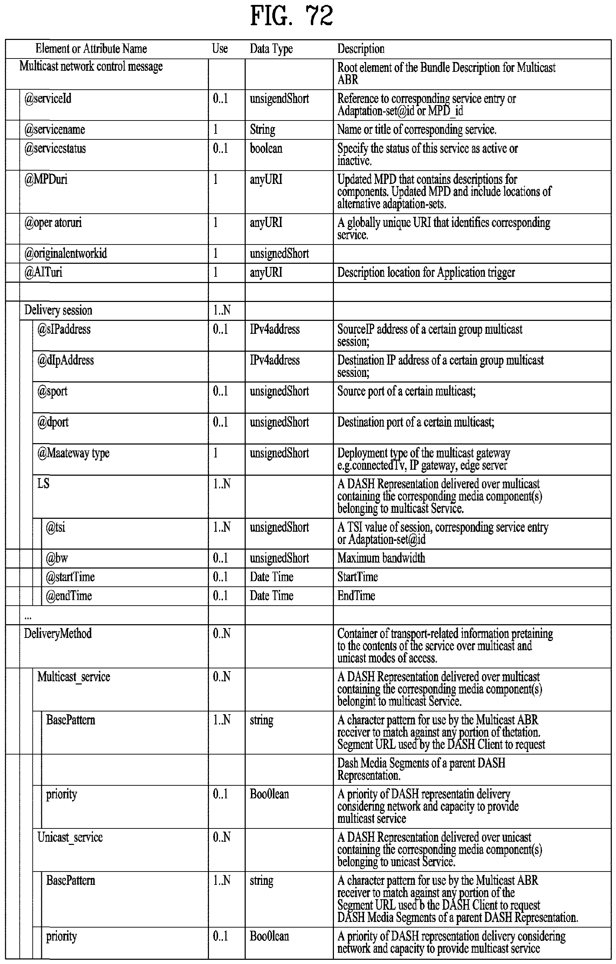

FIG. 72 illustrates a multicast ABR service control message.

C_{MR} and C_{MS} interfaces may transmit a message for controlling a media service transmitted by a multicast server. In FIG. 72, information that a multicast gateway or the multicast server should provide as a multicast network control message capable of being transmitted through C_{MR} or C_{MS} is defined. The message may be in the format of RESTful HTTP(S). A control message is not included within a specific session in an M interface that transmits multicast media, and the following access information is required to control a multicast flow in an external ISP management network or in a multicast service controller designated by a network operator. Access is possible through an IP or a port of a corresponding session and access to a string of a segment URL defined in a media representation is possible through component/adaptation ID information or service entry ID information in a transmitted manifest. After access, a route through which a media segment service may be provided may be known by matching a base pattern for distinguishing between multicast and unicast services with a base URL in a manifest file. In addition, a delivery method may be defined to implement an appropriate receiver operation and a service may be immediately changed without rounding the site. Basically, priority information, which is optional, is given to selection of a route suitable for a current network environment. However, when the priority information is provided for a specific purpose of an SP, a seamless service may be implemented by defining priority of a multicast/unicast route considering media segment capacity in a current server and the multicast gateway. When a lost packet needs to be received in unicast, the lost packet that matches a current playout time by being aligned with a multicast media segment may be requested. Each field is described below.

@serviceld represents a service corresponding to a service entry or adaptation set of an ID or an MPD ID.

@servicename represents the name or title of a corresponding service.

@servicestatus represents the status of an active or inactive service.

@MPDUri represents an updated MPD including a description for components. The updated MPD may include the location of an alternative adaptation set.

@operatoruri represents a globally unique URI for identifying a corresponding service.

@originalnetworkid represents ID information of an original network.

@AITuri represents the location of a description for triggering an application.

@SIPaddress represents a source IP address of a group multicast session.

@dIpAddress represents a destination IP address of a group multicast session.

@sport represents a multicast source port.

@dport represents a multicast destination port.

@Mgateway type represents a deployment type of a multicast gateway, such as a connected TV, an IP gateway, or an edge server.

LS represents a DASH representation transmitted in multicast including corresponding media component(s) belonging to a multicast service.

@tsi represents a session TSI value of a corresponding service entry or adaptation set.

@bw represents a maximum bandwidth value.

@startTime represents a start time.

@endTime represents an end time.

DeliverMethod represents a container of transport-related information belonging to content of a multicast and unicast service of access.

Multicast_service represents a DASH representation delivered in multicast, including corresponding media component(s) belonging to a multicast service.

BasePattern represents a characteristic pattern to be used by a multicast ABR receiver to match a portion of a segment URL used by a DASH client in order to request a DASH media segment of a parent DASH representation.

Priority represents a priority of DASH representation delivery considering a network and capacity for providing a multicast service.

Unicast_service represents a DASH representation delivered in unicast, including corresponding media component(s) belonging to a unicast service.

BastPattern represents a characteristic pattern to be used by a multicast ABR receiver to match a portion of a segment URL used by a DASH client in order to request a parent DASH representation.

Priority represents a priority of DASH representation delivery considering a network and capacity for providing a multicast service.

Multicast/unicast dynamic allocation is described below.

According to the multicast ABR reference model of FIG. 71, a multicast service is bootstrapped through B, and a DASH MPD is obtained through B or M. The received MPD basically defines segment information capable of receiving multicast, but attributes for obtaining additional control information in a use case below are required. A sequential description is given below.

Step 1, Alternative unicast data acquisition: During multicast reception, subscription errors may occur or a situation in which provision of a seamless service is difficult due to an increase in traffic may occur. It is necessary to secure a dynamic route of a multicast/unicast route.

Step 2, Additional service: In the middle of a multicast service, an additional service may be requested by a user. For example, if only Korean audio is defined in a multicast MPD, a new component including an English representation may be added.

Step 3, Advertisement insertion: If a new advertisement is updated or a component needs to be updated in the middle of a multicast service, new information needs to be updated.

Step 4, Alternative multicast gateway change: An MPD of a new multicast gateway may be received when a new address needs to be received due to replacement of the currently receiving multicast gateway or change of an access location.

Step 5, High-definition content provision: An 8k service may be provided through UHD/HD + residual data by utilizing multicast/unicast bandwidth.

FIG. 72 illustrates a message capable of being delivered to a multicast gateway at a network level for the use case.

@MPDuri: A multicast gateway defines a URI that may receive an updated MPD from previously received MPD.

@operatoruri: represents a unique ID of an operator providing a service.

@AITuri: represents the location of a description for triggering an additional application service in an application in progress or in a linear channel.

@Mgateway type: represents a deployment type of a multicast gateway, such as a connected TV, an IP gateway, an edge server, etc.

Service id, Operatoruri, and originalnetworkID serve as unique identifiers of services. Additionally, TSI is a value aligned with an adaptation-set in an MPD to enable component signaling in a service.

The full names of the aforementioned abbreviations are as follows. AAC (Advanced Audio Coding), ABR (Adaptive Bit Rate), CDN (Content Delivery (Distribution) Network), CMAF (Common Media Application Format), DASH (Dynamic Adaptive Streaming over HTTP), HTTP (HyperText Transfer Protocol), IGMP (Internet Group Management Protocol), IP(Internet Protocol), ISOBMFF (ISO Base Media File Format), MPEG (Moving Picture Experts Group), OTT (Over The Top), QUIC (Quick UDP Internet Connection), RTCP (RTP Control Protocol), RTP (Real-time Transport Protocol), TCP (Transmission Control Protocol), and UDP (User Datagram Protocol).

The broadcast signal transmission and reception apparatuses according to embodiments of the present disclosure use the above-described protocol for adaptive media streaming. The broadcast signal transmission and reception apparatuses according to embodiments of the present disclosure may shorten time consumed for initialization and A/V startup during transmission of file-based multicast content in a real-time IP multicast/broadcast environment and efficiently control a network during transmission of file-based content in a linear IP adaptive multicast/broadcast environment. Furthermore, control information for these effects has been described above.

The broadcast signal transmission and reception apparatuses according to embodiments of the present disclosure propose a network architecture for IP-based multicast transmission and reception, a structure of a protocol for IP-based multicast transmission and reception, file-based multimedia file segmentation generation and transmission boundary definition in a real-time IP multicast/broadcast environment, a delivery frame structure for fast startup in the real-time IP multicast/broadcast environment, a version management method of multicast control information, necessary constraints of an MPD and delivery route distinguishment during dynamic multicast/unicast allocation, and a service initialization method during change of a deployment mode of a multicast gateway or change of the location of the multicast gateway.

The broadcast signal transmission and reception apparatuses according to embodiments of the present disclosure are characterized in that a DASH MPD for fast startup is expanded in a real-time IP multicast/broadcast environment and multicast control information for a multicast/unicast dynamic allocation scenario is expanded.

The broadcast signal transmission and reception apparatuses according to embodiments of the present disclosure effectively enable multicast transmission between devices belonging to a traditional broadcast network, Internet, or a home network. By converting existing unicast transmission to multicast, network load may be reduced, and delay of a DASH live segment request according to a network situation may be solved during a linear service and real-time live encoding. In addition, a quick A/V startup method may be provided in a real-time push mode structure.

The broadcast signal transmission and reception apparatuses according to embodiments of the present disclosure solve a problem of IP multicast real-time broadcasting reflecting an existing DASH scenario, that is, transmission delay occurring when transmission is performed after all movie fragments are generated. For fast startup, a structure is provided in which a frame with an RAP and initialization information are sent in advance after being configured as a delivery boundary.

The broadcast signal transmission and reception apparatuses according to embodiments of the present disclosure enable content generation for fast startup by first transmitting a media segment that has a low picture quality or requires a less reception time and a less decoding time. For fast startup, information that identifies a startup object available from a delivery layer to an application layer is added to shorten time consumed from a request to A/V startup. In addition, buffering and reception delay required to consume UHD content are reduced and a service is seamlessly provided.

The broadcast signal transmission and reception apparatuses according to embodiments of the present disclosure may increase bandwidth flexibility and provide a seamless service to users through dynamic multicast/unicast allocation.

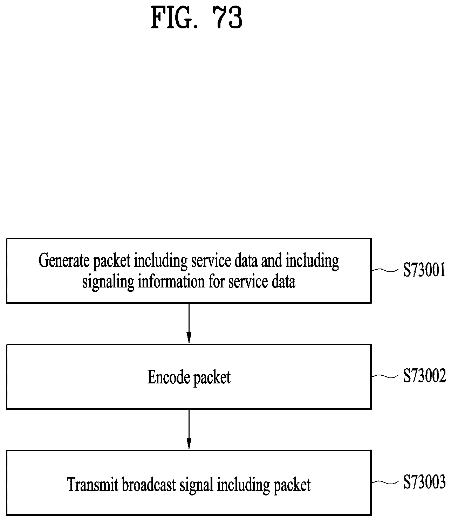

FIG. 73 illustrates a broadcast signal transmission method according to embodiments of the present disclosure.

The broadcast signal transmission method according to embodiments of the present disclosure includes generating a packet including service data and including signaling information for the service data (S73001), encoding the packet (S73002), and transmitting a broadcast signal including the packet (S73003). Each step of FIG. 73 may be processed according to the elements of the broadcast signal transmission apparatus of FIG. 1.

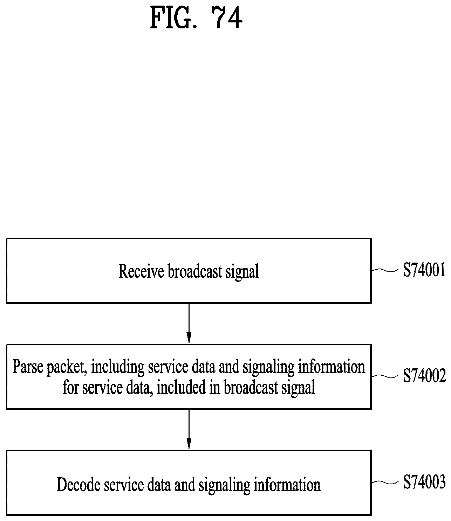

FIG. 74 illustrates a broadcast signal reception method according to embodiments of the present disclosure.

The broadcast signal reception method according to embodiments of the present disclosure includes receiving a broadcast signal (S74001), parsing a packet included in the broadcast signal, wherein the packet includes service data and signaling information for the service data (S74002), and decoding the service data and the signaling information (S74003). Each step of FIG. 74 is processed by the broadcast signal reception apparatus of FIG. 2.

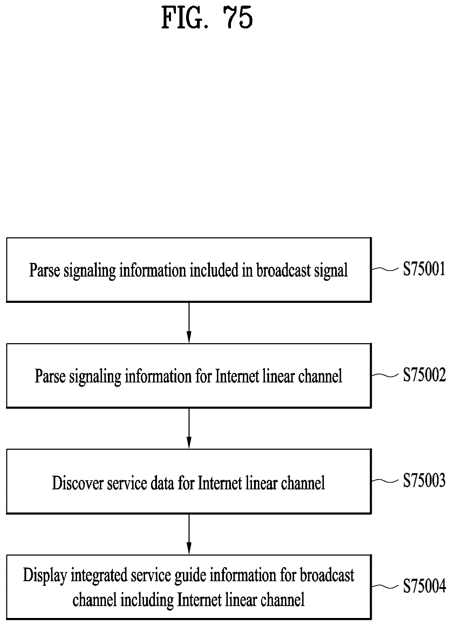

FIG. 75 illustrates a process in which a broadcast signal reception apparatus according to embodiments of the present disclosure discovers a service and displays a service guide.

The broadcast signal reception apparatus according to embodiments of the present disclosure parses signaling information for a network or a broadcast channel through the signaling information parsing process illustrated in FIG. 9 (S75001), parses signaling information for an Internet linear channel based on the signaling information illustrated in FIGS. 10 to 16 (S75002), and discovers service data for the Internet linear channel (S75003). Next, the broadcast signal reception apparatus according to embodiments of the present disclosure displays integrated service guide information for a broadcast channel including the Internet linear channel as illustrated in FIGS. 41 and 42 based on the signaling information (S75004). Each step of FIG. 75 may be processed by the broadcast signal reception apparatus illustrated in FIGS. 2 and 40.

In this specification, the modules or units may be processors that execute consecutive processes stored in a memory (or a storage unit). The steps described in the above-described embodiments may be performed by hardware, software, and/or processors. The modules/blocks/units described in the above-described embodiments may operate as hardware, software, and/or processors. The methods proposed by the present disclosure may be executed as code. This code may be written in a processor-readable storage medium and thus may be read by a processor provided by an apparatus.

Although a description has been given with reference to each of the accompanying drawings for clarity, it is possible to design new embodiments by integrating the embodiments shown in the accompanying drawings with each other. In addition, if a recording medium readable by a computer, in which programs for executing the embodiments mentioned in the foregoing description are recorded, is designed, if necessary, by those skilled in the art, this may be within the scope of the present disclosure.

The apparatuses and methods according to the present disclosure are not limited by the configurations and methods of the embodiments given in the foregoing description. In addition, the embodiments given in the foregoing description may be configured in a manner of being selectively combined with one another entirely or in part to enable various modifications.

The methods proposed by the present disclosure may be implemented as processor-readable code in a processor-readable recording medium provided to a network device. The processor-readable medium may include all kinds of recording devices capable of storing data readable by a processor. The processor-readable medium may include one of a ROM, a RAM, a CD-ROM, a magnetic tape, a floppy disk, an optical data storage device, and the like and also include carrier-wave type implementation such as transmission over the Internet. The processor-readable recording medium may be distributed to a computer system connected via a network and processor-readable code may be stored and executed in a distributed manner.

Although the exemplary embodiments of the present disclosure have been disclosed for illustrative purposes, those skilled in the art will appreciate that various modifications, additions and substitutions are possible, without departing from the scope and spirit of the disclosure as disclosed in the accompanying claims. Such modifications should not be understood individually from the technical spirit or prospect of the present disclosure.

Both apparatus and method disclosures are mentioned in this specification and descriptions of both of the apparatus and method disclosures may be complementarily applied to each other as needed.

It will be appreciated by those skilled in the art that various modifications and variations can be made in the present disclosure without departing from the spirit or scope of the present disclosure. Accordingly, the present disclosure is intended to include the modifications and variations of the present disclosure within the appended claims and equivalents thereof.

Both an apparatus and a method are mentioned in this specification and descriptions of both the apparatus and the method may be complementarily applied to each other.

### Mode for Disclosure

Various embodiments have been described in the best mode for carrying out the disclosure.

### Industrial Applicability

The present disclosure is available in broadcast signal provision fields including a sequence of data.

It will be apparent to those skilled in the art that various modifications and variations may be made in the present disclosure without departing from the spirit or scope of the disclosure. Thus, it is intended that the present disclosure cover the modifications and variations of this disclosure provided they come within the scope of the appended claims and their equivalents.

## Claims

1. A broadcast signal transmission method, comprising:
generating a packet including service data and including signaling information for the service data;
encoding the packet; and
transmitting a broadcast signal including the packet.

2. The broadcast signal transmission method of claim 1,
wherein the signaling information includes network information about the broadcast signal,
wherein the network information includes first identification information about a main network or other networks, and
wherein the network information includes second identification information about an Internet linear channel when the first identification information indicates the other networks.

3. The broadcast signal transmission method of claim 1,
wherein the signaling information is transmitted based on an Internet linear channel, includes service discovery information for acquiring service data for the Internet linear channel, and includes uniform resource identifier (URI) information for identifying the service data for the Internet linear channel.

4. A broadcast signal transmission apparatus, comprising:
a generator configured to generate a packet including service data and including signaling information for the service data;
an encoder configured to encode the packet; and
a transmitter configured to transmit a broadcast signal including the packet.

5. A broadcast signal transmission apparatus of claim 4,
wherein the signaling information includes network information about the broadcast signal,
wherein the network information includes first identification information about a main network or other networks, and
wherein the network information includes second identification information about an Internet linear channel when the first identification information indicates the other networks.

6. A broadcast signal transmission apparatus of claim 4,
wherein the signaling information is transmitted based on an Internet linear channel, includes service discovery information for acquiring service data for the Internet linear channel, and includes uniform resource identifier (URI) information for identifying the service data for the Internet linear channel.

7. A broadcast signal reception method, comprising:
receiving a broadcast signal;
parsing a packet included in the broadcast signal, wherein the packet includes service data and signaling information for the service data; and
decoding the service data and the signaling information.

8. A broadcast signal reception method of claim 7,
wherein the signaling information includes network information about the broadcast signal,
wherein the network information includes first identification information about a main network or other networks, and
wherein the network information includes second identification information about an Internet linear channel when the first identification information indicates the other networks.

9. A broadcast signal reception method of claim 7,
wherein the signaling information is transmitted based on an Internet linear channel, includes service discovery information for acquiring service data for the Internet linear channel, and includes uniform resource identifier (URI) information for identifying the service data for the Internet linear channel.

10. A broadcast signal reception apparatus, comprising:
a tuner configured to receive a broadcast signal;
a parser configured to parse a packet included in the broadcast signal, wherein the packet includes service data and signaling information for the service data; and
a decoder configured to decode the service data and the signaling information.

11. The broadcast signal reception apparatus of claim 10,
wherein the signaling information includes network information about the broadcast signal,
wherein the network information includes first identification information about a main network or other networks, and
wherein the network information includes second identification information about an Internet linear channel when the first identification information indicates the other networks.

12. The broadcast signal reception apparatus of claim 10,
wherein the signaling information is transmitted based on an Internet linear channel, includes service discovery information for acquiring service data for the Internet linear channel, and includes uniform resource identifier (URI) information for identifying the service data for the Internet linear channel.
